(19) Europäisches Patentamt
European Patent Office
Office européen des brevets

(11) **EP 2 975 303 A1**

(12) **EUROPEAN PATENT APPLICATION**
published in accordance with Art. 153(4) EPC

(43) Date of publication:
**20.01.2016 Bulletin 2016/03**

(51) Int Cl.:
*F16H 61/10* (2006.01)   *F16H 3/66* (2006.01)
*F16H 3/72* (2006.01)

(21) Application number: **14870740.9**

(22) Date of filing: **25.11.2014**

(86) International application number:
**PCT/JP2014/081111**

(87) International publication number:
**WO 2015/093242 (25.06.2015 Gazette 2015/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.12.2013   JP 2013259383**

(71) Applicant: **Komatsu Ltd.
Minato-ku
Tokyo 107-8414 (JP)**

(72) Inventors:
• **MONDEN, Hiroshi
Hiratsuka-shi
Kanagawa 254-8567 (JP)**
• **NOHARA, Tatsuro
Rolling Meadows, Illinois 60008 (US)**
• **MIYAZAKI, Shogo
Hiratsuka-shi
Kanagawa 254-8567 (JP)**

(74) Representative: **Flügel Preissner Kastel Schober
Patentanwälte PartG mbB
Nymphenburger Strasse 20a
80335 München (DE)**

(54) **WORK VEHICLE AND METHOD FOR CONTROLLING WORK VEHICLE**

(57)   A power transmission includes first and second clutches for switching a transmission path for a driving force. A work vehicle includes a clutch controlling unit. As long as a speed ratio parameter transitions within a predetermined first range including a mode switching threshold after the speed ratio parameter reaches the mode switching threshold and then the transmission path is switched from a first mode to a second mode, the clutch controlling unit is configured to output a clutch command signal for disengaging the first clutch and output a clutch command signal for engaging the second clutch so as to keep setting the transmission path in the second mode even when the speed ratio parameter again reaches the mode switching threshold.

FIG. 10

EP 2 975 303 A1

**Description**

TECHNICAL FIELD

The present invention relates to a work vehicle and a method of controlling the work vehicle.

BACKGROUND ART

Among work vehicles such as a wheel loader, a type of work vehicles equipped with a power transmission including a torque converter and a multistage gearbox (hereinafter referred to as "a torque converter type transmission") has been widely known. On the other hand, in recent years, HMTs (hydro-mechanical transmissions) and EMTs (electro-mechanical transmissions) have been known as power transmissions that supersede the torque converter type transmissions.

As disclosed in PTL 1, the HMTs include a gear mechanism and a motor connected to a rotary element of the gear mechanism. The HMTs are configured to convert part of a driving force from an engine into a hydraulic pressure and transmit the hydraulic pressure to a travelling apparatus, and is also configured to mechanically transmit the remainder of the driving force to the travelling apparatus.

To enable continuously variable speed change, the HMTs include, for instance, a planetary gear mechanism and a hydraulic motor. Among three elements composed of a sun gear, a carrier and a ring gear in the planetary gear mechanism, a first element is coupled to an input shaft, and a second element is coupled to an output shaft. Additionally, a third element is coupled to a hydraulic motor. The hydraulic motor is configured to function as either a motor or a pump in accordance with a travelling condition of the work vehicle. The HMTs are configured to continuously variably change the rotational speed of the output shaft by changing the rotational speed of the hydraulic motor.

On the other hand, the EMTs use an electric motor instead of the hydraulic motor used in the HMTs. The electric motor is configured to function as either a motor or an electric generator in accordance with a travelling condition of the work vehicle. Similarly to the HMTs, the EMTs are configured to continuously variably change the rotational speed of the output shaft by changing the rotational speed of the electric motor.

CITATION LIST

PATENT LITERATURE

PTL 1: Japan Laid-open Patent Application Publication No. 2006-329244

SUMMARY OF INVENTION

Technical Problems

Some of HMTs or EMTs are capable of switching a power transmission path between two modes. It has been known that such a type of HMTs or EMTs configured to switch a plurality of modes can perform a wide range of speed ratio with a relatively small power transmission. Among the two modes, one is a mode for low speed travelling (hereinafter referred to as "a low speed (Lo) mode"), and the other is a mode for high speed travelling (hereinafter referred to as "a high speed (Hi) mode"). In general, mode switching is performed by engaging or disengaging clutches for establishing connection to the respective settings of transmission path. For example, the modes are switched in accordance with the speed ratio of the power transmission. The Lo mode is set when the speed ratio is less than or equal to a predetermined mode switching threshold. The Hi mode is set when the speed ratio is greater than the mode switching threshold.

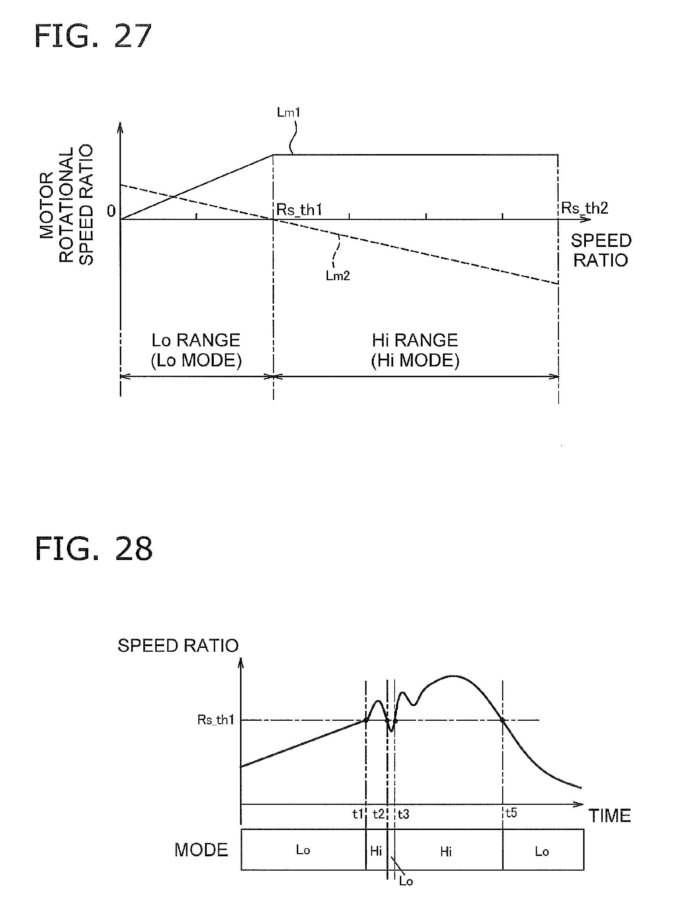

However, while travelling is performed in a condition that the speed ratio of the work vehicle is kept at around the mode switching threshold, frequent mode switching may inevitably occur due to fluctuation of the vehicle speed caused by the influence of road surface and so forth. FIG. 28 shows variation in mode of the power transmission path in such a case.

In an example of FIG. 28, until time t1, the speed ratio is less than or equal to a mode switching threshold Rs_th1, and hence, the Lo mode is set. In a period from time t1 to time t2, the speed ratio is greater than or equal to the mode switching threshold Rs_th1, and hence, the Hi mode is set. In a period from time t2 to time t3, the speed ratio is less than or equal to the mode switching threshold Rs_th1, and hence, the Lo mode is set. In a period from time t3 to time t6, the speed ratio is greater than or equal to the mode switching threshold Rs_th1, and hence, the Hi mode is set. At or after time t5, the speed ratio is less than or equal to the mode switching threshold Rs_th1, and hence, the Lo mode is set.

Thus, when the speed ratio of the work vehicle varies around the mode switching threshold, the modes are switched in a short period of time. Hence, when the modes are frequently switched in a short period of time, i.e. so called in a state of hunting, passing torque that passes through the power transmission fluctuates and clutch relative rotational speed acutely reduces to 0 in clutch engagement, which induces vibration of the vehicle body. As a result, an operator increasingly feels uncomfortable.

It is an object of the present invention to provide a work vehicle having a power transmission of an HMT or EMT type and a plurality of settings of transmission path for a driving force and which inhibits hunting that is frequently switching between the settings of transmission path, and to provide a method of controlling the work vehicle.

Solution to Problems

A work vehicle according to a first aspect of the present invention includes an engine, a hydraulic pump, a work implement, a travelling apparatus, a power transmission and a controller. The hydraulic pump is configured to be driven by the engine. The work implement is configured to be driven by a hydraulic oil discharged from the hydraulic pump. The travelling apparatus is configured to be driven by the engine. The power transmission is configured to transmit a driving force from the engine to the travelling apparatus. The controller is configured to control the power transmission.

The power transmission includes an input shaft, an output shaft, a gear mechanism, a motor, a first clutch and a second clutch. The gear mechanism has a planetary gear mechanism and is configured to transmit a rotation of the input shaft to the output shaft. The motor is connected to a rotary element of the planetary gear mechanism. The first clutch is configured to switch a transmission path for the driving force in the power transmission into a first mode. The second clutch is configured to switch the transmission path for the driving force in the power transmission into a second mode. When the transmission path is set in the first mode, the first clutch is configured to be engaged and the second clutch is configured to be disengaged. When the transmission path is set in the second mode, the second clutch is configured to be engaged and the first clutch is configured to be disengaged.

In the power transmission, a rotational speed of the motor varies, thereby a speed ratio of the output shaft to the input shaft varies. When a speed ratio parameter corresponding to the speed ratio is a predetermined mode switching threshold, a rotational speed ratio of the motor to the input shaft in the first mode and a rotational speed ratio of the motor to the input shaft in the second mode becomes equal.

The controller includes a clutch controlling unit. As long as the speed ratio parameter transitions within a predetermined first range including the mode switching threshold after the speed ratio parameter reaches the mode switching threshold and then the transmission path is switched from the first mode to the second mode, the clutch controlling unit is configured to output a clutch command signal for disengaging the first clutch and output a clutch command signal for engaging the second clutch so as to keep setting the transmission path in the second mode even when the speed ratio parameter again reaches the mode switching threshold.

A magnitude of a second range between the mode switching threshold and a first upper limit that is an upper limit of the first range may be different from a magnitude of a third range between the mode switching threshold and a first lower limit that is a lower limit of the first range.

The controller may include a first timer and a counter. The first timer may be configured to measure a first time length elapsed after the transmission path is switched from a given mode to another mode among a plurality of modes including the first mode and the second mode. The counter may be configured to count a number of switching that the transmission path is switched from the given mode to the another mode before the first time length reaches a predetermined first threshold. The clutch controlling unit may be configured to extend the first range from a predetermined initial range thereof when the frequency exceeds a predetermined second threshold.

When the transmission path is switched from the given mode to the another mode after the first time length becomes greater than or equal to the first threshold, the counter may be configured to restore the number of switches to an initial value thereof. Moreover, the clutch controlling unit may be configured to restore the first range to the initial range thereof.

One of a fourth range and a fifth range may be defined as an admissible range, whereas the other of the fourth range and the fifth range may be defined as an inadmissible range, the fourth range being a range in which the speed ratio parameter is greater than or equal to the mode switching threshold, and the fifth range being a range in which the speed ratio parameter is less than or equal to the mode switching threshold. Where the fifth range is defined as the admissible range, the magnitude of the third range may be larger than a magnitude of the second range. Moreover, where the fourth range is defined as the admissible range, the magnitude of the second range may be larger than the magnitude of the third range.

In the first mode, one of the fourth and fifth ranges may be defined as the admissible range, whereas the other of the fourth and fifth ranges may be defined as the inadmissible range. On the other hand, in the second mode, the other of the fourth and fifth ranges may be defined as the admissible range, whereas the one of the fourth and fifth ranges may be defined as the inadmissible range.

In case the fifth range is defined as the admissible range, the clutch controlling unit may be configured to output a clutch command signal for disengaging the second clutch and output a clutch command signal for engaging the first clutch so as to switch the transmission path into the first mode when the speed ratio parameter becomes lower than the third range after the transmission path is switched from the first mode to the second mode and then the speed ratio parameter again reaches the mode switching threshold after the speed ratio parameter becomes lower than the third range. Additionally, the clutch controlling unit may be configured to output the clutch command signal for engaging the first clutch so as to make the speed ratio parameter reach the mode switching threshold when the speed ratio parameter becomes higher than the second range after the transmission path is switched from the first mode to the second mode. Moreover, the clutch controlling unit may be configured to output the clutch command signal for disengaging the second clutch so as to switch the transmission path into the first mode when the speed ratio parameter reaches the mode switching threshold.

In case the fourth range is defined as the admissible range, the clutch controlling unit may be configured to output a clutch command signal for disengaging the second clutch and output a clutch command signal for engaging the first clutch so as to switch the transmission path into the first mode when the speed ratio parameter becomes higher than the second range after the transmission path is switched from the first mode to the second mode and then the speed ratio parameter again reaches the mode switching threshold after the speed ratio parameter becomes higher than the second range. Additionally, the clutch controlling unit may be configured to output the clutch command signal for engaging the first clutch so as to make the speed ratio parameter reach the mode switching threshold when the speed ratio parameter becomes lower than the third range after the transmission path is switched from the first mode to the second mode. Moreover, the clutch controlling unit may be configured to output the clutch command signal for disengaging the second clutch so as to switch the transmission path into the first mode when the speed ratio parameter reaches the mode switching threshold.

The controller may further include a second timer. The second timer is configured to measure a second time length elapsed after the transmission path is switched from the first mode to the second mode. The clutch controlling unit may be configured to output the clutch command signal for disengaging the first clutch and output the clutch command signal for engaging the second clutch so as to keep setting the transmission path in the second mode as long as the speed ratio parameter transitions within a predetermined sixth range including the first range when the second time length is shorter than a switching prohibition period after the transmission path is switched from the first mode to the second mode.

In case the fifth range is defined as the admissible range, the sixth range may be set as a range of lower than a sixth upper limit that is an upper limit of the sixth range. In case the fourth range is defined as the admissible range, the sixth range may be set as a range of higher than a sixth lower limit that is a lower limit of the sixth range. The sixth upper limit may be higher than the first upper limit. On the other hand, the sixth lower limit may be lower than the first lower limit.

The switching prohibition period may have a predetermined initial value. Additionally, the second timer may be configured to make the switching prohibition period expire when the speed ratio parameter deviates from the sixth range.

The work vehicle may further include an operating device configured to be operated by an operator. The controller may further include a trigger operation detecting unit configured to detect whether or not a predetermined operation is performed by the operator. Additionally, the switching prohibition period may have a predetermined initial value, and the second timer may be configured to make the switching prohibition period expire when the trigger operation detecting unit detects the predetermined operation.

In case the fifth range is defined as the admissible range, the clutch controlling unit may be configured to output a clutch command signal for engaging the first clutch so as to make the speed ratio parameter reach the mode switching threshold when the speed ratio parameter becomes higher than the second range at expiration of the switching prohibition period. When the speed ratio parameter reaches the mode switching threshold, the clutch controlling unit may be configured to output a clutch command signal for disengaging the second clutch so as to switch the transmission path into the first mode. On the other hand, in case the fourth range is defined as the admissible range, the clutch controlling unit may be configured to output the clutch command signal for engaging the first clutch so as to make the speed ratio parameter reach the mode switching threshold when the speed ratio parameter becomes lower than the third range at expiration of the switching prohibition period. When the speed ratio parameter reaches the mode switching threshold, the clutch controlling unit may be configured to output the clutch command signal for disengaging the second clutch so as to switch the transmission path into the first mode when the speed ratio parameter reaches the mode switching threshold.

The clutch controlling unit may be configured to output a clutch command signal for engaging the first clutch so as to make the speed ratio parameter reach the mode switching threshold when the speed ratio parameter deviates from the sixth range in the switching prohibition period. When the speed ratio parameter reaches the mode switching threshold, the clutch controlling unit may be configured to output a clutch command signal for disengaging the second clutch so as to switch the transmission path into the first mode.

A control method according to a second aspect of the present invention is a method of controlling a work vehicle equipped with a power transmission. The power transmission includes an input shaft, an output shaft, a gear mechanism, a motor, a first clutch and a second clutch. The gear mechanism has a planetary gear mechanism and is configured to transmit a rotation of the input shaft to the output shaft. The motor is connected to a rotary element of the planetary gear mechanism. The first clutch is configured to switch a transmission path for a driving force in the power transmission into a first mode. The second clutch is configured to switch the transmission path for the driving force in the power transmission into a second mode. When the transmission path is set in the first mode, the first clutch is configured to be engaged and the second clutch is configured to be disengaged. When the transmission path is set in the second mode, the second clutch is configured to be engaged and the first clutch is configured to be disengaged.

In the power transmission, a rotational speed of the motor varies, thereby a speed ratio of the output shaft to the input shaft varies. Preferably, when a speed ratio parameter corresponding to the speed ratio is a predetermined mode switching threshold, a rotational speed ratio of the motor to the input shaft in the first mode and a rotational speed ratio of the motor to the input shaft in the second mode may become equal.

The method includes a step of outputting a clutch command signal for disengaging the first clutch and outputting a clutch command signal for engaging the second clutch so as to keep setting the transmission path in the second mode as long as the speed ratio parameter transitions within a predetermined first range including the mode switching threshold after the speed ratio parameter reaches the mode switching threshold and then the transmission path is switched from the first mode to the second mode even when the speed ratio parameter again reaches the mode switching threshold.

Advantageous Effects of Invention

In the work vehicle and the control method according to the present invention, as long as the transmission path is switched from the first mode to the second mode and then the speed ratio parameter transitions within the predetermined first range including the mode switching threshold, the transmission path is configured to be kept set in the second mode even when the speed ratio parameter again reaches the mode switching threshold. Therefore, unless the speed ratio parameter varies out of the first range after mode switching, mode switching is not then performed. Consequently, the present work vehicle and control method can inhibit hunting to be caused by frequent switching of the transmission path.

BRIEF DESCRIPTION OF THE DRAWINGS

FIG. 1 is a side view of a work vehicle according to an exemplary embodiment.
FIG. 2 is a schematic diagram showing a structure of the work vehicle.
FIG. 3 is a schematic diagram showing a structure of a power transmission.
FIG. 4 is a diagram showing an example of travelling performance curves in respective gear stages of the work vehicle.
FIG. 5 is a diagram showing variation in rotational speed of a first motor and variation in rotational speed of a second motor with respect to a speed ratio of the power transmission.
FIG. 6 includes nomograms showing relations among the rotational speeds and the numbers of teeth of respective elements in a first planetary gear mechanism and those of respective elements in a second planetary gear mechanism.
FIG. 7 is a block diagram showing a detailed internal structure of a controller according to a first exemplary embodiment.
FIG. 8 is a diagram showing a relation between a power transmitted by a mechanical element and a power transmitted by an electric element in a Lo mode.
FIG. 9 is a diagram showing a relation between a power transmitted by the mechanical element and a power transmitted by the electric element in a Hi mode.
FIG. 10 includes charts respectively showing an example of time-series variation in speed ratio and mode of the work vehicle according to the first exemplary embodiment.
FIG. 11 includes charts respectively showing another example of time-series variation in speed ratio and mode of the work vehicle according to the first exemplary embodiment.
FIG. 12 is a chart showing another example of time-series variation in speed ratio and mode of the work vehicle according to the first exemplary embodiment.
FIG. 13 is a block diagram showing a detailed internal structure of a controller according to a second exemplary embodiment.
FIG. 14 is a flowchart showing an exemplary action of the controller according to the second exemplary embodiment.
FIG. 15 is a chart showing an example of time-series variation in speed ratio and mode of a work vehicle according to the second exemplary embodiment.
FIG. 16 is a block diagram showing a detailed internal structure of a controller according to a third exemplary embodiment.

FIG. 17 includes charts respectively showing an example of time-series variation in speed ratio and mode of a work vehicle according to the third exemplary embodiment.

FIG. 18 includes charts respectively showing an example of time-series variation in speed ratio and mode of the work vehicle according to the third exemplary embodiment.

FIG. 19 includes charts respectively showing an example of time-series variation in speed ratio and mode of the work vehicle according to the third exemplary embodiment.

FIG. 20 is a block diagram showing a detailed internal structure of a controller according to a fourth exemplary embodiment.

FIG. 21 is a block diagram showing a detailed internal structure of a controller according to a fifth exemplary embodiment.

FIG. 22 includes charts respectively showing an example of time-series variation in speed ratio and mode of a work vehicle according to the fifth exemplary embodiment.

FIG. 23 is a diagram for explaining a method of changing an engine rotational speed and an engine torque by an engine controlling unit.

FIG. 24 is a block diagram showing a detailed internal structure of a controller according to a sixth exemplary embodiment.

FIG. 25 includes charts respectively showing an example of time-series variation in speed ratio and mode of a work vehicle according to the sixth exemplary embodiment.

FIG. 26 is a schematic diagram showing a structure of a power transmission according to another exemplary embodiment.

FIG. 27 is a diagram showing variation in rotational speed of a first motor and variation in rotational speed of a second motor with respect to a speed ratio of the power transmission according to another exemplary embodiment.

FIG. 28 is a diagram showing variation in mode of a power transmission path in a conventional art.

DESCRIPTION OF EMBODIMENTS

<First Exemplary Embodiment>

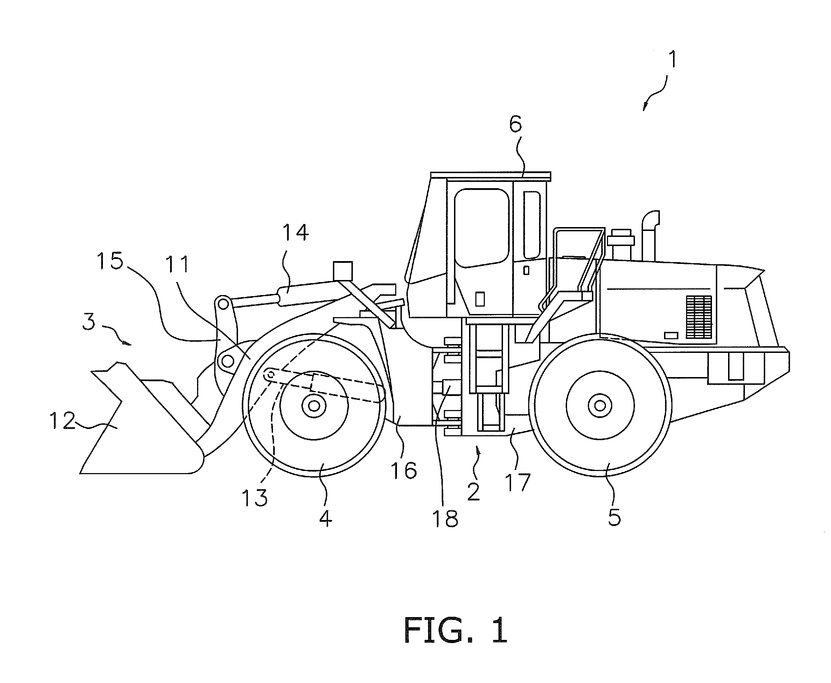

An exemplary embodiment of the present invention will be hereinafter explained with reference to drawings. FIG. 1 is a side view of a work vehicle 1 according to the exemplary embodiment of the present invention. As shown in FIG. 1, the work vehicle 1 includes a vehicle body frame 2, a work implement 3, travelling wheels 4 and 5, and a cab 6. The work vehicle 1 is a wheel loader and is configured to travel when the travelling wheels 4 and 5 are driven and rotated. The work vehicle 1 is capable of performing works such as digging with use of the work implement 3.

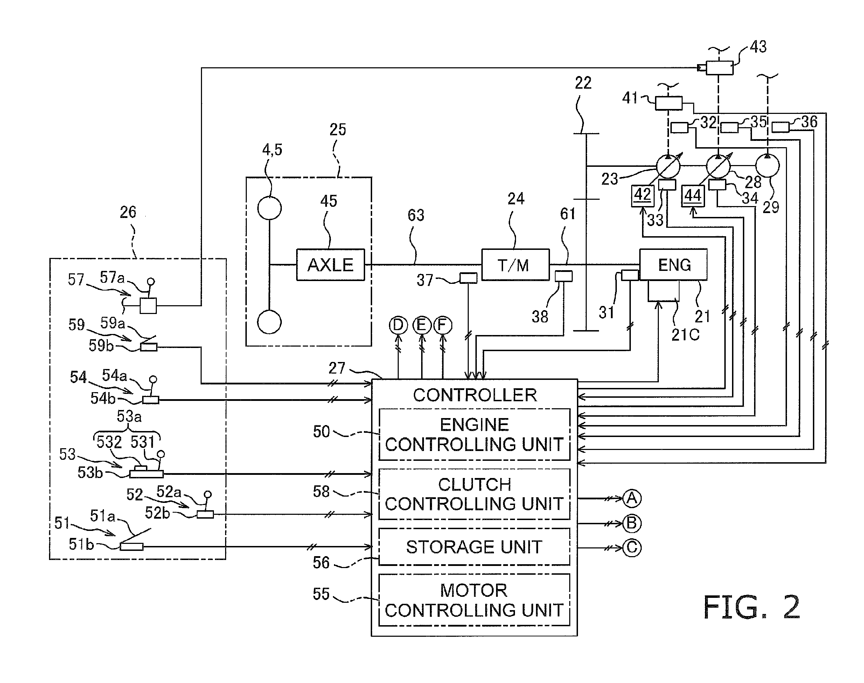

The vehicle body frame 2 includes a front frame 16 and a rear frame 17. The front frame 16 and the rear frame 17 are attached to each other so as to be capable of pivoting in the right-and-left direction. The work implement 3 and the travelling wheels 4 are attached to the front frame 16. The work implement 3 is driven by hydraulic oil from a work implement pump 23 to be described (see FIG. 2). The work implement 3 includes a boom 11 and a bucket 12. The boom 11 is mounted to the vehicle body frame 2. The work implement 3 includes a lift cylinder 13 and a bucket cylinder 14. The lift cylinder 13 and the bucket cylinder 14 are hydraulic cylinders. One end of the lift cylinder 13 is attached to the front frame 16. The other end of the lift cylinder 13 is attached to the boom 11. When the lift cylinder 13 is extended and contracted by the hydraulic oil from the work implement pump 23, the boom 11 is configured to turn up and down. The bucket 12 is attached to the tip end of the boom 11. One end of the bucket cylinder 14 is attached to the vehicle body frame 2. The other end of the bucket cylinder 14 is attached to the bucket 12 through a bellcrank 15. When the bucket cylinder 14 is extended and contracted by the hydraulic oil from the work implement pump 23, the bucket 12 is configured to turn up and down.

The cab 6 and the travelling wheels 5 are attached to the rear frame 17. The cab 6 is mounted onto the vehicle body frame 2. A seat on which an operator is seated, an operating device to be described and so forth are disposed within the cab 6.

The work vehicle 1 includes a steering cylinder 18. The steering cylinder 18 is attached to the front frame 16 and the rear frame 17. The steering cylinder 18 is a hydraulic cylinder. When the steering cylinder 18 is extended and contracted by the hydraulic oil from a steering pump 28 to be described, the moving direction of the work vehicle 1 is configured to be changed right and left.

FIG. 2 is a schematic diagram of a structure of the work vehicle 1. As shown in FIG. 2, the work vehicle 1 includes an engine 21, a PTO 22, a power transmission 24, a travelling apparatus 25, an operating device 26, a controller 27 and so forth.

The engine 21 is, for instance, a diesel engine. The output of the engine 21 is controlled by regulating the amount of fuel to be injected into the cylinder of the engine 21. The controller 27 controls a fuel injection device 21C attached to the engine 21 to regulate amount of fuel. The work vehicle 1 includes an engine rotational speed detecting unit 31. The engine rotational speed detecting unit 31 is configured to detect an engine rotational speed and transmit a detection signal indicating the engine rotational speed to the controller 27.

The work vehicle 1 includes the work implement pump 23, the steering pump 28 and a transmission pump 29. The work implement pump 23, the steering pump 28 and the transmission pump 29 are hydraulic pumps. The PTO 22 is configured to transmit part of a driving force from the engine 21 to these hydraulic pumps 23, 28 and 29. In other words, the PTO 22 is configured to distribute the driving force from the engine 21 to these hydraulic pumps 23, 28 and 29 and the power transmission 24.

The work implement pump 23 is driven by the driving force from the engine 21. The hydraulic oil discharged from the work implement pump 23 is supplied to the aforementioned lift cylinder 13 and bucket cylinder 14 through a work implement control valve 41. The work vehicle 1 includes a work implement pump pressure detecting unit 32. The work implement pump pressure detecting unit 32 is configured to detect the discharge pressure of the hydraulic oil from the work implement pump 23 (hereinafter referred to as "a work implement pump pressure") and transmit a detection signal indicating the work implement pump pressure to the controller 27.

The work implement pump 23 is a variable displacement hydraulic pump. The discharge volume of the work implement pump 23 is changed by changing the tilt angle of either a swashplate or a tilting shaft of the work implement pump 23. A first displacement control device 42 is connected to the work implement pump 23. The first displacement control device 42 is controlled by the controller 27 and is configured to change the tilt angle of the work implement pump 23. Accordingly, the discharge volume of the work implement pump 23 is controlled by the controller 27. For example, the first displacement control device 42 is configured to regulate the tilt angle of the work implement pump 23 such that a pressure differential between the both sides of the work implement control valve 41 can be constant. Additionally, the first displacement control device 42 is capable of arbitrarily changing the tilt angle of the work implement pump 23 in response to a command signal from the controller 27. When described in detail, the first displacement control device 42 includes a first valve and a second valve, both of which are not shown in the drawings. When the hydraulic oil to be supplied to the work implement 3 is changed by the aforementioned work implement control valve 41, a pressure differential is generated between the discharge pressure of the work implement pump 23 and the pressure on the outlet side of the work implement control valve 41 in accordance with change in opening degree of the work implement control valve 41. When controlled by the controller 27, the first valve is configured to regulate the tilt angle of the work implement pump 23 such that the pressure differential between the both sides of the work implement control valve 41 can be constant even when the load of the work implement 3 fluctuates. On the other hand, when controlled by the controller 27, the second valve is capable of further changing the tilt angle of the work implement pump 23. The work vehicle 1 includes a first tilt angle detecting unit 33. The first tilt angle detecting unit 33 is configured to detect the tilt angle of the work implement pump 23 and transmit a detection signal indicating the tilt angle to the controller 27.

The steering pump 28 is driven by the driving force form the engine 21. The hydraulic oil discharged from the steering pump 28 is supplied to the aforementioned steering cylinder 18 through a steering control valve 43. The work vehicle 1 includes a steering pump pressure detecting unit 35. The steering pump pressure detecting unit 35 is configured to detect the discharge pressure of the hydraulic oil from the steering pump 28 (hereinafter referred to as "a steering pump pressure") and transmit a detection signal indicating the steering pump pressure to the controller 27.

The steering pump 28 is a variable displacement hydraulic pump. The discharge volume of the steering pump 28 is changed by changing the tilt angle of either a swashplate or a tilting shaft of the steering pump 28. A second displacement control device 44 is connected to the steering pump 28. The second displacement control device 44 is controlled by the controller 27 and is configured to change the tilt angle of the steering pump 28. Accordingly, the discharge volume of the steering pump 28 is controlled by the controller 27. The work vehicle 1 includes a second tilt angle detecting unit 34. The second tilt angle detecting unit 34 is configured to detect the tilt angle of the steering pump 28 and transmit a detection signal indicating the tilt angle to the controller 27.

The transmission pump 29 is driven by the driving force from the engine 21. The transmission pump 29 is a fixed displacement hydraulic pump. The hydraulic oil discharged from the transmission pump 29 is supplied to clutches CF, CR, CL and CH of the power transmission 24 through clutch control valves VF, VR, VL and VH to be described. The work vehicle 1 may include a transmission pump pressure detecting unit 36. The transmission pump pressure detecting unit 36 is configured to detect the discharge pressure of the hydraulic oil from the transmission pump 29 (hereinafter referred to as "a transmission pump pressure") and transmit a detection signal indicating the transmission pump pressure to the controller 27.

The PTO 22 is configured to transmit part of the driving force form the engine 21 to the power transmission 24. The power transmission 24 is configured to transmit the driving force from the engine 21 to the travelling apparatus 25. The power transmission 24 is configured to change the speed of the driving force from the engine 21 and output the speed-changed driving force. The structure of the power transmission 24 will be explained below in detail.

The travelling apparatus 25 includes an axle 45 and the travelling wheels 4 and 5. The axle 45 is configured to transmit the driving force from the power transmission 24 to the travelling wheels 4 and 5. The travelling wheels 4 and 5 are thereby rotated. The work vehicle 1 includes an output rotational speed detecting unit 37 and an input rotational speed detecting unit 38. The output rotational speed detecting unit 37 is configured to detect the rotational speed of an output shaft 63 of the power transmission 24 (hereinafter referred to as "an output rotational speed"). The output rotational speed corresponds to the vehicle speed. Hence, the output rotational speed detecting unit 37 is configured to detect the vehicle speed by detecting the output rotational speed. The input rotational speed detecting unit 38 is configured to detect the rotational speed of an input shaft 61 of the power transmission 24 (hereinafter referred to as "an input rotational speed"). The output rotational speed detecting unit 37 is configured to transmit a detection signal indicating the output rotational speed to the controller 27. The input rotational speed detecting unit 38 is configured to transmit a detection signal indicating the input rotational speed to the controller 27.

It should be noted that instead of the output rotational speed detecting unit 37 and the input rotational speed detecting unit 38, another rotational speed detecting unit may be provided for detecting the rotational speed of a rotary component inside the power transmission 24 and transmitting the detected rotational speed to the controller 27, and the controller 27 may be configured to calculate the input rotational speed and the output rotational speed on the basis of the rotational speed of the rotary component.

The operating device 26 is operated by the operator. The operating device 26 includes an accelerator operating device 51, a work implement operating device 52, a gearshift operating device 53, a forward/rearward movement switch operating device 54, a steering operating device 57, and a brake operating device 59.

The accelerator operating device 51 includes an accelerator operating member 51a and an accelerator operation detecting unit 51b. The accelerator operating member 51a is operated for setting a target rotational speed of the engine 21. The accelerator operation detecting unit 51b is configured to detect the operating amount of the accelerator operating member 51a (hereinafter referred to as "an accelerator operating amount"). The accelerator operating amount means the pressed-down amount of the accelerator operating member 51a. The accelerator operation detecting unit 51b is configured to transmit a detection signal indicating the accelerator operating amount to the controller 27.

The work implement operating device 52 includes a work implement operating member 52a and a work implement operation detecting unit 52b. The work implement operating member 52a is operated for activating the work implement 3. The work implement operation detecting unit 52b is configured to detect the position of the work implement operating member 52a. For example, the work implement operation detecting unit 52b is configured to detect the position of the work implement operating member 52a by converting the tilt angle of the work implement operating member 52a into a corresponding electric signal. The work implement operation detecting unit 52b is configured to output a detection signal indicating the position of the work implement operating member 52a to the controller 27.

The gearshift operating device 53 includes a gearshift operating member 53a and a gearshift operation detecting unit 53b. The operator is capable of selecting one of gear stages of the power transmission 24 by operating the gearshift operating member 53a. The gearshift operation detecting unit 53b is configured to detect a gear stage specified by the gearshift operating member 53a. The gearshift operation detecting unit 53b is configured to output a detection signal indicating the gear stage specified by the gearshift operating member 53a to the controller 27.

The gearshift operating member 53a includes at least either of a shift range lever 531 and a kick down button 532. The gearshift operation detecting unit 53b is configured to detect which one of the first to N-th stages (N is a natural number) is specified on the basis of the position of the shift range lever 531, and is configured to output a detection signal indicating the gear stage specified by the shift range lever 531 to the controller 27. When detecting pressing of the kick down button 532, the gearshift operation detecting unit 53b is configured to output a detection signal, indicating a gear stage that is lower by one stage than the gear stage currently specified by the shift range lever 531, to the controller 27 for a predetermined period of time. After the predetermined period of time elapses, the gearshift operation detecting unit 53b is configured to output a detection signal indicating the gear stage specified by the shift range lever 531 to the controller 27. It should be noted that when the vehicle speed of the work vehicle 1 is lower than a predetermined threshold, a detection signal, indicating not the gear stage lower by one stage than the gear stage currently specified by the shift range lever 531 but the first stage, may be outputted to the controller 27 for the predetermined period of time. It should be noted that relations among the respective gear stages and both of the traction force and the vehicle speed of the work vehicle 1 will be described below.

The forward/rearward movement switch operating device 54 includes a forward/rearward movement switch operating member 54a and a forward/rearward movement switch operation detecting unit 54b. The operator is capable of switching between forward movement and rearward movement of the work vehicle 1 by operating the forward/rearward movement switch operating member 54a. The forward/rearward movement switch operation detecting unit 54b is configured to detect the position of the forward/rearward movement switch operating member 54a. The forward/rearward movement switch operation detecting unit 54b is configured to output a detection signal indicating a forward movement command or a rearward movement command based on the position of the forward/rearward movement switch operating member 54a to the controller 27.

The steering operating device 57 includes a steering operating member 57a. The steering operating device 57 is configured to drive the steering control valve 43 by supplying a pilot hydraulic pressure to the steering control valve 43 on the basis of an operation of the steering operating member 57a. The operator is capable of changing the moving direction of the work vehicle 1 right and left by operating the steering operating member 57a. It should be noted that the steering operating device 57 may be configured to drive the steering control valve 43 by converting the operation of the steering operating member 57a into an electric signal.

The brake operating device 59 includes a brake operating member 59a and a brake operation detecting unit 59b. The operator causes the work vehicle 1 to generate a braking force by activating a brake device (not shown in the drawing) by operating the brake operating member 59a. The brake operation detecting unit 59b is configured to detect the operating amount of the brake operating member 59a (hereinafter referred to as "a brake operating amount"). The brake operating amount means the pressed-down amount of the brake operating member 59a. The brake operation detecting unit 59b is configured to output a detection signal indicating the operating amount of the brake operating member 59a to the controller 27.

The controller 27 includes an arithmetic logic unit such as a CPU and memories such as a RAM and a ROM, and is configured to perform a variety of processing for controlling the work vehicle 1. Additionally, the controller 27 includes a motor controlling unit 55 and a clutch controlling unit 58, which are units for controlling the power transmission 24, and a storage unit 56. The control of the power transmission 24 will be explained below in detail. The storage unit 56 stores a variety of programs and data for controlling the work vehicle 1.

The controller 27 includes an engine controlling unit 50 for controlling the engine 21. The engine controlling unit 50 is configured to transmit a command signal indicating a command throttle value (a throttle value command signal) to the fuel injection device 21C such that the target rotational speed of the engine 21 can be achieved in accordance with the accelerator operating amount. The controller 27 is configured to control the work implement control valve 41 on the basis of the detection signal from the work implement operation detecting unit 52b to control the hydraulic pressures to be supplied to the hydraulic cylinders 13 and 14. Accordingly, the hydraulic cylinders 13 and 14 are extended and contracted, and the work implement 3 is activated.

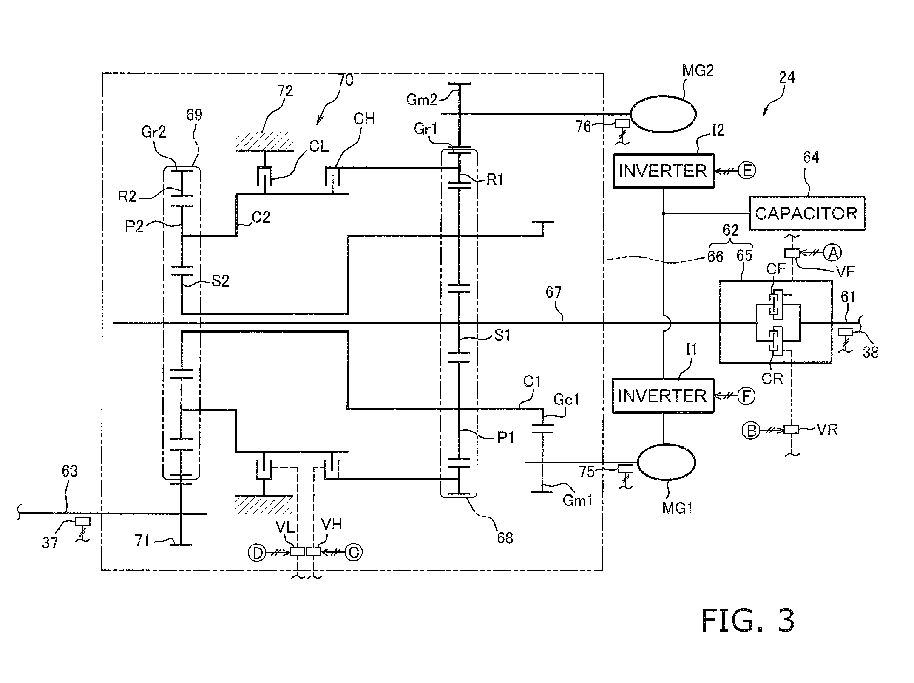

Next, the structure of the power transmission 24 will be explained in detail. FIG. 3 is a schematic diagram showing the structure of the power transmission 24. As shown in FIG. 3, the power transmission 24 includes the input shaft 61, a gear mechanism 62, the output shaft 63, a first motor MG1, a second motor MG2 and a capacitor 64. The input shaft 61 is connected to the aforementioned PTO 22. Rotation from the engine 21 is inputted into the input shaft 61 through the PTO 22. The gear mechanism 62 is configured to transmit the rotation of the input shaft 61 to the output shaft 63. The output shaft 63 is connected to the aforementioned travelling apparatus 25, and is configured to transmit the rotation from the gear mechanism 62 to the aforementioned travelling apparatus 25.

The gear mechanism 62 is a mechanism configured to transmit a driving force from the engine 21. The gear mechanism 62 causes speed ratio of the output shaft 63 to the input shaft 61 to vary in accordance with variation in rotational speed of the motors MG1 and MG2. The gear mechanism 62 includes a forward/rearward movement switch mechanism 65 and a gearshift mechanism 66.

The forward/rearward movement switch mechanism 65 includes the F clutch CF, the R clutch CR, and a variety of gears not shown in the drawings. The F clutch CF and the R clutch CR are hydraulic clutches, and the hydraulic oil is supplied to the respective clutches CF and CR from the transmission pump 29. The hydraulic oil to be supplied to the F clutch CF is controlled by the F clutch control valve VF. The hydraulic oil to be supplied to the R clutch CR is controlled by the R clutch control valve VR. The respective clutch control valves CF and CR are controlled by command signals from the clutch controlling unit 58. Engagement/disengagement of the F clutch CF and engagement/disengagement of the R clutch CR are switched, thereby the direction of the rotation to be outputted from the forward/rearward movement switch mechanism 65 is switched.

The gearshift mechanism 66 includes a transmission shaft 67, a first planetary gear mechanism 68, a second planetary gear mechanism 69, a Hi/Lo switch mechanism 70 and an output gear 71. The transmission shaft 67 is coupled to the forward/rearward movement switch mechanism 65.

The first planetary gear mechanism 68 includes a first sun gear S1, a plurality of first planet gears P1, a first carrier C1 supporting the plural first planet gears P1, and a first ring gear R1. The first sun gear S1 is coupled to the transmission shaft 67. The plural first planet gears P1 are meshed with the first sun gear S1 and are rotatably supported by the first carrier C1. A first carrier gear Gc1 is provided on the outer peripheral part of the first carrier C1. The first ring gear R1 is meshed with the plural first planet gears P1 and is also rotatable. Additionally, a first ring outer peripheral gear Gr1 is provided on the outer periphery of the first ring gear R1.

The second planetary gear mechanism 69 includes a second sun gear S2, a plurality of second planet gears P2, a second carrier C2 supporting the plural second planet gears P2, and a second ring gear R2. The second sun gear S2 is coupled to the first carrier C1. The plural second planet gears P2 are meshed with the second sun gear S2 and are rotatably supported by the second carrier C2. The second ring gear R2 is meshed with the plural second planet gears P2 and is also rotatable. A second ring outer peripheral gear Gr2 is provided on the outer periphery of the second ring gear R2. The second ring outer peripheral gear Gr2 is meshed with the output gear 71, and the rotation of the second ring gear R2 is outputted to the output shaft 63 through the output gear 71.

The Hi/Lo switch mechanism 70 is a mechanism for selectively switching a driving force transmission path in the power transmission 24 between a first mode and a second mode. In the present exemplary embodiment, the first mode is a high speed mode (a Hi mode) in which the vehicle speed is high, whereas the second mode is a low speed mode (a Lo mode) in which the vehicle speed is low. The present Hi/Lo switch mechanism 70 includes the H clutch CH configured to be engaged in the Hi mode and the L clutch CL configured to be engaged in the Lo mode. The H clutch CH is configured to connect or disconnect the first ring gear R1 and the second carrier C2. On the other hand, the L clutch CL is configured to connect or disconnect the second carrier C2 and a stationary end 72, and is thus configured to prevent or allow rotation of the second carrier C2.

It should be noted that the respective clutches CH and CL are hydraulic clutches, and the hydraulic oil is supplied to the respective clutches CH and CL separately from the transmission pump 29. The hydraulic oil to be supplied to the H clutch CH is controlled by the H clutch control valve VH. The hydraulic oil to be supplied to the L clutch CL is controlled by the L clutch control valve VL. The respective clutch control valves VH and VL are controlled by command signals from the clutch controlling unit 58.

The first motor MG1 and the second motor MG2 function as drive motors configured to generate a driving force by electric energy. Additionally, the first motor MG1 and the second motor MG2 also function as generators configured to generate electric energy with use of a driving force to be inputted thereto. The first motor MG1 is configured to function as the generator when a command signal is given thereto from the motor controlling unit 55 such that a torque acts on the first motor MG1 in the opposite direction to the rotational direction of the first motor MG1. A first motor gear Gm1 is fixed to the output shaft of the first motor MG1, and is meshed with the first carrier gear Gc1. In other words, the first motor MG1 is connected to a rotary element of the first planetary gear mechanism 68.

A first invertor I1 is connected to the first motor MG1, and a motor command signal for controlling the motor torque of the first motor MG1 is given to the first invertor I1 from the motor controlling unit 55. The rotational speed of the first motor MG1 is detected by a first motor rotational speed detecting unit 75. The first motor rotational speed detecting unit 75 is configured to transmit a detection signal indicating the rotational speed of the first motor MG1 to the controller 27.

The second motor MG2 is configured similarly to the first motor MG1. A second motor gear Gm2 is fixed to the output shaft of the second motor MG2, and is meshed with the first ring outer peripheral gear Gr1. In other words, the second motor MG2 is connected to a rotary element of the first planetary gear mechanism 68. Additionally, a second invertor I2 is connected to the second motor MG2, and a motor command signal for controlling the motor torque of the second motor MG2 is given to the second invertor I2 from the motor controlling unit 55. The rotational speed of the second motor MG2 is detected by a second motor rotational speed detecting unit 76. The second motor rotational speed detecting unit 76 is configured to transmit a detection signal indicating the rotational speed of the second motor MG2 to the controller 27.

The capacitor 64 functions as an energy storage for storing energy to be generated by the motors MG1 and MG2. In other words, the capacitor 64 is configured to store electric power generated by each motor MG1, MG2 when each motor MG1, MG2 functions as a generator. It should be noted that a battery, functioning as another electric storage means, may be used instead of the capacitor. It should be noted that the capacitor 64 may not be provided when the motors MG1 and MG2 can be respectively driven such that one of the motors MG1 and MG2 generates electric power and the other is electrified by the electric power.

The motor controlling unit 55 is configured to receive detection signals from a variety of detecting units and give command signals, which indicate command torques of the motors MG1 and MG2, to the respective invertors I1 and I2. On the other hand, the clutch controlling unit 58 is configured to give command signals for controlling the clutch hydraulic pressures of the respective clutches CF, CR, CH and CL to the respective clutch control valves VF, VR, VH and VL. Accordingly, the gear ratio and the output torque of the power transmission 24 are controlled. The action of the power transmission 24 will be hereinafter explained.

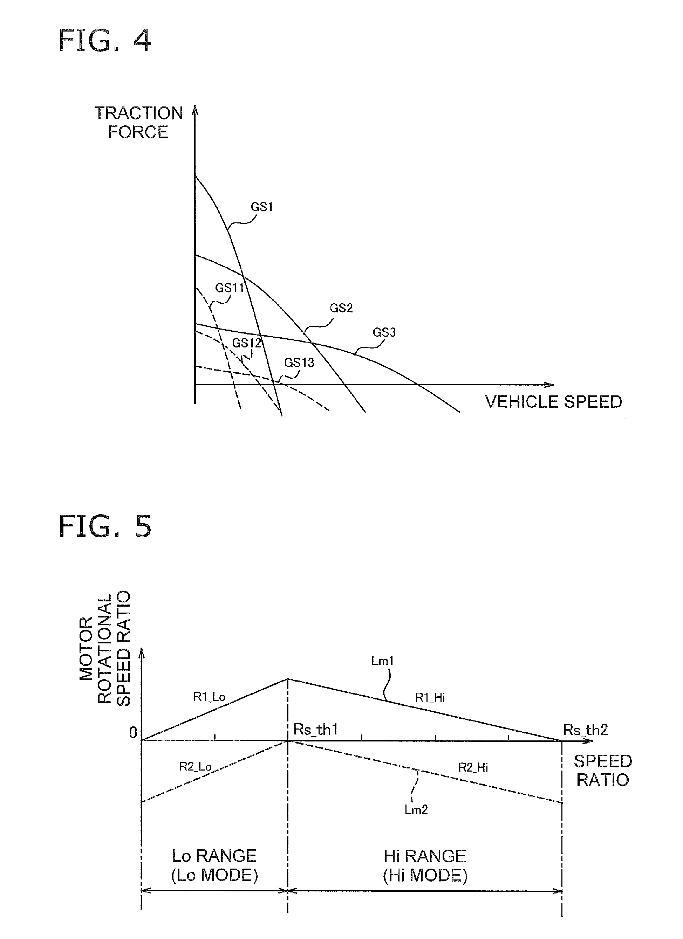

Next, explanation will be provided for relations among the respective gear stages and both of the traction force and the vehicle speed of the work vehicle 1. FIG. 4 is a diagram showing an example of travelling performance curves in the respective gear stages of the work vehicle 1. In FIG. 4, GS1, GS2 and GS3 respectively indicate the maximum traction forces in the first, second and third stages, whereas GS11, GS12 and GS13 respectively indicate the minimum traction forces (i.e., traction forces obtained when the accelerator operating member is not being pressed down) in the first, second and third stages. The traction force in each gear stage is increased and decreased in a range from the minimum traction force to the maximum traction force in accordance with the accelerator operating amount. In FIG. 4, when the traction force is negative, this means that a force for decreasing the vehicle speed (so called engine braking or regenerative braking) is applied. Additionally, FIG. 4 shows an example of the work vehicle 1 having three gear stages. When the work vehicle 1 has four or more gear stages, in accordance with increase in gear stage to the fourth stage and then to the fifth stage, the travelling performance curve in the set gear stage varies such that the traction force at vehicle speed 0 decreases while the vehicle speed at traction force 0 increases. It should be noted that the number of the gear stages of the work vehicle 1 is not limited to that shown in FIG. 4, and may be two or may be four or more.

The controller 27 stores data of the travelling performance curves in the respective gear stages as shown in FIG. 4, and is configured to control the engine 21, the motors MG1 and MG2, the H clutch CH and the L clutch CL such that travelling performance can be exerted in accordance with the travelling performance curves.

Next, with FIG. 5, explanation will be provided for the schematic action performed by the power transmission 24 when the vehicle speed accelerates from 0 in a forward movement direction while the rotational speed of the engine 21 is kept constant. FIG. 5 is a diagram showing a rotational speed ratio of each motor MG1, MG2 with respect to a speed ratio of the power transmission 24. The speed ratio of the power transmission 24 is an absolute value of a ratio of the rotational speed of the output shaft 63 to the rotational speed of the input shaft 61. The rotational speed ratio of the motor MG1 is a ratio of the rotational speed of the output shaft of the motor MG1 to the rotational speed of the input shaft 61. The rotational speed ratio of the motor MG2 is a ratio of the rotational speed of the output shaft of the motor MG2 to the rotational speed of the input shaft 61. When the rotational speed of the engine 21 is constant, the vehicle speed varies in accordance with the speed ratio of the power transmission 24. Therefore, in FIG. 5, variation in speed ratio of the power transmission 24 corresponds to variation in vehicle speed. In other words, FIG. 5 shows a relation between the rotational speed of each motor MG1, MG2 and the vehicle speed. In FIG. 5, a solid line Lm1 indicates the rotational speed of the first motor MG1, whereas a broken line Lm2 indicates the rotational speed of the second motor MG2.

In a Lo range (the Lo mode) that the speed ratio is greater than or equal to 0 and less than or equal to Rs_th1, the L clutch CL is configured to be engaged whereas the H clutch CH is configured to be disengaged. Rs_th1 is a mode switching threshold for determining mode switching. In the Lo range, the H clutch CH is configured to be disengaged, and hence, the second carrier C2 and the first ring gear R1 are configured to be disconnected. On the other hand, the L clutch CL is configured to be engaged, and hence, the second carrier C2 is configured to be fixed.

In the Lo range, the driving force from the engine 21 is inputted into the first sun gear S1 through the transmission shaft 67, and is outputted to the second sun gear S2 from the first carrier C1. On the other hand, the driving force inputted into the first sun gear S1 is transmitted to the first ring gear R1 from the first planet gears P1, and is outputted to the second motor MG2 through the first ring outer peripheral gear Gr1 and the second motor gear Gm2. During power running of the work vehicle 1, the second motor MG2 functions as a generator in the Lo range, and part of electric power generated by the second motor MG2 is stored in the capacitor 64. On the other hand, the first motor MG1 functions as a generator in braking, and hence, part of electric power generated by the first motor MG1 may be supplied to the first motor MG1. Alternatively, part of electric power generated by the second motor MG2 may be stored in the capacitor 64.

On the other hand, during power running of the work vehicle 1, in the Lo range, the first motor MG1 functions as an electric motor configured to be driven by electric power supplied from either the second motor MG2 or the capacitor 64. The driving force of the first motor MG1 is outputted to the second sun gear S2 through a path of the first motor gear Gm1, the first carrier gear Gc1, and then the first carrier C1. The driving force, outputted to the second sun gear S2 as described above, is transmitted to the output shaft 63 through a path of the second planet gears P2, the second ring gear R2, the second ring outer peripheral gear Gr2, and then the output gear 71.

Additionally, the rotational speed of the second motor MG2 becomes "0" when the speed ratio is the mode switching threshold Rs_th1. In other words, the second motor MG2 is deactivated.

In a Hi range (the Hi mode) that the speed ratio is greater than or equal to the mode switching threshold Rs_th1, the H clutch CH is configured to be engaged whereas the L clutch CL is configured to be disengaged. In the Hi range, the H clutch CH is configured to be engaged, and hence, the second carrier C2 and the first ring gear R1 are configured to be connected. On the other hand, the L clutch CL is configured to be disengaged, and hence, the second carrier C2 is released. Therefore, the rotational speed of the first ring gear R1 and that of the second carrier C2 becomes equal.

In the Hi range, the driving force from the engine 21 is inputted into the first sun gear S1, and is outputted to the second sun gear S2 from the first carrier C1. On the other hand, the driving force inputted into the first sun gear S1 is outputted to the first motor MG1 from the first carrier C1 through the first carrier gear Gc1 and the first motor gear Gm1. During power running of the work vehicle 1, the first motor MG1 functions as a generator in the Hi range, and hence, part of electric power generated by the first motor MG1 may be supplied to the second motor MG2. Alternatively, part of electric power generated by the first motor MG1 may be stored in the capacitor 64.

Additionally, during power running of the work vehicle 1, the second motor MG2 functions as an electric motor configured to be driven by electric power supplied from either the first motor MG1 or the capacitor 64 as needed. The driving force of the second motor MG2 is outputted to the second carrier C2 through a path of the second motor gear Gm2, the first ring outer peripheral gear Gr1, the first ring gear R1, and then the H clutch CH. The driving force, outputted to the second sun gear S2 as described above, is outputted to the second ring gear R2 through the second planet gears P2, while the driving force outputted to the second carrier C2 is outputted to the second ring gear R2 through the second planet gears P2. A net driving force, resulting from composition of the driving forces in the second ring gear R2 as described above, is transmitted to the output shaft 63 through the second ring outer peripheral gear Gr2 and the output gear 71.

Then, when the speed ratio is a set maximum speed ratio Rs_th2, the rotational speed of the first motor MG1 becomes "0", and in other words, the first motor MG1 stops rotating. It should be noted that during braking of the work vehicle 1, the role of the first motor MG1 and that of the second motor MG2 are reversed. The aforementioned explanation relates to a situation of forward movement. However, a similar action is performed even in a situation of rearward movement. Additionally, the mode switching threshold Rs_th1 and the set maximum speed ratio Rs_th2 are stored in the storage unit 56.

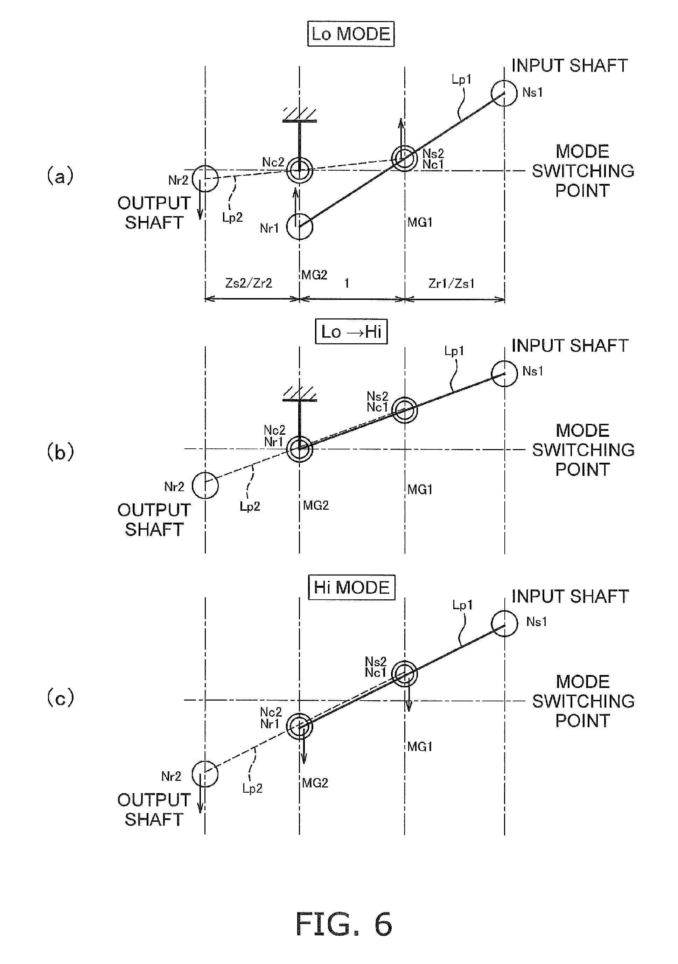

Next, the schematic action of the power transmission 24 will be explained with nomograms. The rotational speed and the number of teeth of the first sun gear S1 in the first planetary gear mechanism 68 are respectively set as Ns1 and Zs1. The rotational speed of the first carrier C1 is set as Nc1. The rotational speed and the number of teeth of the first ring gear R1 are respectively set as Nr1 and Zr1. On the other hand, the rotational speed and the number of teeth of the second sun gear S2 in the second planetary gear mechanism 69 are respectively set as Ns2 and Zs2. The rotational speed of the second carrier C2 is set as Nc2. The rotational speed and the number of teeth of the second ring gear R2 are respectively set as Nr2 and Zr2. With the settings, nomograms shown in FIG. 6 are obtained by representing a relation between the rotational speed and the number of teeth of each element in the first planetary gear mechanism 68 and those of each element in the second planetary gear mechanism 69.

In the nomograms, relations among the rotational speeds of the respective elements in the respective planetary gear mechanisms are depicted with straight lines. Therefore, as shown in FIG. 6, Ns1, Nc1 and Nr1 are aligned on a straight line. Likewise, Ns2, Nc2 and Nr2 are also aligned on a straight line. It should be noted that in FIG. 6, a solid line Lp1 indicates relations among the rotational speeds of the respective elements in the first planetary gear mechanism 68. A broken line Lp2 indicates relations among the rotational speeds of the respective elements in the second planetary gear mechanism 69.

FIG. 6(a) shows rotational speeds of the respective elements in the Lo mode. As described above, when the rotational speed of the engine 21 is set constant for easy explanation, Ns1 is set as constant. When the engine rotational direction is herein set as positive, the rotational speed Ns1 is set as positive. In a mode switching point to be described, the rotational speed of the second motor MG2 is 0. Hence, when a given rotary element is plotted on the mode switching point depicted with a dashed dotted line in the drawing, the rotational speed of the rotary element is 0. When a given rotary element is plotted in a range below the dashed dotted line of the mode switching point, the rotational speed of the rotary element is negative. In the Lo mode, increase in rotational speed of the first motor MG1 results in increase in Nc1. When Nc1 increases, Nr1 increases. Accordingly, the rotational speed of the second motor MG2 increases. Additionally, in the power transmission 24, the first carrier C1 is connected with the second sun gear S2. Therefore, Nc1 and Ns2 are equal. Thus, Ns2 also increases with increase in Nc1. In the Lo mode, the second carrier C2 is configured to be fixed to the stationary end 72. Hence, Nc2 is kept at 0. Therefore, increase in Ns2 results in decrease in Nr2. Accordingly, the speed ratio of the power transmission 24 increases. Thus, in the Lo mode, as rotational speed of the first motor MG1 increases, the speed ratio of the power transmission 24 increases.

As shown in FIG. 6(b), when the speed ratio of the power transmission 24 reaches the aforementioned mode switching threshold Rs_th1, Nr1 becomes 0. Therefore, the rotational speed of the second motor MG2 becomes 0. At this time, mode switching is performed from the Lo mode to the Hi mode. In other words, the L clutch CL is configured to be switched from the engaged state to the disengaged state. Accordingly, the second carrier C2 is configured to be released from the stationary end 72 and becomes rotatable. On the other hand, the H clutch CH is configured to be switched from the disengaged state to the engaged state. Accordingly, the first ring gear R1 and the second carrier C2 are configured to be connected.

FIG. 6(c) shows the rotational speeds of the respective elements in the Hi mode. In the Hi mode, the first ring gear R1 and the second carrier C2 are connected, and hence, Nr1 and Nc2 are equal. Additionally, as described above, the first carrier C1 is coupled to the second sun gear S2, and hence, Nc1 and Ns2 are equal. Therefore, decrease in rotational speed of the second motor MG2 results in decrease in Nr1 and Nc2. Additionally, decrease in Nc2 results in decrease in Nr2. Accordingly, the speed ratio of the power transmission 24 increases. Thus, as rotational speed of the second motor MG2 increases, the speed ratio of the power transmission 24 increases. On the other hand, decrease in Nr1 and Nc2 results in decrease in Ns2 and Nc1. Accordingly, the rotational speed of the first motor MG1 decreases. Then, when the speed ratio of the power transmission 24 reaches the aforementioned second threshold Rs_th2, Ns2 and Nc1 become 0. Accordingly, the rotational speed of the first motor MG1 becomes 0. It should be noted that the aforementioned action is an action performed in switching from the Lo mode to the Hi mode, and an action in switching from the Hi mode to the Lo mode is performed in a reverse procedure from the aforementioned action.

As described above, when the rotational speed of the engine 21 is set constant, in other words, when the rotational speed of the input shaft 61 is set constant, in the Lo mode, the rotational speed of the first motor MG1 increases in accordance with increase in speed ratio. By contrast, in the Hi mode, the rotational speed of the first motor MG1 decreases in accordance with increase in speed ratio. Therefore, as shown in FIG. 5, in the Lo mode, the speed ratio varies at a rate of change R1_Lo with respect to the rotational speed ratio of the first motor MG1. However, in the Hi mode, the speed ratio varies at a rate of change R1_Hi, which is different from the rate of change R1_Lo in the Lo mode, with respect to the rotational speed ratio of the first motor MG1. When described in detail, the positive/negative sign for the rate of change R1_Hi in the Hi mode and that for the rate of change R1_Lo in the Lo mode are different from each other. Additionally, when the speed ratio is the mode switching threshold Rs_th1, the rotational speed ratio of the first motor MG1 to the input shaft 61 in the Lo mode and that of the first motor MG1 to the input shaft 61 in the Hi mode become equal.

On the other hand, when the rotational speed of the engine 21 is set constant, in other words, when the rotational speed of the input shaft 61 is set constant, in the Lo mode, the rotational speed of the second motor MG2 increases in accordance with increase in speed ratio. In the Hi mode, the rotational speed of the second motor MG2 decreases in accordance with increase in speed ratio. Therefore, as shown in FIG. 5, in the Lo mode, the speed ratio varies at a rate of change R2_Lo with respect to the rotational speed ratio of the second motor MG2. However, in the Hi mode, the speed ratio varies at a rate of change R2_Hi, which is different from the rate of change R2_Lo in the Lo mode, with respect to the rotational speed ratio of the second motor MG2. When described in detail, the positive/negative sign for the rate of change R2_Hi in the Hi mode and that for the rate of change R2_Lo in the Lo mode are different from each other. Additionally, when the speed ratio is the mode switching threshold Rs_th1, the rotational speed ratio of the second motor MG2 to the input shaft 61 in the Lo mode and that of the second motor MG2 to the input shaft 61 in the Hi mode become equal.

As described above, the clutch controlling unit 58 is configured to perform switching between the Lo mode and the Hi mode. The clutch controlling unit 58 is configured to switch the H clutch CH and the L clutch CL by transmitting clutch command signals to the H clutch control valve VH and the L clutch control valve VL. A control of switching between the Hi mode and the Lo mode will be hereinafter explained in detail.

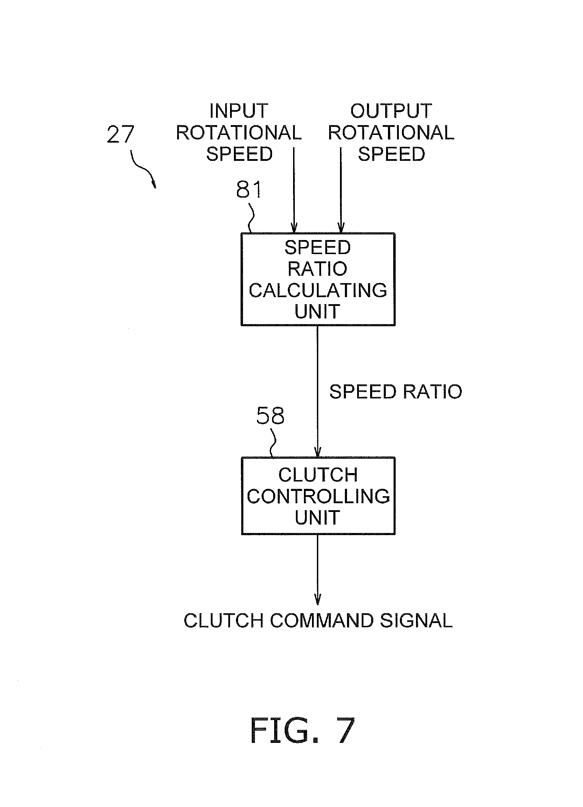

FIG. 7 is a block diagram showing a detailed internal structure of the controller 27 according to a first exemplary embodiment. As shown in FIG. 7, the controller 27 further includes a speed ratio calculating unit 81. In FIG. 7, the storage unit 56 is not shown. Additionally, the engine controlling unit 50 and the motor controlling unit 55 are not required to perform peculiar actions according to the present exemplary embodiment, and hence, are also not shown.

The speed ratio calculating unit 81 is configured to calculate the speed ratio of the power transmission 24 on the basis of the input rotational speed and the output rotational speed of the power transmission 24. The input rotational speed is detected by the input rotational speed detecting unit 38. The output rotational speed is detected by the output rotational speed detecting unit 37.

The clutch controlling unit 58 is configured to obtain the speed ratio calculated by the speed ratio calculating unit 81 and switch the transmission path from one to the other of the Lo and Hi modes when the speed ratio reaches the first threshold Rs_th1. Normally, the clutch controlling unit 58 is configured to switch the transmission path into the Hi mode when the speed ratio after mode switching becomes greater than or equal to the first threshold Rs_th1. On the other hand, the clutch controlling unit 58 is configured to switch the transmission path into the Lo mode when the speed ratio after mode switching becomes less than or equal to the first threshold Rs_th1. Here, the aforementioned Hi range (a range in which the speed ratio is greater than or equal to the first threshold Rs_th1) will be referred to as a fourth range, whereas the aforementioned Lo range (a range in which the speed ratio is less than or equal to the first threshold Rs_th1) will be referred to as a fifth range. Moreover, when a given range is admissible as a range into which the speed ratio in each of the Hi and Lo modes falls, the range will be referred to as an admissible range, and otherwise, will be referred to as an inadmissible range. In the setting, the admissible range and the inadmissible range can be defined as shown in the following [Table 1].

[Table 1]

|  | Hi mode | Lo mode |
|---|---|---|
| Fourth range | Admissible range | Inadmissible range |
| Fifth range | Inadmissible range | Admissible range |

Whether a given range is the aforementioned admissible range or the aforementioned inadmissible range is herein determined based on a criterion regarding whether or not power circulation occurs in the power transmission. In the Lo mode, when the speed ratio falls into the Lo range (the fifth range), as described above, the first motor MG1 functions as an electric motor whereas the second motor MG2 functions as a generator. However, in the Lo mode, so as to increase the speed ratio to a value in the Hi range (the fourth range) during power running, it is principally required that the first motor MG1 functions as a generator whereas the second motor MG2 functions as an electric motor. In this case, part of the driving force from the engine 21 and the driving force from the second motor MG2 is absorbed into the first motor MG1 through a path of the first carrier C1, the first carrier gear Gc1, and then the first motor gear Gm1. On the other hand, the remainder of the driving force is transmitted to the output shaft 63 through a path of the first carrier C1, the second sun gear S2, the second planet gears P2, the second ring gear R2, the second ring outer peripheral gear Gr2 and then the output gear 71. Therefore, the driving force causes power circulation through a path of the first carrier C1, the first carrier gear Gc1, the first motor gear Gm1, the first motor MG1, (the capacitor 64,) the second motor MG2, the second motor gear Gm2, the first ring outer peripheral gear Gr1, the first ring gear R1, the first planet gears P1 and then back to the first carrier C1.

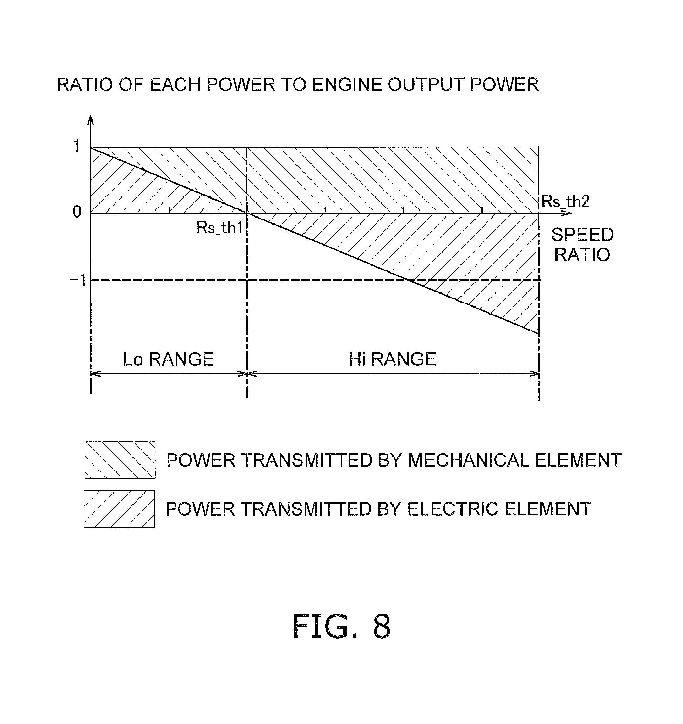

FIG. 8 is a diagram showing a relation between a power transmitted by a mechanical element and a power transmitted by an electric element in the Lo mode. The power transmitted by the mechanical element herein means a power transmitted by the gear mechanism 62 which is part of an engine output power. On the other hand, the power transmitted by the electric element means a power transmitted by one of the motors MG1 and MG2 functioning as a generator generating a power and the other of the motors MG1 and MG2 functioning as an electric motor being driven. In FIG. 8, it is assumed that a power equal to the engine output power acts on the output shaft 63 without taking into consideration that part of the engine output power is absorbed by the capacitor 64. In FIG. 8, a positive value indicates a ratio of the power transmitted by the mechanical element to the power outputted to the output shaft 63 or a ratio of the power transmitted by the electric element to the power outputted to the output shaft 63. In FIG. 8, a negative value indicates a power that is additionally required for power circulation inside the power transmission 24 other than the power outputted to the output shaft 63.

As shown in FIG. 8, in the Lo range corresponding to the fifth range, the power transmitted by the electric element increases as the speed ratio decreases, but power circulation does not occur. However, in the Hi range corresponding to the fourth range, the power transmitted by the mechanical element is all transmitted to the output shaft 63, and further, the power transmitted by the electric element is additionally required. Moreover, when the speed ratio increases, the power transmitted by the electric element increases. Therefore, a large displacement motor/generator is required for achieving increase in speed ratio. This results in not only increase in size of the power transmission 24 but also increase in energy loss inside the power transmission 24. Furthermore, a power outputted to the first carrier C1 is a net power that results from composition of the power transmitted by the mechanical element and the power transmitted by the electric element as shown in FIG. 8. Hence, when the speed ratio increases, a load acting on the first carrier C1 increases. To countermeasure this, increase in size of the first carrier C1 is required. Therefore, to avoid these drawbacks, mode switching of the power transmission 24 is performed at the mode switching threshold Rs_th1. However, when it is assumed that the speed ratio belongs to the fourth range (the Hi range) in the Lo mode, this condition means that mode switching should have been intrinsically done but has not been done yet. Therefore, it is inadmissible that the speed ratio belongs to the fourth range (the Hi range) in the Lo mode. Consequently, in the Lo mode, the fourth range is defined as the inadmissible range whereas the fifth range is defined as the admissible range.

Next, in the Hi mode, when the speed ratio falls into the Hi range (the fourth range), as described above, the second motor MG2 functions as an electric motor whereas the first motor MG1 functions as a generator. However, in the Hi mode, so as to decrease the speed ratio to a value in the Lo range (the fifth range) during power running, it is principally required that the second motor MG2 functions as a generator whereas the first motor MG1 functions as an electric motor. In this case, part of the driving force from the engine 21 and the driving force from the first motor MG1 is absorbed by the second motor MG2 through a path of the first carrier C1, the second sun gear S2, the second planet gears P2, the second carrier C2, the first ring gear R1, the first ring outer peripheral gear Gr1 and then the second motor gear Gm2. On the other hand, the remainder of the driving force is transmitted to the output shaft 63 through a path of the second planet gears P2, the second ring gear R2, the second ring outer peripheral gear Gr2 and then the output gear 71. Therefore, the driving force causes power circulation through a path of the first carrier C1, the second sun gear S2, the second planet gears P2, the second carrier C2, the first ring gear R1, the first ring outer peripheral gear Gr1, the second motor gear Gm2, the second motor MG2, (the capacitor 64,) the first motor MG1, the first motor gear Gm1, the first carrier gear Gc1 and then back to the first carrier C1.

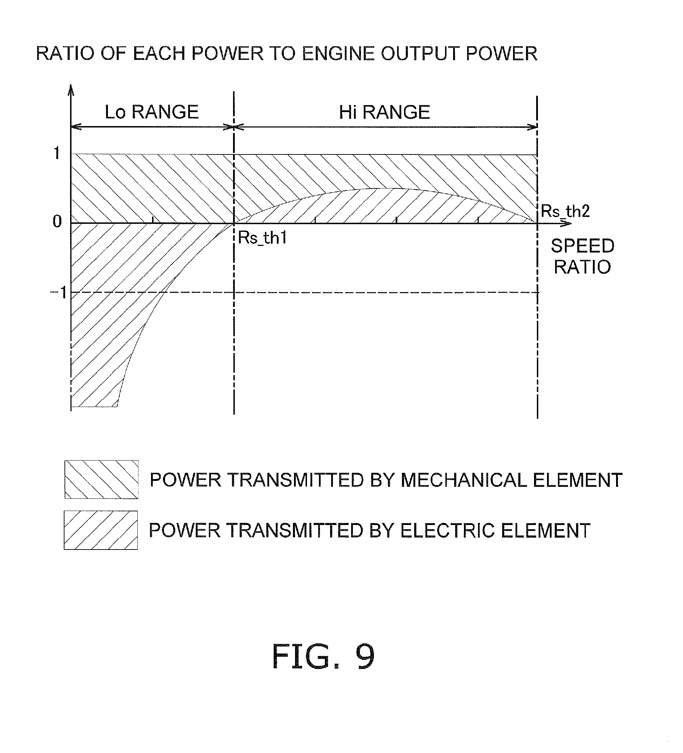

FIG. 9 is a diagram showing a relation between a power transmitted by the mechanical element and a power transmitted by the electric element in the Hi mode. The power transmitted by the mechanical element and the power transmitted by the electric element are defined the same as those in FIG. 8. In FIG. 9, it is similarly assumed that a power equal to the engine output power acts on the output shaft 63 without taking into consideration that part of the engine output power is absorbed by the capacitor 64. Additionally, negative and positive values in the vertical axis of FIG. 9 also indicate the same contents as those in the vertical axis of FIG. 8.

As shown in FIG. 9, in the Hi range corresponding to the fourth range, the power transmitted by the electric element varies in accordance with the value of the speed ratio, but power circulation does not occur. However, in the Lo range corresponding to the fifth range, the power transmitted by the electric element is required in addition to the power transmitted by the mechanical element. Moreover, when the speed ratio decreases, the power transmitted by the electric element increases. Therefore, a large displacement motor/generator is required for achieving increase in speed ratio. This results in not only increase in size of the power transmission 24 but also increase in energy loss inside the power transmission 24. Furthermore, a power outputted to the first carrier C1 is a net power that results from composition of the power transmitted by the mechanical element and the power transmitted by the electric element as shown in FIG. 9. Hence, when the speed ratio increases, a load acting on the first carrier C1 increases. To countermeasure this, increase in size of the first carrier C1 is required. Therefore, to avoid these drawbacks, mode switching of the power transmission 24 is performed at the mode switching threshold Rs_th1. However, when it is assumed that the speed ratio belongs to the fifth range (the Lo range) in the Hi mode, this condition means that mode switching should have been intrinsically done but has not been done yet. Therefore, it is inadmissible that the speed ratio belongs to the fifth range (the Lo range) in the Hi mode. Consequently, in the Hi mode, the fourth range is defined as the admissible range whereas the fifth range is defined as the inadmissible range.

Moreover, as long as the speed ratio transitions within a predetermined first range RE1 including the mode switching threshold Rs_th1 after the speed ratio reaches the mode switching threshold Rs_th1 and then the transmission path is switched from the first mode to the second mode, the clutch controlling unit 58 is configured to output a clutch command signal for disengaging a first clutch corresponding to the first mode and a clutch command signal for engaging a second clutch corresponding to the second mode so as to keep setting the transmission path in the second mode even when the speed ratio again reaches the mode switching threshold Rs_th1.

The first mode corresponds to one of the Hi and Lo modes, whereas the second mode corresponds to the other of the Hi and Lo modes. The first mode means a pre-switching mode, whereas the second mode means a post-switching mode. When the first mode is the Lo mode whereas the second mode is the Hi mode, the first clutch means the L clutch CL whereas the second clutch means the H clutch CH. When the first mode is the Hi mode whereas the second mode is the Lo mode, the first clutch means the H clutch CH whereas the second clutch means the L clutch CL. The first range RE1 may be herein referred to as a dead band. Additionally, with reference to Table 1, in the first mode, one of the fourth and fifth ranges is defined as the admissible range whereas the other of the fourth and fifth ranges is defined as the inadmissible range. At this time, in the second mode, the aforementioned other range is defined as the admissible range, whereas the aforementioned one range is defined as the inadmissible range.

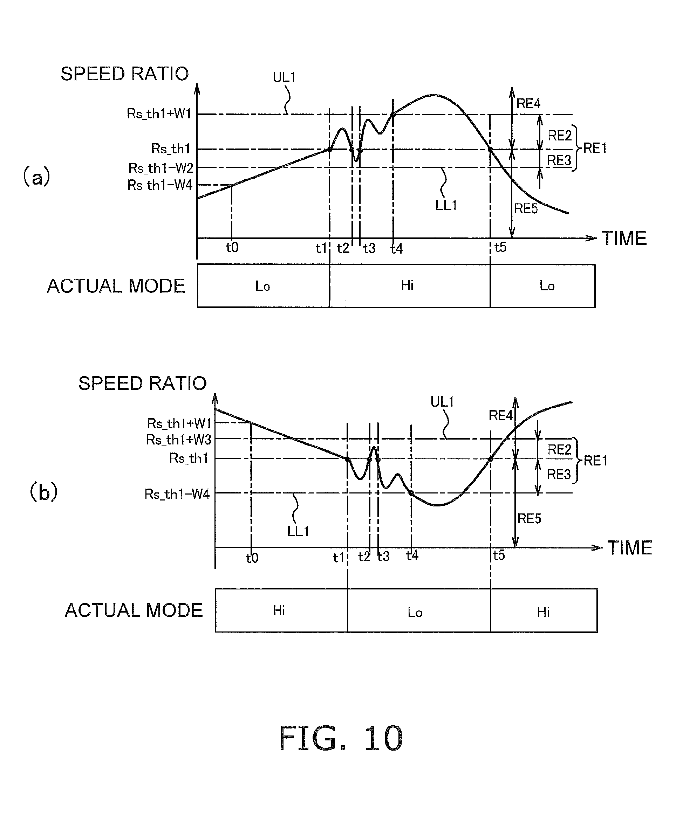

Next, with reference to drawings, the first range RE1 will be explained in detail. FIG. 10 includes charts respectively showing an example of time-series variation in speed ratio and mode of the work vehicle 1 according to the first exemplary embodiment. FIG. 10(a) shows time-series variation in speed ratio and mode when the work vehicle 1 travels under the same condition as FIG. 28. FIG. 10 (b) exemplifies a case that the speed ratio of the work vehicle decreases with elapse of time, contrarily to FIG. 28.

As shown in FIG. 10, the first range RE1 includes a second range RE2 and a third range RE3. The second range RE2 is a range between the mode switching threshold Rs_th1 and a first upper limit UL1 that is the upper limit of the first range RE1. The third range RE3 is a range between the mode switching threshold Rs_th1 and a first lower limit LL1 that is the lower limit of the first range R1. As is obvious from FIGS. 10(a) and 10(b), the magnitude of the second range RE2 is different from that of the third range RE3. It should be noted that the aforementioned fourth range RE4 and the aforementioned fifth range RE5 are shown in FIGS. 10(a) and 10(b).

As shown in FIG. 10(a), at time t1, the transmission path is switched from the Lo mode to the Hi mode. In this case, the speed ratio falls into the second range RE2 immediately after the transmission path is switched from the Lo mode to the Hi mode. When the Hi mode is set after mode switching, a magnitude W1 of the second range RE2 is larger than a magnitude W2 of the third range RE3. In other words, when the fourth range RE4 is defined as the admissible range, the magnitude of the second range RE2 is larger than that of the third range RE3.

Additionally, as shown in FIG. 10(b), at time t1, the transmission path is switched from the Hi mode to the Lo mode. In this case, the speed ratio falls into the third range RE3 immediately after the transmission path is switched from the Hi mode to the Lo mode.

When the Lo mode is set after mode switching, a magnitude W4 of the third range is larger than a magnitude W3 of the second range. In other words, when the fifth range RE5 is defined as the admissible range, the magnitude of the third range RE3 is larger than that of the second range RE2. In this case, W1 and W4 may be equal to or different from each other, and W2 and W3 may be equal to or different from each other.

Next, with reference to drawings, an action of the clutch controlling unit 58 will be explained in detail. In FIG. 10(a), at or before time t0 prior to time t1, the speed ratio is lower than a lower limit Rs_th1-W4 of the first range in the Lo mode. Then, at time t1, the speed ratio has increased to the mode switching threshold Rs_th1. Accordingly, at time t1, the clutch controlling unit 58 switches the power transmission 24 from the Lo mode to the Hi mode. In other words, at time t1, the clutch controlling unit 58 outputs a clutch command signal for disengaging the L clutch CL to the L clutch control valve VL and outputs a clutch command signal for engaging the H clutch CH to the H clutch control valve VH. The speed ratio falls into the second range RE2 immediately after the transmission path is switched from the Lo mode to the Hi mode.

At or after time t1, even when the speed ratio again reaches the mode switching threshold Rs_th1, the clutch controlling unit 58 keeps setting the transmission path in the Hi mode as long as the speed ratio transitions within the first range RE1. In a period from time t2 to time t3, the speed ratio is lower than the mode switching threshold Rs_th1, but falls into the third range RE3. Hence, the clutch controlling unit 58 keeps setting the transmission path in the Hi mode without switching the transmission path into the Lo mode.

At time t4, the speed ratio becomes higher than the first upper limit UL1. In other words, the speed ratio becomes higher than the second range RE2 after the transmission path is switched from the Lo mode to the Hi mode. It should be noted that at time t4, the transmission path is set in the Hi mode, and hence, the fourth range is defined as the admissible range and the speed ratio belongs to the admissible range. Therefore, the clutch controlling unit 58 determines that mode switching is not required. Then, the clutch controlling unit 58 keeps setting the transmission path in the Hi mode in a period that the speed ratio is higher than the mode switching threshold, i.e., in a period from time t4 to time t5.

Once the speed ratio becomes higher than the first upper limit UL1, the clutch controlling unit 58 switches the transmission path into the Lo mode at time t5 that the speed ratio again reaches the mode switching threshold Rs_th1 the next time. That is, the clutch controlling unit 58 outputs a clutch command signal for disengaging the H clutch CH and outputs a clutch command signal for engaging the L clutch CL. In other words, to switch the transmission path into the first mode, the clutch controlling unit 58 outputs a clutch command signal for disengaging the second clutch and outputs a clutch command signal for engaging the first clutch. Here, the first mode corresponds to the Lo mode, the second clutch corresponds to the H clutch CH, and the first clutch corresponds to the L clutch CL.

In FIG. 10(b), at or before time t0 prior to time t1, the speed ratio is higher than an upper limit Rs_th1+W1 of the first range in the Hi mode. Then, at time t1, the speed ratio has decreased to the mode switching threshold Rs_th1. Accordingly, at time t1, the clutch controlling unit 58 switches the power transmission 24 from the Hi mode to the Lo mode. In other words, at time t1, the clutch controlling unit 58 outputs the clutch command signal for disengaging the H clutch CH to the H clutch control valve VH and outputs the clutch command signal for engaging the L clutch CL to the L clutch control valve VL. The speed ratio falls into the third range RE3 immediately after the transmission path is switched from the Hi mode to the Lo mode.

At or after time t1, even when the speed ratio again reaches the mode switching threshold Rs_th1, the clutch controlling unit 58 keeps setting the transmission path in the Hi mode as long as the speed ratio transitions within the first range RE1. In a period from time t2 to time t3, the speed ratio is higher than the mode switching threshold Rs_th1, but falls into the second range RE2. Hence, the clutch controlling unit 58 keeps setting the transmission path in the Lo mode without switching the transmission path into the Hi mode.

At time t4, the speed ratio becomes lower than the first lower limit LL1. In other words, the speed ratio becomes lower than the third range RE3 after the transmission path is switched from the Hi mode to the Lo mode. It should be noted that at time t4, the transmission path is set in the Lo mode, and hence, the fifth range is defined as the admissible range and the speed ratio belongs to the admissible range. Therefore, the clutch controlling unit 58 determines that mode switching is not required. Then, the clutch controlling unit 58 keeps setting the transmission path in the Hi mode in a period that the speed ratio is lower than the mode switching threshold, i.e., in a period from time t4 to time t5.

Once the speed ratio becomes lower than the first lower limit LL1, the clutch controlling unit 58 switches the transmission path into the Hi mode at time t5 that the speed ratio again reaches the mode switching threshold Rs_th1 the next time. That is, the clutch controlling unit 58 outputs the clutch command signal for disengaging the L clutch CL and outputs the clutch command signal for engaging the H clutch CH. In other words, to switch the transmission path into the first mode, the clutch controlling unit 58 outputs the clutch command signal for disengaging the second clutch and outputs the clutch command signal for engaging the first clutch. Here, the first mode corresponds to the Hi mode, the second clutch corresponds to the L clutch CL, and the first clutch corresponds to the H clutch CH.

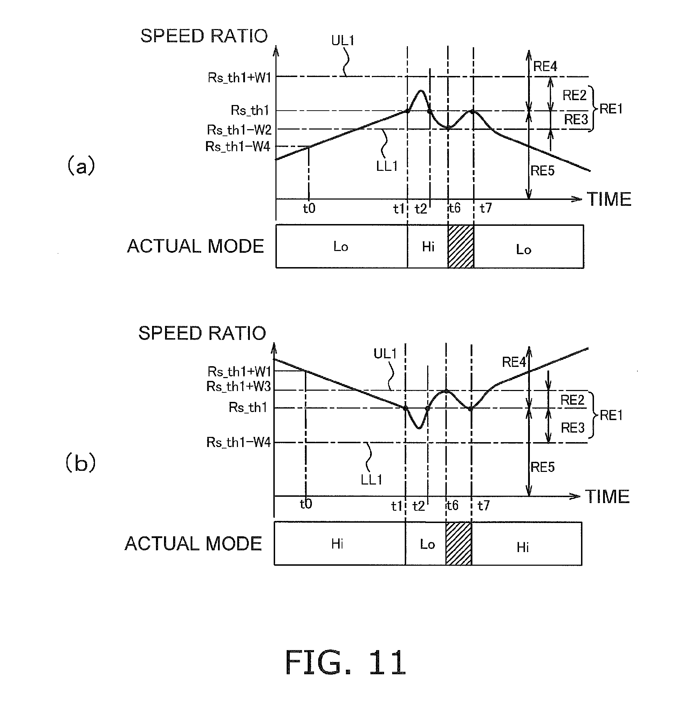

FIG. 11 includes charts respectively showing another example of time-series variation in speed ratio and mode of the work vehicle 1 according to the first exemplary embodiment. FIG. 11(a) shows time-series variation in speed ratio and mode when the work vehicle 1 travels by temporarily increasing the speed ratio. FIG. 11(b) shows time-series variation in speed ratio and mode when the work vehicle 1 travels by temporarily decreasing the speed ratio.

In FIG. 11(a), at or before time t0 prior to time t1, the speed ratio is lower than the lower limit Rs_th1-W4 of the first range in the Lo mode. Then, at time t1, the speed ratio has increased to the mode switching threshold Rs_th1. Accordingly, at time t1, the clutch controlling unit 58 switches the transmission path from the Lo mode to the Hi mode. In other words, at time t1, the clutch controlling unit 58 outputs the clutch command signal for disengaging the L clutch CL to the L clutch control valve VL and outputs the clutch command signal for engaging the H clutch CH to the H clutch control valve VH. The speed ratio falls into the second range immediately after the transmission path is switched from the Lo mode to the Hi mode.

At or after time t1, even when the speed ratio again reaches the mode switching threshold Rs_th1, the clutch controlling unit 58 keeps setting the transmission path in the Hi mode as long as the speed ratio transitions within the first range RE1. In a period from time t2 to time t6, the speed ratio is lower than the mode switching threshold Rs_th1, but falls into the third range RE3. Hence, the clutch controlling unit 58 keeps setting the transmission path in the Hi mode without changing the transmission path into the Lo mode.

At time t6, the speed ratio becomes lower than the first lower limit LL1. In other words, the transmission path is switched from the Lo mode to the Hi mode, and then at time t6, the speed ratio becomes lower than the third range RE3. That is, the speed ratio deviates from the first range RE1 and also belongs to the inadmissible range. In response to this, the clutch controlling unit 58 outputs the clutch command signal for engaging the L clutch CL. In a period from time t6 to time t7, the H clutch CH and the L clutch CH are both engaged, and hence, the transmission path is set in neither the Hi mode nor the Lo mode. Therefore, the actual mode is shown with hatching in the period from time t6 to time t7. When the H clutch CH and the L clutch CH are both engaged, the speed ratio is acutely returned to the mode switching threshold Rs_th1. Due to this, the speed ratio reaches the mode switching threshold Rs_th1 at time t7. The aforementioned action can be differently expressed as follows: where the fourth range is defined as the admissible range, the clutch controlling unit 58 outputs the clutch command signal for engaging the first clutch so as to make the speed ratio reach the mode switching threshold when the speed ratio becomes lower than the third range RE3 after the transmission path is switched from the first mode to the second mode. Here, the first mode corresponds to the Lo mode, the second mode corresponds to the Hi mode, and the first clutch corresponds to the L clutch CL.

It should be noted that in the period from time t6 to time t7, the clutch controlling unit 58 may output a clutch command signal for engaging the L clutch CL without making the L clutch CL slip so as to quickly return the speed ratio to the mode switching threshold Rs_th1. Alternatively, in the period from time t6 to time t7, the clutch controlling unit 58 may engage the L clutch CL while the L clutch CL slips (in a so-called half clutch state), and subsequently, output the clutch command signal for engaging the L clutch CL without making the L clutch CL slip after the relative rotational speed of the L clutch CL falls into a predetermined speed range. Accordingly, shocks of the vehicle body can be alleviated. Furthermore, instead of the clutch controlling unit 58 outputting the clutch command signal for engaging the L clutch CL, the motor controlling unit 55 may regulate the rotational speed of the motor MG1, MG2 so as to return the speed ratio to the mode switching threshold Rs_th1. It is preferable to set the magnitude W2 of the third range RE3 so as not to increase shocks of the vehicle body even when the aforementioned three actions (especially, the first one of the actions) are performed. It should be noted that when the rotational speed of the motor MG1, MG2 is regulated so as to return the speed ratio to the mode switching threshold Rs_th1, the hatched region in the actual mode of the transmission path is set as the Hi mode.

Next, at time t7 that the speed ratio reaches the mode switching threshold Rs_th1, the clutch controlling unit 58 switches the transmission path into the Lo mode. That is, the clutch controlling unit 58 outputs the clutch command signal for disengaging the H clutch CH. In other words, when the speed ratio becomes the mode switching threshold Rs_th1, the clutch controlling unit 58 outputs the clutch command signal for disengaging the second clutch so as to switch the transmission path into the first mode. Here, the first mode corresponds to the Lo mode, and the second clutch corresponds to the H clutch CH.

In FIG. 11(b), at or before time t0 prior to time t1, the speed ratio is higher than the upper limit Rs_th1+W1 of the first range in the Hi mode. Then at time t1, the speed ratio has decreased to the mode switching threshold Rs_th1. Accordingly, at time t1, the clutch controlling unit 58 switches the power transmission 24 from the Hi mode to the Lo mode. In other words, at time t1, the clutch controlling unit 58 outputs the clutch command signal for disengaging the H clutch CH to the H clutch control valve VH and outputs the clutch command signal for engaging the L clutch CL to the L clutch control valve VL. The speed ratio falls into the third range RE3 immediately after the transmission path is switched from the Hi mode to the Lo mode.

At or after time t1, even when the speed ratio again reaches the mode switching threshold Rs_th1, the clutch controlling unit 58 keeps setting the transmission path in the Hi mode as long as the speed ratio transitions within the first range RE1. In a period from time t2 to time t6, the speed ratio is higher than the mode switching threshold Rs_th1, but falls into the second range RE2. Hence, the clutch controlling unit 58 keeps setting the transmission path in the Lo mode without switching the transmission path into the Hi mode.

At time t6, the speed ratio becomes higher than the first upper limit UL1. That is, the transmission path is switched from the Hi mode to the Lo mode, and then at time t6, the speed ratio becomes higher than the second range RE2. In other words, the speed ratio deviates from the first range RE1, and also, belongs to the inadmissible range. In response to this, the clutch controlling unit 58 outputs the clutch command signal for engaging the H clutch CH. In a period from time t6 to time t7, the H clutch CH and the L clutch CH are both engaged, and hence, the transmission path is set in neither the Hi mode nor the Lo mode. Therefore, the actual mode is shown with hatching in the period from time t6 to time t7. When the H clutch CH and the L clutch CH are both engaged, the speed ratio is acutely returned to the mode switching threshold Rs_th1. Accordingly, the speed ratio reaches the mode switching threshold Rs_th1 at time t7. The aforementioned action can be differently expressed as follows: where the fifth range is defined as the admissible range, the clutch controlling unit 58 outputs the clutch command signal for engaging the first clutch so as to make the speed ratio reach the mode switching threshold when the speed ratio becomes higher than the second range RE2 after the transmission path is switched from the first mode to the second mode. Here, the first mode corresponds to the Hi mode, the second mode corresponds to the Lo mode, and the first clutch corresponds to the H clutch CH.

It should be noted that in the period from time t6 to time t7, the clutch controlling unit 58 may output the clutch command signal for engaging the L clutch CL without making the L clutch CL slip so as to quickly return the speed ratio to the mode switching threshold Rs_th1. Alternatively, in the period from time t6 to time t7, the clutch controlling unit 58 may engage the L clutch CL while the L clutch CL slips (in the so-called half clutch state), and subsequently, output the clutch command signal for engaging the L clutch CL without making the L clutch CL slip after the relative rotational speed of the two rotational shafts of the L clutch CL falls into a predetermined speed range. Accordingly, shocks of the vehicle body can be alleviated. Furthermore, instead of the clutch controlling unit 58 outputting the clutch command signal for engaging the L clutch CL, the motor controlling unit 55 may regulate the rotational speed of the motor MG1, MG2 so as to return the speed ratio to the mode switching threshold Rs_th1. It is preferable to set the magnitude W3 of the second range RE2 so as not to increase shocks of the vehicle body even when the aforementioned three actions (especially, the first one of the actions) are performed. It should be noted that when the rotational speed of the motor MG1, MG2 is regulated so as to return the speed ratio to the mode switching threshold Rs_th1, the hatched region in the actual mode of the transmission path is set as the Lo mode.

Next, at time t7 that the speed ratio reaches the mode switching threshold Rs_th1, the clutch controlling unit 58 switches the transmission path into the Hi mode. That is, the clutch controlling unit 58 outputs the clutch command signal for disengaging the L clutch CL. In other words, when the speed ratio becomes the mode switching threshold Rs_th1, the clutch controlling unit 58 outputs the clutch command signal for disengaging the second clutch so as to switch the transmission path into the first mode. Here, the first mode corresponds to the Hi mode, and the second clutch corresponds to the L clutch CL.

<Second Exemplary Embodiment>

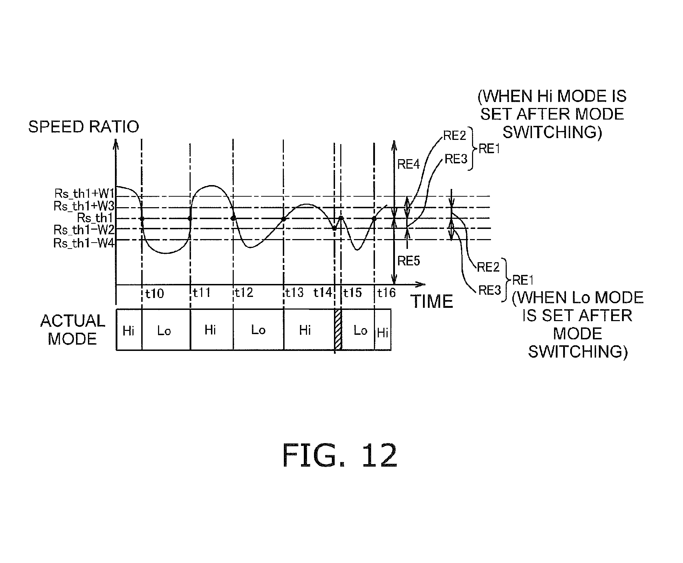

When the speed ratio of the work vehicle 1 continues to greatly fluctuate around the mode switching threshold, the speed ratio may deviate from the first range RE1 in every fluctuation, thereby even the controller 27 according to the first exemplary embodiment may frequently perform mode switching. FIG. 12 is a chart showing such a condition, and shows yet another example of time-series variation in speed ratio and mode of the work vehicle 1 according to the first exemplary embodiment. In the example of FIG. 12, a period from time t10 to time t11 includes a period that the speed ratio is lower than the lower limit Rs_th-W4 of the first range RE1 in the Lo mode. Therefore, at time t11, the clutch controlling unit 58 switches the transmission path from the Lo mode to the Hi mode. Then, a period from time t11 to time t12 includes a period that the speed ratio is higher than the upper limit Rs_th1+W1 of the first range RE1 in the Hi mode. Therefore, at time t12, the clutch controlling unit 58 switches the transmission path from the Hi mode to the Lo mode. Similarly at time t13, the clutch controlling unit 58 switches the transmission path from the Lo mode to the Hi mode due to a similar reason to mode switching at time t11. A period from time t13 to time t14 includes no period that the speed ratio is higher than the upper limit Rs_th1+W1 of the first range RE1 in the Hi mode. However, at time t14, the speed ratio reaches a lower limit Rs_th1-W2 of the first range RE1 in the Hi mode. Hence, the clutch controlling unit 58 engages both of the H clutch CH and the L clutch CH in a period from time t14 to time t15 so as to return the speed ratio to the mode switching threshold Rs_th1. Then, at time t15, the clutch controlling unit 58 disengages the H clutch CH so as to switch the transmission path into the Lo mode. At time t16, the clutch controlling unit 58 switches the transmission path from the Lo mode to the Hi mode due to a similar reason to mode switching at time t11 and that at time t13.

To prevent such an action, presetting the first range RE1 wide can be considered as a countermeasure. However, when the first range RE1 is set wide, large shocks inevitably occur in the action performed from time t6 to time t7 in FIG. 11 (the action of engaging both of the Hi clutch and the Lo clutch in restoring the speed ratio to the mode switching threshold Rs_th1). In view of the above, a controller 27a according to the second exemplary embodiment is configured to set the first range RE1 narrow in a normal operation, and is configured to set the first range RE1 wide when the speed ratio fluctuates and frequently deviates from the first range RE1 in a short period of time, thereby causing hunting.

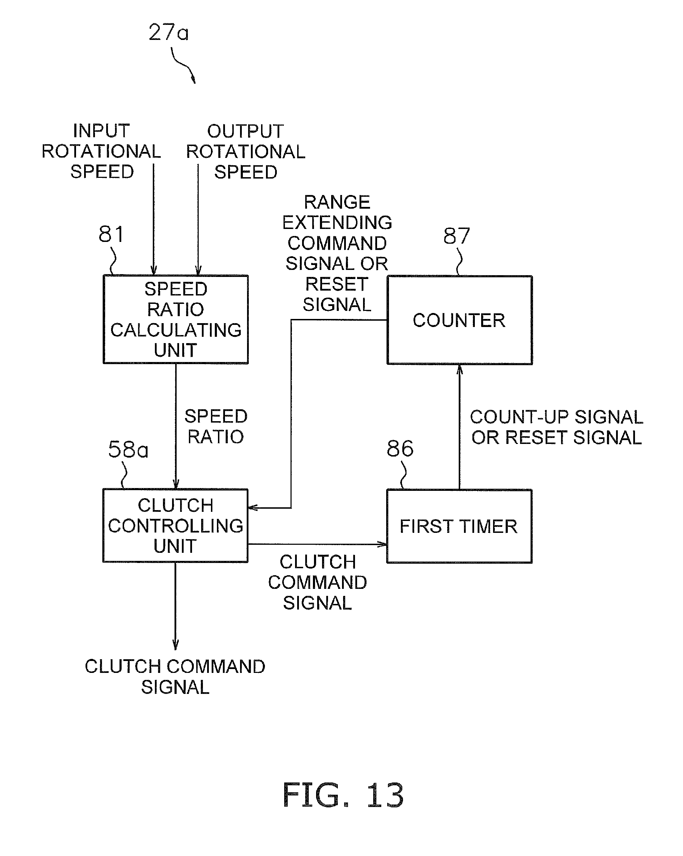

FIG. 13 is a block diagram showing a detailed internal structure of the controller 27a according to the second exemplary embodiment. As shown in FIG. 13, the controller 27a further includes a first timer 86 and a counter 87. Similarly in FIG. 13, the storage unit 56 is not shown. Similarly in the second exemplary embodiment, the engine controlling unit 50 and the motor controlling unit 55 are not required to perform peculiar actions according to the present exemplary embodiment, and hence, are also not shown. In the second exemplary embodiment, the action of the speed ratio calculating unit 81 is the same as that in the first exemplary embodiment. Therefore, the action of the speed ratio calculating unit 81 will not be explained.

The first timer 86 is configured to receive a clutch command signal inputted thereto from a clutch controlling unit 58a, and is configured to measure a first time length D1 elapsed after the transmission path is switched from a given mode to another mode among a plurality of modes including the first mode and the second mode. Here, the first mode corresponds to one of the Hi and Lo modes whereas the second mode corresponds to the other of the Hi and Lo modes. Specifically, the first timer 86 is configured to measure a time length D11 elapsed after the transmission path is switched from the Lo mode to the Hi mode and a time length D12 elapsed after the transmission path is switched from the Hi mode to the Lo mode. The first time length D1 is a genus that includes both of the time length D11 and the time length D12.

When the transmission path is switched from a given mode to another mode before the time length D1 reaches a preliminarily set first threshold Dth, the first timer 86 is configured to output a count-up signal to the counter 87. On the other hand, when the transmission path is switched from a given mode to another mode after the time length D1 becomes the first threshold Dth or greater, the first timer 86 is configured to output a reset signal to the counter 87. The first threshold Dth is stored in the storage unit 56.

The counter 87 is configured to receive the count-up signal inputted thereto from the first timer 86, and is configured to count a number of switching Cn at which the transmission path is switched from a given mode to another mode before the first time length D1 reaches the first threshold Dth. The number of switching Cn will be referred to also as a count value. When the count value Cn exceeds a predetermined second threshold Cth, the counter 87 is configured to output a range extending command signal for extending the first range RE1 to the clutch controlling unit 58a. The second threshold Cth is stored in the storage unit 56.

Furthermore, when the reset signal is inputted into the counter 87 from the first timer 86, the counter 87 is configured to restore the count value Cn to its initial value. This means, in case the initial value is 0, when the reset signal is inputted into the counter 87 from the first timer 86, the counter 87 restores the count value Cn to 0. In other words, the counter 87 is configured to reset the number of switching Cn when the transmission path is switched from a given mode to another mode after the time length D1 becomes the first threshold Dth or greater. When the reset signal is inputted into the counter 87 from the first time 86, the counter 87 is configured to output a reset signal for resetting the first range RE1.

The clutch controlling unit 58a has the following functions in addition to those of the clutch controlling unit 58 in the first exemplary embodiment. When the range extending command signal is inputted into the clutch controlling unit 58a from the counter 87, the clutch controlling unit 58a is configured to extend the first range RE1 to be wider than a predetermined initial range RE1_0. In other words, when the number of switching Cn exceeds the predetermined second threshold Cth, the clutch controlling unit 58a is configured to extend the first range RE1 to be wider than the predetermined initial range RE1_0. Furthermore, when the reset signal is inputted into the clutch controlling unit 58a from the counter 87, the clutch controlling unit 58a is configured to restore the first range RE1 to the initial range RE1_0. In other words, the clutch controlling unit 58a is configured to restore the first range RE1 to the initial range RE1_0 when the transmission path is switched from a given mode to another mode after the time length D1 becomes the first threshold Dth or greater.

It should be noted that the clutch controlling unit 58a may be configured to extend the first range RE1 by extending both of the magnitude of the second range RE2 and that of the third range RE3. Alternatively, the clutch controlling unit 58a may be configured to extend the first range RE1 by extending only either of the second range RE2 and the third range RE3.

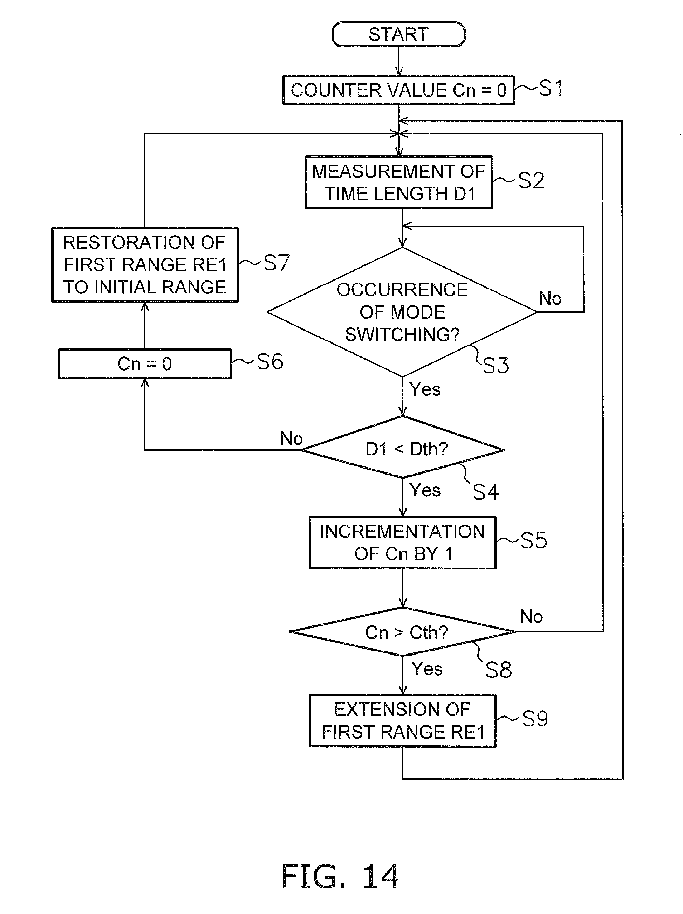

Next, an action of the controller 27a according to the second exemplary embodiment will be explained in detail with drawings. FIG. 14 is a flowchart showing an exemplary action of the controller according to the second exemplary embodiment.

First, When the work vehicle 1 is activated, the counter 87 sets the count value Cn to be 0 (Step S1). At this time, the transmission path of the power transmission 24 has been set in the Lo mode. Next, the first timer 86 measures the time length D1 elapsed from the activation to mode switching of the work vehicle 1 (Step S2). It should be noted that in Step S2, once mode switching occurs (Yes in Step S3), the first timer 86 measures the time length D1 elapsed from occurrence of the mode switching to occurrence of the subsequent mode switching.

The first timer 86 measures the time length D1 unless mode switching is performed by the clutch controlling unit 58a (No in Step S3). Then in Step S3, when mode switching is performed by the clutch controlling unit 58a (Yes in Step S3), the first timer 86 determines whether or not the measured time length D1 is less than the first threshold Dth (Step S4). When the measured time length D1 is less than the first threshold Dth (Yes in Step S4), the first timer 86 outputs the count-up signal to the counter 87, and in turn, the counter 87 increments the count value Cn by 1 (Step S5). When the measured time length D1 is greater than or equal to the first threshold Dth (No in Step S4), the first timer 86 outputs the reset signal to the counter 87, and in turn, the counter 87 resets the count value Cn to 0 (Step S6). In other words, the counter 87 restores the count value Cn to its initial value. Then, the counter 87 outputs the reset signal to the clutch controlling unit 58a, and in turn, the clutch controlling unit 58a restores the first range RE1 to its initial range (Step S7).

After Step S5, the counter 87 determines whether or not the count value Cn exceeds the second threshold Cth (Step S8). When the count value Cn exceeds the second threshold Cth (Yes in Step S8), the counter 87 outputs the range extending command signal to the clutch controlling unit 58a, and in turn, the clutch controlling unit 58a extends the first range RE1 (Step S9). It is preferable that extension of the first range RE1 is configured not to be performed at a preliminarily set frequency or greater. However, extension of the first range RE1 may be performed at an unlimited frequency. A method of extending the first range RE1 will be explained below in detail. When Step S9 is performed, the processing returns to Step S2. It should be noted that when the count value Cn is less than or equal to the second threshold Cth (No in Step S8), the processing similarly returns to Step S2.

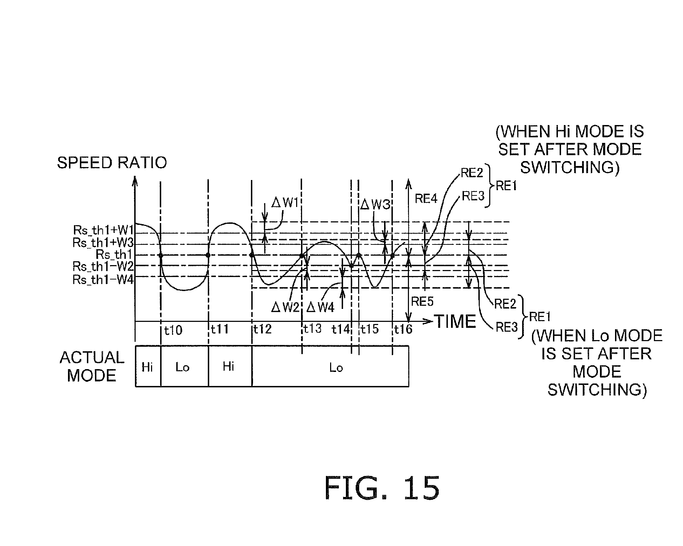

FIG. 15 is a chart showing an example of time-series variation in speed ratio and mode of the work vehicle 1 according to the second exemplary embodiment. FIG. 15 illustrates an example that the speed ratio varies similarly to FIG. 12. In the example of FIG. 15, let the count value Cn be 0 at time t10 and the first range RE1 set to be the initial range RE1_0. Additionally, let the second threshold Cth be 1. In FIG. 15, dashed dotted lines indicate the upper limit and the lower limit of the initial range RE1_0 (respectively set to be the upper limit Rs_th1+W1 and the lower limit Rs_th1-W2 in the Hi mode and be an upper limit Rs_th1+W3 and a lower limit Rs_th2-W4 in the Lo mode). In FIG. 15, on the other hand, dashed lines indicate the first range RE extended from the initial range RE1_0 (also referred to as an extended first range RE_1 in the following explanation).

The upper limit of the second range RE2 in the Hi mode is set to be higher than Rs_th1+W1 by $\Delta$W1. The lower limit of the third range RE3 in the Hi mode is set to be lower than Rs_th1-W2 by $\Delta$W2. The upper limit of the second range RE2 in the Lo mode is set to be higher than Rs_th1+W3 by $\Delta$W3. The lower limit of the third range RE3 in the Lo mode is set to be lower than Rs_th1-W4 by $\Delta$W4. It is preferable to set values of $\Delta$W1, $\Delta$W2, $\Delta$W3 and $\Delta$W4 such that $\Delta$W1:$\Delta$W2:$\Delta$W3:$\Delta$W4=W1:W2:W3:W is established. It should be noted that values allocated to $\Delta$W1, $\Delta$W2, $\Delta$W3 and $\Delta$W4 may be equal. Alternatively, to alleviate shocks in such a case in FIG. 11, $\Delta$W2=$\Delta$W3=0 may be established. The mode switching threshold Rs_th1, W1 to W4, and $\Delta$W1 to $\Delta$W4 are stored in the storage unit 56. Additionally, FIG. 15 illustrates an example that the first range RE1 has two types of ranges composed of the initial range RE1_0 and the extended first range RE_1. However, the first range RE1 may have three or more types of ranges, and W1 to W4 and $\Delta$W1 to $\Delta$W4, which are sufficient to define the first range in three or more types, may be stored in the storage unit 56.

In the example of FIG. 15, when the time length from time t10 to time t11 and the time length from time t11 to time t12 are both shorter than the first threshold Dth, the count value Cn is set to be 2 at time t12 (Yes in Step S8 of FIG. 14), and the first range RE1 is extended at or after time t12 (Step S9 of FIG. 14). As a result, from time t12 to time t16, the speed ratio falls into a range from the lower limit Rs_th-W4-$\Delta$W4 to the upper limit Rs_th1+W3+$\Delta$W3 in the Lo mode. Hence, the clutch controlling unit 58a keeps the transmission path in the Lo mode. It should be noted that when exceeding the upper limit of the extended first range RE_1 at or after time t16, the speed ratio is returned to the mode switching threshold Rs_th1 (time t17 is herein set as a time at which the speed ratio is returned to the mode switching threshold Rs_th1), and the clutch controlling unit 58a switches the transmission path from the Lo mode to the Hi mode, the counter 87 resets the counter value Cn to 0 (Step S6 of FIG. 14), and furthermore, the clutch controlling unit 58a restores the first range RE1 to the initial range RE1_0 (Step S7 of FIG. 14). The aforementioned procedure is also true of a case that at or after time t16, the speed ratio becomes lower than the lower limit of the extended first range RE_1 and then returns to the mode switching threshold Rs_th1.

As is obvious from FIG. 15, the controller 27a according to the second exemplary embodiment is capable of inhibiting occurrence of hunting even when the speed ratio fluctuates and frequently deviates from the first range RE1 in a short period of time.

<Third Exemplary Embodiment>

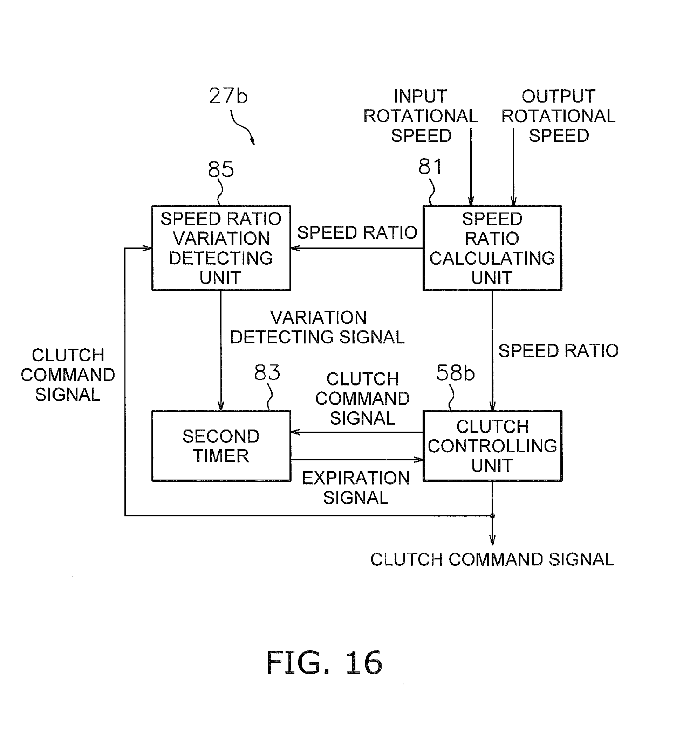

FIG. 16 is a block diagram showing a detailed internal structure of a controller 27b according to a third exemplary embodiment. As shown in FIG. 16, the controller 27b further includes a second timer 83 and a speed ratio variation detecting unit 85. Similarly in FIG. 16, the storage unit 56 is not shown. In the third exemplary embodiment, the engine controlling unit 50 and the motor controlling unit 55 are not also required to perform peculiar actions according to the embodiment, and hence, are also not shown. In the third exemplary embodiment, the action of the speed ratio calculating unit 81 is the same as that in the first exemplary embodiment. Therefore, the action of the speed ratio calculating unit 81 will not be explained.

The second timer 83 is configured to receive a clutch command signal inputted thereto from a clutch controlling unit 58b and measure a second time length D2 elapsed after the transmission path is switched from a given mode to another mode among the plural modes including the first mode and the second mode. Here, the first mode corresponds to one of the Hi and Lo modes whereas the second mode corresponds to the other of the Hi and Lo modes. Specifically, the second timer 83 is configured to measure a time length D21 elapsed after the transmission path is switched from the Lo mode to the Hi mode and a time length D22 elapsed after the transmission path is switched from the Hi mode to the Lo mode. The second time length D2 is a genus that includes both of the time length D21 and the time length D22.

When the time length D2 reaches a preliminarily set initial value De and thus a switching prohibition period set by the initial value De expires, the second timer 83 is configured to output an expiration signal to the clutch controlling unit 58b. It should be noted that when a variation detecting signal is inputted into the second timer from the speed ratio variation detecting unit 85 to be described, the second timer is configured to make the switching prohibition period forcibly expire by reducing the switching prohibition period from its initial value De, and is configured to output the expiration signal to the clutch controlling unit 58b.

The speed ratio variation detecting unit 85 is configured to receive the clutch command signal inputted thereto from the clutch controlling unit 58b, and is then configured to determine whether or not the speed ratio transitions within a predetermined sixth range RE4 including the first range RE1 after the transmission path is switched from the first mode to the second mode. When the speed ratio deviates from the sixth range RE4, the speed ratio variation detecting unit 85 is configured to output the variation detecting signal to the second timer 83. When the variation detecting signal is inputted into the second timer 83, the second timer 83 is configured to make the switching prohibition period forcibly expire by reducing the switching prohibition period from its initial value De. Therefore, the second timer 83 is configured to make the switching prohibition period expire when the speed ratio deviates from the sixth range RE6.

The clutch controlling unit 58b has the following functions in addition to the functions of the clutch controlling unit 58 according to the first exemplary embodiment. The clutch controlling unit 58b is configured to output the clutch command signal for keeping the switched mode after mode switching is performed until receiving the expiration signal inputted thereto from the second timer 83. The second timer 83 is configured to output the expiration signal to the clutch controlling unit 58b either when the switching prohibition period set by the initial value De expires or when the switching prohibition period is made forcibly expire due to deviation of the speed ratio from the predetermined sixth range RE6 including the first range RE1. Therefore, when the second time length D2 is shorter than the switching prohibition period after the transmission path is switched from the first mode to the second mode, the clutch controlling unit 58b is configured to output the clutch command signal for disengaging the first clutch and output the clutch command signal for engaging the second clutch so as to keep setting the transmission path in the second mode as long as the speed ratio transitions within the predetermined sixth range RE6 including the first range RE1. Here, when the first mode corresponds to the Lo mode whereas the second mode corresponds to the Hi mode, the first clutch corresponds to the L clutch CL whereas the second clutch corresponds to the H clutch CH. When the first mode corresponds to the Hi mode whereas the second mode corresponds to the Lo mode, the first clutch corresponds to the H clutch CH whereas the second clutch corresponds to the L clutch CL.

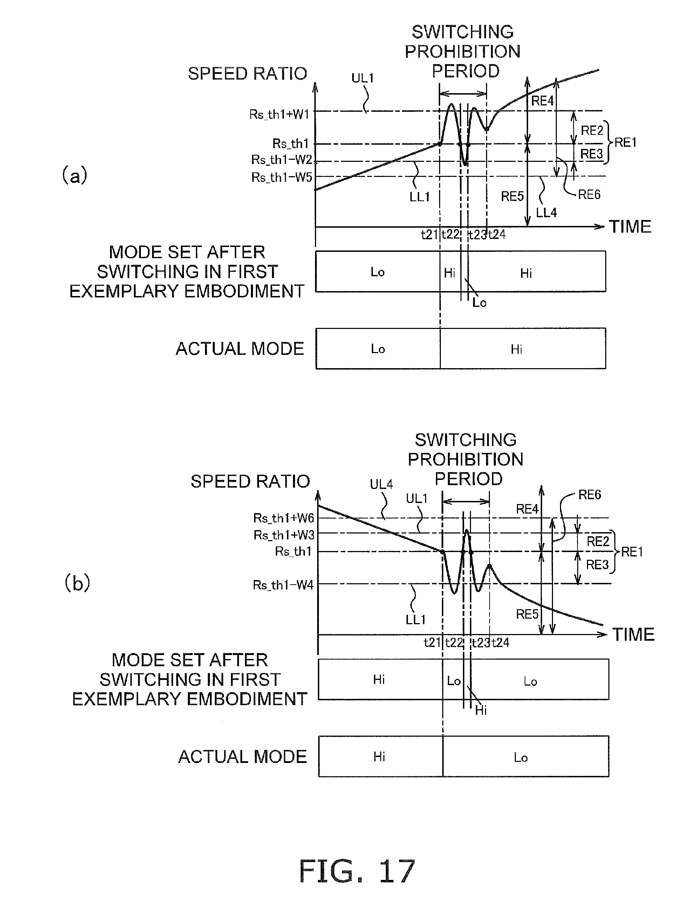

Next, the sixth range RE6 will be explained in detail with reference to drawings. FIG. 17 is a chart showing an example of time-series variation in speed ratio and mode of the work vehicle 1 according to the third exemplary embodiment. FIG. 17(a) exemplifies a case that the speed ratio of the work vehicle 1 increases with elapse of time. FIG. 17(b) exemplifies a case that the speed ratio of the work vehicle 1 decreases with elapse of time.

FIG. 17(a) shows the sixth range RE6 in the Hi mode. The sixth range RE6 in the Hi mode only has a lower limit Rs_th1-W5 and has no upper limit. In other words, when the transmission path is set in the Hi mode after mode switching (i.e., when the fourth range RE4 is defined as the admissible range), the sixth range RE6 is a range of higher than the sixth lower limit Rs_th1-W5 that is the lower limit of the sixth range RE6. A difference W5 between the mode switching threshold Rs_th1 and the sixth lower limit Rs_th1-W5 is larger than the magnitude W2 of the third range. Therefore, the sixth lower limit Rs_th1-W5 is lower than the first lower limit Rs_th1-W2.

FIG. 17(b) shows the sixth range RE6 in the Lo mode. The sixth range RE6 in the Lo mode has only an upper limit Rs_th1+W6 and has no lower limit. In other words, when the transmission path is set in the Lo mode after mode switching (i.e., when the fifth range RE5 is defined as the admissible range), the sixth range RE6 is a range of lower than the sixth upper limit Rs_th1+W6 that is the upper limit of the sixth range RE6. A difference W6 between the sixth upper limit Rs_th1+W6 and the mode switching threshold Rs_th1 is larger than the magnitude W3 of the second range. Therefore, the sixth upper limit Rs_th1+W6 is higher than the first upper limit Rs_th1+W3. The values W5 and W6 for setting the sixth range RE6 are stored in the storage unit 56.

Next, an action of the controller 27b will be explained in detail with reference to drawings. In the example of FIG. 17(a), let the transmission path be switched into the Hi mode at time t21. The speed ratio falls into the second range RE2 immediately after the transmission path is switched from the Lo mode to the Hi mode. Then, in a period from time t21 to time t22, the speed ratio becomes temporarily higher than the second range RE2. Therefore, the controller 27 according to the first exemplary embodiment is configured to switch the transmission path into the Lo mode at time t22 that the speed ratio has decreased to the mode switching threshold Rs_th1. Then, in a period from time t22 to time t23, the speed ratio becomes temporarily lower than the third range RE3. Therefore, the controller 27 according to the first exemplary embodiment is configured to switch the transmission path into the Hi mode at time t23 that the speed ratio has increased to the mode switching threshold Rs_th1.

However, even when the speed ratio deviates from the first range RE1 within the switching prohibition period (from time t21 to time t24), the controller 27b according to the third exemplary embodiment does not perform mode switching unless the speed ratio deviates from the sixth range RE6. Therefore, from time t21 to time t24, the clutch controlling unit 58b outputs the clutch command signal for disengaging the L clutch CL and the clutch command signal for engaging the H clutch CH so as to keep setting the transmission path in the Hi mode. In the example of FIG. 17(a), at time t24 that the switching prohibition period expires, the transmission path has been set in the Hi mode, and the speed ratio falls into the fourth range RE4 defined as the admissible range. Therefore, the clutch controlling unit 58b is not required to perform mode switching. At or after time t24, the clutch controlling unit 58b performs an action similar to that performed in the first exemplary embodiment.

In the example of FIG. 17(b), let the transmission path be switched into the Lo mode at time t21. The speed ratio falls into the third range RE3 immediately after the transmission path is switched from the Hi mode to the Lo mode. Then, in a period from time t21 to time t22, the speed ratio becomes temporarily lower than the third range RE2. Therefore, the controller 27 according to the first exemplary embodiment is configured to switch the transmission path into the Hi mode at time t22 that the speed ratio has increased to the mode switching threshold Rs_th1. Then, in a period from time t22 to time t23, the speed ratio becomes temporarily higher than the second range RE2. Therefore, the controller 27 according to the first exemplary embodiment is configured to switch the transmission path into the Lo mode at time t23 that the speed ratio has decreased to the mode switching threshold Rs_th1.

However, even when the speed ratio deviates from the first range RE1 within the switching prohibition period (from time t21 to time t24), the controller 27b of the third exemplary embodiment does not perform mode switching unless the speed ratio deviates from the sixth range RE6. Therefore, from time t21 to time t24, the clutch controlling unit 58b outputs the clutch command signal for disengaging the H clutch CH and output the clutch command signal for engaging the L clutch CL so as to keep setting the transmission path in the Lo mode. In the example of FIG. 17(b), at time t24 that the switching prohibition period expires, the transmission path has been set in the Lo mode, and the speed ratio falls into the fifth range RE5 herein defined as the admissible range. Therefore, the clutch controlling unit 58b is not required to perform mode switching. At or after time t24, the clutch controlling unit 58b performs an action similar to that performed in the first exemplary embodiment.

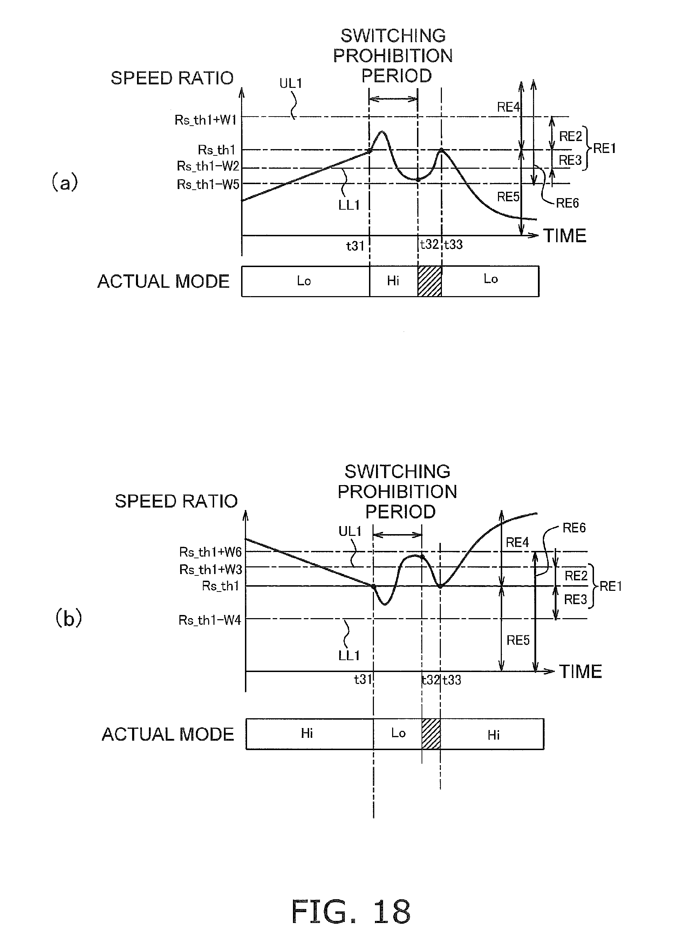

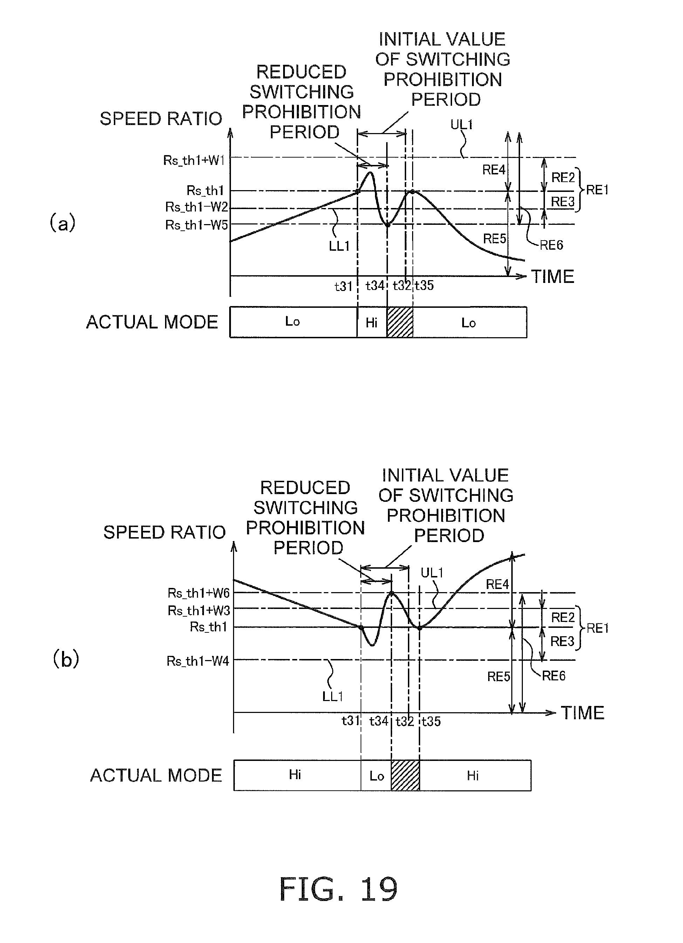

FIGS. 18 and 19 are charts showing other examples of time-series variation in speed ratio and mode of the work vehicle 1 according to the third exemplary embodiment. FIGS. 18(a) and 19(a) exemplify cases that the speed ratio temporarily increases and the transmission path is switched into the Hi mode. FIGS. 18(b) and 19(b) exemplify cases that the speed ratio temporarily decreases and the transmission path is switched into the Lo mode.

In the example of FIG. 18(a), let the transmission path be switched into the Hi mode at time t31. The speed ratio falls into the second range RE2 immediately after the transmission path is switched from the Lo mode to the Hi mode. In this case, in the switching prohibition period (from time t31 to time t32), the speed ratio becomes temporarily lower than the third range RE3. However, since the speed ratio transitions within the sixth range RE6, the controller 27b does not perform mode switching. Therefore, from time t31 to time t32, the clutch controlling unit 58b outputs the clutch command signal for disengaging the L clutch CL and outputs the clutch command signal for engaging the H clutch CH so as to keep setting the transmission path in the Hi mode. In the example of FIG. 18(a), at time t32 that the switching prohibition period expires, the transmission path has been set in the Hi mode, and the speed ratio is lower than the third range RE3. In other words, the speed ratio also deviates from the fourth range defined as the admissible range in the Hi mode. Therefore, the clutch controlling unit 58b outputs the clutch command signal for engaging the L clutch CL. In a period from time t32 to time t33, the H clutch CH and the L clutch CH are both engaged, and hence, the transmission path is set in neither the Hi mode nor the Lo mode. Therefore, the actual mode is shown with hatching in the period from time t32 to time t33. When the H clutch CH and the L clutch CH are both engaged, the speed ratio is acutely returned to the mode switching threshold Rs_th1. Accordingly, at time t33, the speed ratio reaches the mode switching threshold Rs_th1. The aforementioned action can be differently expressed as follows: when the speed ratio becomes lower than the third range RE3 after the transmission path is switched from the first mode to the second mode, the clutch controlling unit 58b outputs the clutch command signal for engaging the first clutch so as to make the speed ratio reach the mode switching threshold Rs_th1. Here, the aforementioned first mode corresponds to the Lo mode, the aforementioned second mode corresponds to the Hi mode, and the aforementioned first clutch corresponds to the L clutch CL.

It should be noted that in the period from time t32 to time t33, the clutch controlling unit 58b may output the clutch command signal for engaging the L clutch CL without making the L clutch CL slip so as to quickly return the speed ratio to the mode switching threshold Rs_th1. Alternatively, in the period from time t32 to time t33, the clutch controlling unit 58b may engage the L clutch CL while the L clutch CL slips (in the so-called half clutch state), and subsequently, output the clutch command signal for engaging the L clutch CL without making the L clutch CL slip (at a predetermined clutch pressure) after the relative rotational speed of the two rotational shafts of the L clutch CL falls into a predetermined speed range. Accordingly, shocks of the vehicle body can be alleviated. Furthermore, instead of the clutch controlling unit 58b outputting the clutch command signal for engaging the L clutch CL, the motor controlling unit 55 may regulate the rotational speed of the motor MG1, MG2 so as to return the speed ratio to the mode switching threshold Rs_th1. It should be noted that when the rotational speed of the motor MG1, MG2 is regulated so as to return the speed ratio to the mode switching threshold Rs_th1, the hatched region in the actual mode of the transmission path is set as the Hi mode.

Next, at time t33 that the speed ratio reaches the mode switching threshold Rs_th1, the clutch controlling unit 58b switches the transmission path into the Lo mode. That is, the clutch controlling unit 58b outputs the clutch command signal for disengaging the H clutch CH. In other words, the clutch controlling unit 58b outputs the clutch command signal for disengaging the second clutch so as to switch the transmission path into the first mode. Here, the aforementioned first mode corresponds to the Lo mode, and the aforementioned second clutch corresponds to the H clutch CH.

In the example of FIG. 18(b), let the transmission path be switched into the Lo mode at time t31. The speed ratio falls into the third range RE3 immediately after the transmission path is switched from the Hi mode to the Lo mode. In this case, in the switching prohibition period (from time t31 to time t32), the speed ratio becomes temporarily higher than the second range RE2. However, the speed ratio transitions within the sixth range RE6. Hence, the controller 27b does not perform mode switching. Therefore, from time t31 to time t32, the clutch controlling unit 58b outputs the clutch command signal for disengaging the H clutch CH and output the clutch command signal for engaging the L clutch CL so as to keep setting the transmission path in the Lo mode. In the example of FIG. 18(b), at time t32 that the switching prohibition period expires, the transmission path has been set in the Lo mode, and the speed ratio is higher than the second range RE2. In other words, the speed ratio also deviates from the fifth range defined as the admissible range in the Lo mode. Therefore, the clutch controlling unit 58b outputs the clutch command signal for engaging the H clutch CH. In a period from time t32 to time t33, the H clutch CH and the L clutch CH are both engaged, and hence, the transmission path is set in neither the Hi mode nor the Lo mode. Therefore, the actual mode is shown with hatching in the period from time t32 to time t33. When the H clutch CH and the L clutch CH are both engaged, the speed ratio is acutely returned to the mode switching threshold Rs_th1. Accordingly, at time t33, the speed ratio reaches the mode switching threshold Rs_th1. The aforementioned action can be differently expressed as follows: when the speed ratio becomes higher than the second range RE2 after the transmission path is switched from the first mode to the second mode, the clutch controlling unit 58b outputs the clutch command signal for engaging the first clutch so as to make the speed ratio reach the mode switching threshold Rs_th1. Here, the aforementioned first mode corresponds to the Hi mode, the aforementioned second mode corresponds to the Lo mode, and the aforementioned first clutch corresponds to the H clutch CH.

It should be noted that in the period from time t32 to time t33, the clutch controlling unit 58b may output a clutch command signal for engaging the H clutch CH without making the H clutch CH slip so as to quickly return the speed ratio to the mode switching threshold Rs_th1. Alternatively, in the period from time t32 to time t33, the clutch controlling unit 58b may engage the H clutch CH while the H clutch CH slips (in the so-called half clutch state), and subsequently, output the clutch command signal for engaging the H clutch CH without making the H clutch CH slip after the relative rotational speed of the two rotational shafts of the H clutch CH falls into a predetermined speed range. Accordingly, shocks of the vehicle body can be alleviated. Furthermore, instead of the clutch controlling unit 58b outputting the clutch command signal for engaging the H clutch CH, the motor controlling unit 55 may regulate the rotational speed of the motor MG1, MG2 so as to return the speed ratio to the mode switching threshold Rs_th1. It should be noted that when the rotational speed of the motor MG1, MG2 is regulated so as to return the speed ratio to the mode switching threshold Rs_th1, the hatched region in the actual mode of the transmission path is set as the Lo mode.

Next, at time t33 that the speed ratio reaches the mode switching threshold Rs_th1, the clutch controlling unit 58b switches the transmission path into the Hi mode. That is, the clutch controlling unit 58b outputs the clutch command signal for disengaging the L clutch CL. In other words, the clutch controlling unit 58b outputs the clutch command signal for disengaging the second clutch so as to switch the transmission path into the first mode. Here, the aforementioned first mode corresponds to the Hi mode, and the aforementioned second clutch corresponds to the L clutch CL.

In the example of FIG. 19(a), let the transmission path be switched into the Hi mode at time t31. The speed ratio falls into the second range RE2 immediately after the transmission path is switched from the Lo mode to the Hi mode. In this case, at time t34 included in the switching prohibition period (from time t31 to time t32), the speed ratio deviates from the sixth range RE6 in the Hi mode. In other words, at time t34, the speed ratio becomes lower than the lower limit Rs_th1-W5 of the sixth range RE6. Therefore, at time t34, the second timer 83 makes the switching prohibition period expire. At time t34 that the switching prohibition period expires, the transmission path has been set in the Hi mode. In other words, the fourth range RE4 is defined as the admissible range. Therefore, the speed ratio at time t34 belongs to the inadmissible range. Consequently, the clutch controlling unit 58b outputs the clutch command signal for engaging the L clutch CL. In a period from time t34 to time t35, the H clutch CH and the L clutch CH are both engaged, and hence, the transmission path is set in neither the Hi mode nor the Lo mode. Therefore, the actual mode is shown with hatching in the period from time t34 to time t35. When the H clutch CH and the L clutch CH are both engaged, the speed ratio is acutely returned to the mode switching threshold Rs_th1. Accordingly, at time t35, the speed ratio reaches the mode switching threshold Rs_th1. The aforementioned action can be differently expressed as follows: the clutch controlling unit 58b outputs the clutch command signal for engaging the first clutch so as to make the speed ratio reach the mode switching threshold Rs_th1. Here, the aforementioned first clutch corresponds to the L clutch CL.

It should be noted that in the period from time t34 to time t35, the clutch controlling unit 58b may output the clutch command signal for engaging the L clutch CL without making the L clutch CL slip so as to quickly return the speed ratio to the mode switching threshold Rs_th1. Alternatively, in the period from time t34 to time t35, the clutch controlling unit 58b may engage the L clutch CL while the L clutch CL slips (in the so-called half clutch state), and subsequently, output the clutch command signal for engaging the L clutch CL without making the L clutch CL slip after the relative rotational speed of the two rotational shafts of the L clutch CL falls into a predetermined speed range. Accordingly, shocks of the vehicle body can be alleviated. Furthermore, instead of the clutch controlling unit 58b outputting the clutch command signal for engaging the L clutch CL, the motor controlling unit 55 may regulate the rotational speed of the motor MG1, MG2 so as to return the speed ratio to the mode switching threshold Rs_th1. It should be noted that when the rotational speed of the motor MG1, MG2 is regulated so as to return the speed ratio to the mode switching threshold Rs_th1, the hatched region in the actual mode of the transmission path is set as the Hi mode.

Next, at time t35 that the speed ratio reaches the mode switching threshold Rs_th1, the clutch controlling unit 58b switches the transmission path into the Lo mode. That is, the clutch controlling unit 58b outputs the clutch command signal for disengaging the H clutch CH. In other words, the clutch controlling unit 58b outputs the clutch command signal for disengaging the second clutch so as to switch the transmission path into the first mode. Here, the aforementioned first mode corresponds to the Lo mode, and the aforementioned second clutch corresponds to the H clutch CH.

In the example of FIG. 19(b), let the transmission path be switched into the Lo mode at time t31. The speed ratio falls into the third range RE3 immediately after the transmission path is switched from the Hi mode to the Lo mode.

In this case, at time t34 included in the switching prohibition period (from time t31 to time t32), the speed ratio deviates from the sixth range RE6. In other words, at time t34, the speed ratio becomes higher than the upper limit Rs_th1+W6 of the sixth range RE6. Therefore, at time t34, the second timer 83 makes the switching prohibition period expire. At time t34 that the switching prohibition period expires, the transmission path has been set in the Lo mode. In other words, the fifth range RE5 is defined as the admissible range. Therefore, the speed ratio at time t34 belongs to the inadmissible range. Consequently, the clutch controlling unit 58b outputs the clutch command signal for engaging the H clutch CH. In a period from time t34 to time t35, the H clutch CH and the L clutch CH are both engaged, and hence, the transmission path is set in neither the Hi mode nor the Lo mode. Therefore, the actual mode is shown with hatching in the period from time t34 to time t35. When the H clutch CH and the L clutch CH are both engaged, the speed ratio is acutely returned to the mode switching threshold Rs_th1. Accordingly, at time t35, the speed ratio reaches the mode switching threshold Rs_th1. The aforementioned action can be differently expressed as follows: the clutch controlling unit 58b outputs the clutch command signal for engaging the first clutch so as to make the speed ratio reach the mode switching threshold Rs_th1. Here, the aforementioned first clutch corresponds to the H clutch CH.

It should be noted that in the period from time t34 to time t35, the clutch controlling unit 58b may output the clutch command signal for engaging the H clutch CH without making the H clutch CH slip so as to quickly return the speed ratio to the mode switching threshold Rs_th1. Alternatively, in the period from time t34 to time t35, the clutch controlling unit 58b may engage the H clutch CH while the H clutch CH slips (in the so-called half clutch state), and subsequently, output the clutch command signal for engaging the H clutch CH without making the H clutch CH slip after the relative rotational speed of the two rotational shafts of the H clutch CH falls into a predetermined speed range. Accordingly, shocks of the vehicle body can be alleviated. Furthermore, instead of the clutch controlling unit 58b outputting the clutch command signal for engaging the H clutch CH, the motor controlling unit 55 may regulate the rotational speed of the motor MG1, MG2 so as to return the speed ratio to the mode switching threshold Rs_th1. It should be noted that when the rotational speed of the motor MG1, MG2 is regulated so as to return the speed ratio to the mode switching threshold Rs_th1, the hatched region in the actual mode of the transmission path is set as the Hi mode.

Next, at time t35 that the speed ratio reaches the mode switching threshold Rs_th1, the clutch controlling unit 58b switches the transmission path into the Hi mode. That is, the clutch controlling unit 58b outputs the clutch command signal for disengaging the L clutch CL. In other words, the clutch controlling unit 58b outputs the clutch command signal for disengaging the second clutch so as to switch the transmission path into the first mode. Here, the aforementioned first mode corresponds to the Hi mode, and the aforementioned second clutch corresponds to the L clutch CL.

Thus, the switching prohibition period is set for the controller 27b according to the third exemplary embodiment. Hence, mode switching is inhibited from being performed even when, immediately after mode switching, torsion of shafts and backlash of gears occur due to shocks caused in clutch switching and thereby the speed ratio greatly fluctuates. Additionally, when the speed ratio deviates from the sixth range RE6, the controller 27b performs mode switching by making the switching prohibition period forcibly expire so as to rapidly return the speed ratio to the mode switching threshold Rs_th1. Accordingly, the speed ratio can be prevented from greatly fluctuating after expiration of the switching prohibition period, and shocks of the vehicle body can be alleviated in mode switching.

It should be noted that in the third exemplary embodiment, the controller 27b may include the first timer 86 and the counter 87 of the second exemplary embodiment, and may be configured to further perform the functions of the first timer 86, the counter 87 and the clutch controlling unit 58a. In this case, overlapping functions between the first timer 86 and the second timer 83 may be integrated.

<Fourth Exemplary Embodiment>

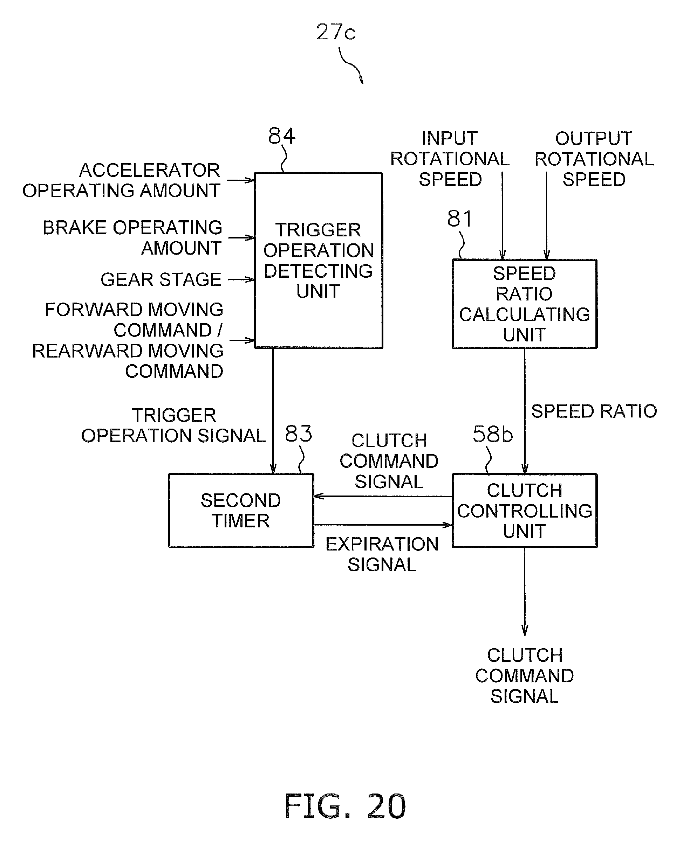

FIG. 20 is a block diagram showing a detailed internal structure of a controller 27c according to a fourth exemplary embodiment. As shown in FIG. 20, the controller 27c further includes a trigger operation detecting unit 84. Similarly in FIG. 20, the storage unit 56 is not shown. Similarly in the fourth exemplary embodiment, the engine controlling unit 50 and the motor controlling unit 55 are not required to perform peculiar actions according to the present exemplary embodiment, and hence, are also not shown. Similarly in the fourth exemplary embodiment, the action of the speed ratio calculating unit 81 is the same as that of the speed ratio calculating unit 81 in the first exemplary embodiment. The action of the clutch controlling unit 58b is the same as that of the clutch controlling unit 58b in the third exemplary embodiment. Furthermore, the action of a second timer 83c is also almost the same as the second timer of the third exemplary embodiment. Therefore, the action of the speed ratio calculating unit 81 and that of the clutch controlling unit 58b will not be explained, and part of the action of the second timer 83c, overlapping with part of the action of the second timer 83 in the third exemplary embodiment, will not be explained.

The trigger operation detecting unit 84 is configured to detect whether or not a predetermined operation has been performed by an operator on the basis of detection signals transmitted thereto from the operating device 26. In the following explanation, the predetermined operation will be referred to as a trigger operation. The following four operations are classified as the trigger operation:

(1) an operation of greatly changing the vehicle speed, which is specifically an operation of changing the operating amount of the brake operating member 59a (the brake operating amount) by a predetermined first amount of change ΔD1 or greater within the switching prohibition period;

(2) an operation of greatly changing the engine rotational speed, which is specifically an operation of changing the operating amount of the accelerator operating member 51a (the accelerator operating amount) by a predetermined second amount of change ΔD2 or greater within the switching prohibition period; and

(3) an operation of greatly changing the target traction force, which is specifically divided into (a) an operation of moving the forward/rearward movement switch operating member 54a to a different position from a position set at a point of time in mode switching within the switching prohibition period, and (b) an operation of operating the gearshift operating member 53a within the switching prohibition period in order to change into a different gear stage from a gear stage set at the point of time in mode switching, more specifically, either an operation of moving the shift range lever 531 to a different position from a position set at the point of time in mode switching within the switching prohibition period or an operation of pressing down the kick down button 532 within the switching prohibition period.

It should be noted that the aforementioned first amount of change ΔD1 and the aforementioned second amount of change ΔD2 are preliminarily set and stored in the storage unit 56. When detecting the trigger operation, the trigger operation detecting unit 84 is configured to output a trigger operation signal to the second timer 83c.

When the time length D2 reaches the preliminarily set initial value De and thus the switching prohibition period set by the initial value De expires, the second timer 83c is configured to output the expiration signal to the clutch controlling unit 58b. It should be noted that when the trigger operation signal is inputted into the second timer from the trigger operation detecting unit 84, the second timer is configured to reduce the switching prohibition period from the initial value De so as to make the switching prohibition period forcibly expire, and is configured to output the expiration signal to the clutch controlling unit 58b. In other words, the second timer 83c is configured to make the switching prohibition period expire when the trigger operation detecting unit 84 detects the predetermined operation.

The aforementioned actions (1) to (4) are respectively operations to be performed by an operator intending to greatly change the vehicle speed, such as pressing down the accelerator operating member, pressing down the brake operating member, switching between forward and rearward moving directions, and switching among the gear stages. In such a case, the second timer 83c is configured to make the switching prohibition period forcibly expire such that mode switching can be easily performed, and thereby, the controller 27c is capable of rapidly performing mode switching in accordance with operator's operational intention.

It should be noted that the action of the clutch controlling unit 58b to be performed after the switching prohibition period is reduced due to detection of any of the four trigger operations by the trigger operation detecting unit 84 is the same as that explained with FIGS. 18 and 19, and hence, will not explained in detail.

It should be noted that similarly in the fourth exemplary embodiment, the controller 27c may include the first timer 86 and the counter 87 according to the second exemplary embodiment, and may be configured to further perform the functions of the first timer 86, the counter 87 and the clutch controlling unit 58a. In this case, overlapping functions between the first timer 86 and the second timer 83 may be integrated. Additionally, the controller 27c may further have the function of the speed ratio variation detecting unit 85 according to the third exemplary embodiment.

<Fifth Exemplary Embodiment>

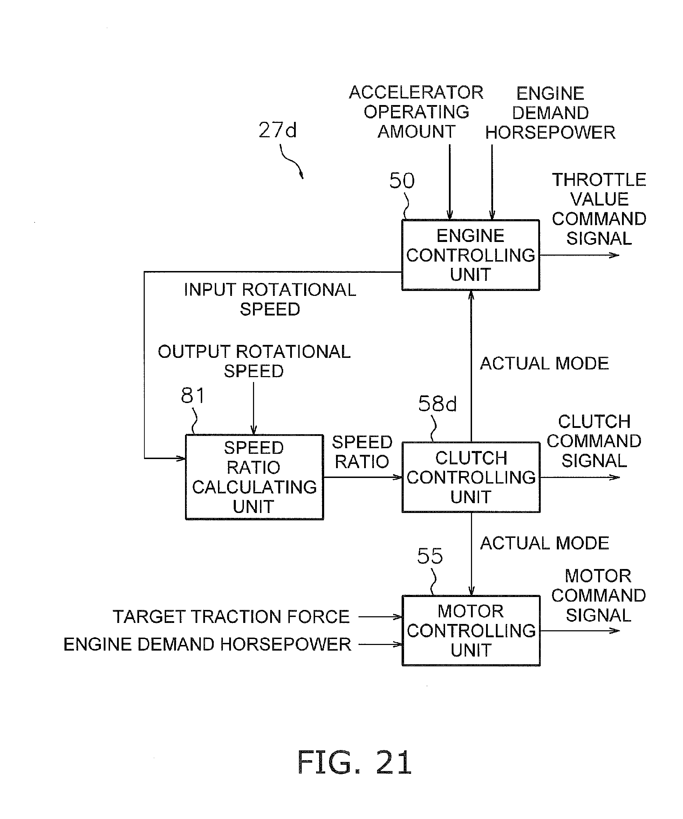

FIG. 21 is a block diagram showing a detailed internal structure of the controller 27c according to a fifth exemplary embodiment. In the fifth exemplary embodiment, the engine controlling unit 50 and the motor controlling unit 55 have peculiar actions. Hence, in FIG. 21, the engine controlling unit 50 and the motor controlling unit 55 are also shown. Similarly in FIG. 21, the storage unit 56 is not shown. In the fifth exemplary embodiment, the action of the speed ratio calculating unit 81 is the same as that of the speed ratio calculating unit 81 in the first exemplary embodiment. Additionally, the action of a clutch controlling unit 58d is also almost the same as that of the clutch controlling unit 58 in the first exemplary embodiment. Therefore, the action of the speed ratio calculating unit 81 will not be explained, and part of the action of the clutch controlling unit 58d, overlapping with part of the action of the clutch controlling unit 58 in the first exemplary embodiment, will not be explained.

After transmitting the clutch control signal to the clutch control valve, the clutch controlling unit 58 may be configured to transmit a signal indicating an actual mode as a currently selected mode to the engine controlling unit 50 and the motor controlling unit. Instead of this operation, the clutch controlling unit 58 may be configured to output the clutch command signal to the motor controlling unit 55 and the engine controlling unit 50, and in turn, the motor controlling unit 55 and the engine controlling unit 50 may be configured to autonomously determine the actual mode. Yet alternatively, the motor controlling unit 55 and the engine controlling unit 50 may be configured to monitor the status of the L clutch CL or the H clutch CH and autonomously determine the actual mode.

After mode switching is performed, the engine controlling unit 50 is configured to output the throttle value command signal for changing the rotational speed of the engine 21 (i.e., the input rotational speed of the power transmission 24) to the fuel injection device 21C on the basis of the accelerator operating amount, an engine demand horsepower based on the operating amount of the work implement operating member 52a and the vehicle speed, and the actual mode obtained from the signal transmitted from the clutch controlling unit 58 and so forth.

The motor controlling unit 55 is configured to control the torque of the motor MG1, MG2 on the basis of the actual mode obtained from the signal transmitted from the clutch controlling unit 58 and so forth, the aforementioned engine demand horsepower, and a target traction force determined based on the vehicle speed and the accelerator operating amount (a traction force corresponding to a vehicle speed obtained from an output rotational speed on a travelling performance curve in a gear stage specified by the gearshift operating member 53a; see FIG. 4), such that the target traction force can be obtained before and after the engine controlling unit 55 changes the speed ratio. More specifically, the motor controlling unit 55 is configured to calculate a standard idling rotational speed of the engine at present from the engine demand horsepower. The standard idling rotational speed is obtained from a standard regulation line that passes through a matching point that is an intersection between the engine demand horsepower and a preliminarily set matching line. Additionally, the motor controlling unit 55 is configured to determine a regulation line based on the actual mode, and set an intersection between the determined regulation line and an equal horsepower curve determined based on the engine demand horsepower as a new matching point in the actual mode. Then, the motor controlling unit 55 is configured to calculate the input torque of the power transmission 24 (the output torque of the engine 21) on the basis of the new matching point. Finally, the motor controlling unit 55 is configured to determine the torque of the motor MG1, MG2 with reference to torque balance information that defines a relation between the input torque and the target traction force and is calculated so as to satisfy torque balance in the power transmission 24. The vehicle speed is constant when the target traction force and resistance on the road surface are balanced, and the output rotational speed is kept unchanged even when mode switching is performed by the motor controlling unit 55. In such a case, when the input rotational speed is changed by the engine controlling unit 50, the speed ratio is changed so as to deviate from the mode switching threshold Rs_th1.

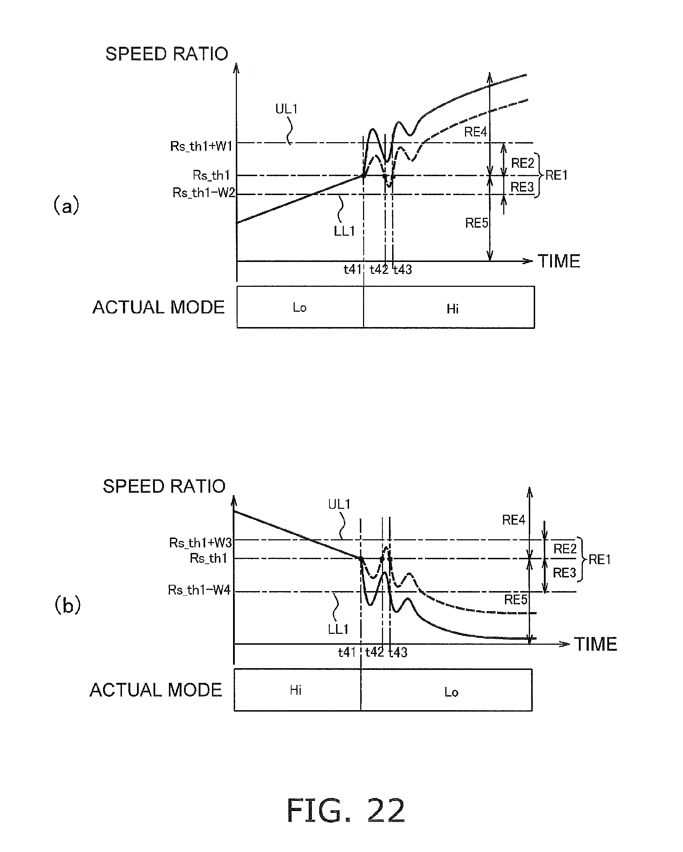

Next, detailed actions of the engine controlling unit 50 and the motor controlling unit 55 in mode switching will be explained in detail with reference to drawings. FIG. 22 includes charts respectively showing an example of time-series variation in speed ratio and mode of the work vehicle 1 according to the fifth exemplary embodiment. FIG. 22(a) exemplifies a case that the speed ratio of the work vehicle 1 increases with elapse of time. FIG. 22 (b) shows a case that the speed ratio of the work vehicle 1 decreases with elapse of time. Now, FIG. 22 depicts transition of the speed ratio, which is obtained when the control of the speed ratio in the present exemplary embodiment is not performed, with dashed lines for easily understanding advantageous effects of the present exemplary embodiment.

In FIG. 22(a), at time t41, the speed ratio has increased to the mode switching threshold Rs_th1, and the clutch controlling unit 58d switches the power transmission 24 from the Lo mode to the Hi mode. At this time, the engine controlling unit 50 decreases the rotational speed of the engine 21 and increase the torque of the engine 21.

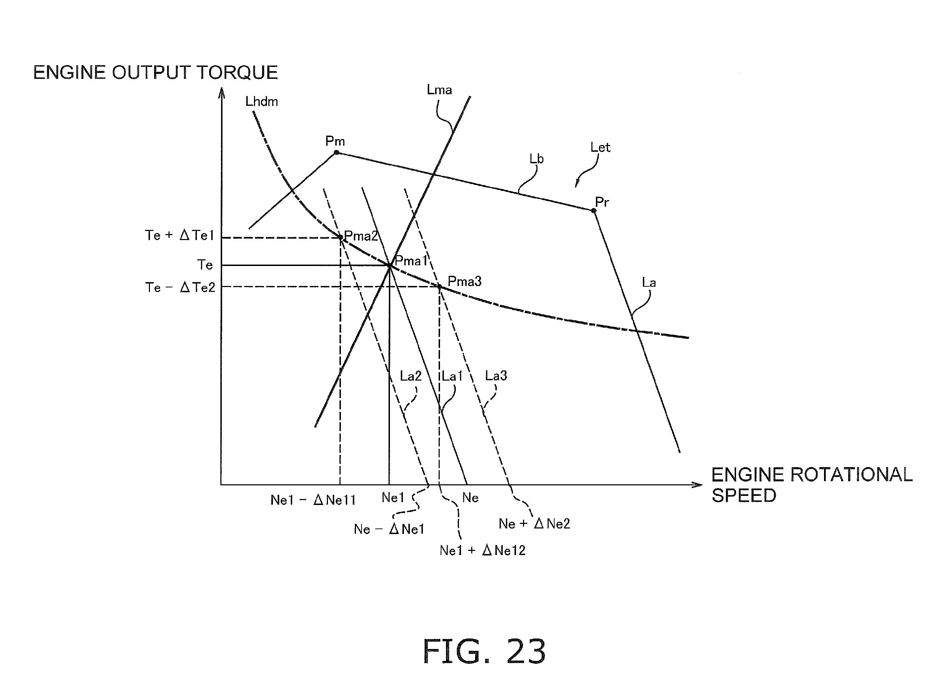

FIG. 23 is a diagram for explaining a method that the engine controlling unit 50 herein changes the rotational speed and the torque of the engine 21. In FIG. 23, an engine torque line Let defines a relation between the output torque of the engine 21 and the rotational speed of the engine 21. The engine torque line Let includes a regulation line La and a maximum torque line Lb. The regulation line La varies in accordance with the command throttle value (see La1, La2, and so forth in FIG. 23). The maximum torque line Lb includes a rated point Pr and a maximum torque point Pm plotted on the lower engine rotational speed side of the rated point Pr.

A matching line Lma is information for determining the output torque and the rotational speed of the engine 21. A matching line can be arbitrarily set, but in the present exemplary embodiment, the matching line Lma is utilized for obtaining a matching point when changing of the engine rotational speed in the present exemplary embodiment is not performed. In the present exemplary embodiment, the engine rotational speed is not changed in the Lo mode. Hence, the matching line Lma is utilized for obtaining a matching point Pma1 in the Lo mode. The engine torque line Let and the matching line Lma are preliminarily set and stored in the storage unit 56.

The Lo mode is maintained until time t41, and hence, an intersection between the matching line Lma and an equal horsepower curve Lhdm of the engine demand horsepower (a horsepower determined by the output demand horsepower of the power transmission 24, the output demand horsepower of the work implement 3, and so forth) inputted into the engine controlling unit 50 is obtained as the first matching point Pma1. The regulation line La1, passing through the first matching point Pma1, is uniquely determined. The regulation line La1 is referred to as the standard regulation line. In the present exemplary embodiment, the standard regulation line La1 is utilized in the Lo mode. Additionally, an idling engine rotational speed Ne is determined by the standard regulation line La1, and the throttle value of the engine is determined based on the idling engine rotational speed Ne. In the Lo mode, the engine controlling unit 50 performs a control of making the output horsepower of the engine 21 transition on the regulation line La1. On the other hand, the motor controlling unit 55 controls the torque of the motor MG1, MG2 on the basis of the target traction force and an engine output torque Te that is obtained as the vertical-axis magnitude in the first matching point Pma1 plotted as an intersection between the equal horsepower curve Lhdm and the regulation line La1. Therefore, the power transmission 24 consequently applies the torque Te to the input shaft 61. As a result, the matching point of the engine 21 settles at the first matching point Pma1. At this time, the rotational speed of the input shaft 61 in the first matching point Pm1 is Ne1.

At time t41, in response to switching from the Lo mode to the Hi mode, the engine controlling unit 50 decreases the throttle value of the engine 21 determined as described above by a small amount. As a result, the idling engine rotational speed Ne is changed into Ne-$\Delta$Ne1. The engine controlling unit 50 performs a control of making the output torque of the engine 21 transition on the regulation line La2 determined by the throttle value of the engine 21 corresponding to the idling engine rotational speed (Ne-$\Delta$Ne1). Next, the motor controlling unit 55 determines a torque value (Te+$\Delta$Te1) such that the engine demand horsepower (the horsepower outputted by the engine) is kept unchanged before and after changing of the engine rotational speed (the rotational speed of the input shaft 61) even when mode switching is performed. In this case, the following (Math. 1) is established by utilizing a rotational speed Ne1 of the input shaft 61 in the first matching point Pm1 and the torque Te in the first matching point.

$$(Ne1-\Delta Ne11)\times(Te+\Delta Te1)=Ne1\times Te \ \dots \ (Math. \ 1)$$

In (Math. 1), (Ne1-$\Delta$Ne11) indicates the rotational speed of the input shaft 61 in a second matching point Pm2 on the regulation line La2. A point (Ne1-$\Delta$Ne11, Te+$\Delta$Te1) is plotted on the regulation line La2, and therefore, the motor controlling unit 55 is capable of calculating a torque (Te+$\Delta$Te1) in the second matching point Pma2. When the torque value (Te+$\Delta$Te1) in the second matching point Pma2 is determined, the motor controlling unit 55 controls the torque of the motor MG1, MG2 on the basis of the output torque (Te+$\Delta$Te1) of the engine 21 such that the target traction force can be obtained before and after changing of the speed ratio. Accordingly, the output horsepower of the engine 21 transitions on the equal horsepower curve. Additionally, the power transmission 24 consequently applies the torque (Te+$\Delta$Te1) to the input shaft 61, and the matching point of the engine 21 settles at the second matching point Pma2. Therefore, at time t41, the engine controlling unit 50 is capable of applying a negative valued offset (-$\Delta$Ne11) to the rotational speed Ne1 of the engine 21 (the rotational speed of the input shaft 61). At this time, switching into the Hi mode has been determined by the clutch controlling unit 58d, and hence, the speed ratio exists in the range of greater than or equal to the first threshold Rs_th1. Moreover, the engine controlling unit 50 is capable of increasing the output torque of the engine 21 from Te to Te+$\Delta$Te1.

As a result of the aforementioned action, the speed ratio has a positive offset at or after time t41. In other words, in the Hi mode set by mode switching, the speed ratio is deviated from the mode switching threshold Rs_th1. Consequently, even when slightly fluctuating at or after time t41 as shown in FIG. 22(a), the speed ratio is unlikely to get lower than the mode switching threshold Rs_th1. As a result, hunting is prevented that is caused by switching the transmission path into the Hi mode and then immediately switching the transmission path from the Hi mode to the Lo mode. It should be noted that with the control of the speed ratio as described above, the fluctuating speed ratio becomes unlikely to get lower than the lower limit Rs_th1-W2 of the first range RE1 in the Hi mode.

Next, an action of the engine controlling unit 50 in switching from the Hi mode to the Lo mode will be explained in detail. FIG. 22(b) is a chart showing an example of time-series variation in speed ratio and mode of the work vehicle 1 in switching from the Hi mode to the Lo mode. The Hi mode is maintained until time t41, and hence, according to the aforementioned method, the rotational speed of the engine 21 (the input rotational speed of the input shaft 61) is set as Ne1-$\Delta$Ne11 and the output torque of the engine 21 is set as Te+$\Delta$Te1.

At time t41, the speed ratio has decreased to the mode switching threshold Rs_th1. Accordingly, at time t41, the clutch controlling unit 58d switches the power transmission 24 from the Hi mode to the Lo mode. At this time, the engine controlling unit 50 applies an offset (+$\Delta$Ne11) to the rotational speed of the engine 21.

Specifically, in accordance with switching from the Hi mode to the Lo mode, the engine controlling unit 50 increases the throttle value of the engine 21 such that the idling engine rotational speed is changed from Ne-$\Delta$Ne1 to Ne (see FIG. 23). The engine controlling unit 50 performs a control of making the output torque of the engine 21 transition on the regulation line La1 determined by the throttle value of the engine 21 corresponding to the idling engine rotational speed (Ne). Next, the motor controlling unit 55 determines the torque value Te on the basis of (Math. 1) and a constraint condition of the regulation line La1 such that the engine demand horsepower is kept unchanged before and after changing of the engine rotational speed (the rotational speed of the input shaft 61) even when mode switching is performed. When the torque Te in the first matching point Pma1 is calculated, the motor controlling unit 55 controls the torque of the motor MG1, MG2 on the basis of the output torque Te of the engine 21 obtained from the engine controlling unit 50 such that the target traction force can be obtained before and after changing of the speed ratio. Accordingly, the output horsepower of the engine 21 transitions on the equal horsepower curve. Additionally, the power transmission 24 consequently applies the torque Te to the input shaft 61, and the matching point of the engine 21 settles at the first matching point Pma1. Therefore, at time t41, the engine controlling unit 50 is capable of applying a positive valued offset (+$\Delta$Ne11) to the

rotational speed (Ne1-ΔNe11) of the engine 21 (the rotational speed of the input shaft 61). At this time, switching into the Lo mode has been determined by the clutch controlling unit 58d, and hence, the speed ratio exists in the range of less than or equal to the first threshold Rs_th1. Moreover, the engine controlling unit 50 is capable of decreasing the output torque of the engine 21 from Te+ΔTe1 to Te.

As a result of the aforementioned action, the speed ratio has a negative offset at or after time t41. In other words, in the Lo mode set by mode switching, the speed ratio is deviated from the mode switching threshold Rs_th1. Consequently, even when slightly fluctuating at or after time t41 as shown in FIG. 22(b), the speed ratio is unlikely to get higher than the mode switching threshold Rs_th1. As a result, hunting is prevented that is caused by switching the transmission path into the Lo mode and then immediately switching the transmission path from the Lo mode to the Hi mode. It should be noted that with the control of the speed ratio as described above, the fluctuating speed ratio becomes unlikely to get higher than the upper limit Rs_th1+W3 of the first range RE1 in the Lo mode.

It should be noted that similarly in the fifth exemplary embodiment, a controller 27d may include all or part of the functions of the controller 27a in the second exemplary embodiment, the controller 27b in the third exemplary embodiment, and the controller 27c in the fourth exemplary embodiment.

<Sixth Exemplary Embodiment>

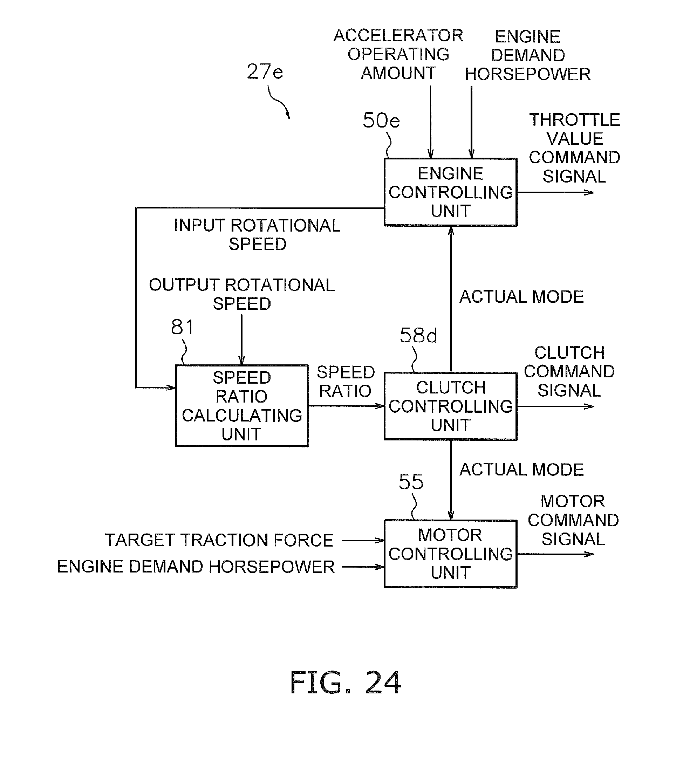

FIG. 24 is a block diagram showing a detailed internal structure of a controller 27e according to a sixth exemplary embodiment. Excluding an action of an engine controlling unit 50e, actions of the respective elements in the sixth exemplary embodiment are the same as those of the respective elements in fifth exemplary embodiment. Therefore, only the action of the engine controlling unit 50e will be explained in detail.

When the speed ratio falls into a predetermined range about the mode switching threshold Rs_th1 after mode switching is performed, the engine controlling unit 50e outputs the throttle value command signal for changing the rotational speed of the engine 21 (i.e., the input rotational speed of the power transmission 24) to the fuel injection device 21C on the basis of the accelerator operating amount, the engine demand horsepower based on the operating amount of the work implement operating member 52a and the vehicle speed, and the actual mode obtained from the signal transmitted from the clutch controlling unit 58 and so forth. The target traction force is maintained even when mode switching is performed by the motor controlling unit 55. Hence, the vehicle speed is constant when the target traction force and the resistance of the road surface are balanced, and the output rotational speed is kept unchanged. In such a case, when the input rotational speed is changed by the engine controlling unit 50e, the speed ratio is changed so as to deviate from the mode switching threshold Rs_th1.

Next, how the engine controlling unit 50e herein changes the rotational speed and the torque of the engine 21 will be explained. As shown in FIG. 23, in the present exemplary embodiment, the engine controlling unit 50e utilizes three regulation lines La1, La2 and La3. The regulation line La1 corresponds to a standard regulation line under the condition that no offset is applied to the engine rotational speed, and is obtained by a similar method to the first exemplary embodiment.

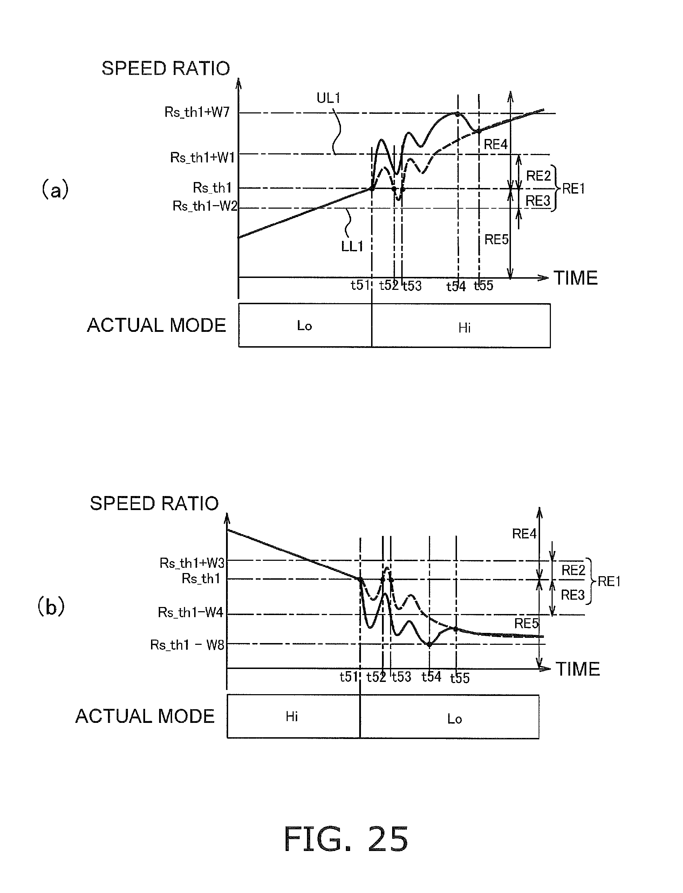

The regulation line La2 is utilized when the speed ratio varies in a range from the mode switching threshold Rs_th1 to a seventh upper limit Rs_th1+W7 (see FIG. 25(a)) after switching from the Lo mode to the Hi mode. The regulation line La3 is utilized when the speed ratio varies in a range from the mode switching threshold Rs_th1 to a seventh lower limit Rs_th1-W8 (see FIG. 25(b)) after switching from the Hi mode to the Lo mode. It should be noted that W7 and W8 are both positive values, and the following relation is established: the seventh lower limit Rs_th1-W8 < the mode switching threshold Rs_th1 < the seventh upper limit Rs_th1+W7. Additionally, an interval W8 between the seventh lower limit and the mode switching threshold may be equal to or different from an interval W7 between the mode switching threshold and the seventh upper limit. In FIG. 25(a), the interval W7 is depicted so as to be greater than the magnitude W1 of the second range RE in the Hi mode, but is not limited to this. Similarly in FIG. 25(b), the interval W8 is depicted so as to be greater than the magnitude W4 of the third range RE2 in the Lo mode, but is not limited to this. Values given to the seventh lower limit Rs_th1-W8 and the seventh upper limit Rs_th1+W7 are preliminarily set and stored in the storage unit 56.

Next, detailed actions of the engine controlling unit 50e and the motor controlling unit 55 in mode switching will be explained in detail with reference to drawings. FIG. 25(a) is a chart showing an example of time-series variation in speed ratio and mode of the work vehicle 1 according to the sixth exemplary embodiment in switching from the Lo mode to the Hi mode. FIG. 25(b) shows time-series variation in speed ratio and mode of the work vehicle 1 according to the sixth exemplary embodiment in switching from the Hi mode to the Lo mode. FIG. 25 herein depicts transition of the speed ratio obtained when the control of the speed ratio according to the present exemplary embodiment is not performed with dashed lines for easy understanding of advantageous effects of the present exemplary embodiment. It should be noted that switching from the Lo mode to the Hi mode is assumed to be performed at time t51 in FIG. 25(a), whereas switching from the Hi mode to the Lo mode is assumed to be performed at time t51 in FIG. 25(b).

In FIG. 25(a), until time t51, the engine controlling unit 50 performs a control of making the output torque of the engine 21 transition on the standard regulation line La1. Then, an intersection between the standard regulation line La1 and the equal horsepower curve Lhdm of the engine demand horsepower inputted into the engine controlling unit 50e is obtained as the first matching point Pma1 (see FIG. 23). The motor controlling unit 55 controls the torque of the motor MG1, MG2 on the basis of the torque value Te in the first matching point Pma1 so as to obtain the target traction force. As a result of the control, the power transmission 24 applies the torque Te to the input shaft 61, and the matching point of the engine 21 settles at the first matching point Pma1. Therefore, the torque of the input shaft 61 settles at Te, and the rotational speed of the input shaft 61 settles at Ne1.

At time t51, in accordance with switching from the Lo mode to the Hi mode, the engine controlling unit 50e decreases the throttle value of the engine 21 determined as described above by a small amount. As a result, the idling engine rotational speed is changed from Ne to Ne-ΔNe1. Therefore, the engine controlling unit 50e performs a control of making the output torque of the engine 21 transition on the regulation line La2 determined by the throttle value of the engine 21 corresponding to the idling engine rotational speed (Ne-ΔNe1). Next, the motor controlling unit 55 determines a torque value (Te+ΔTe1) on the basis of (Math. 1) and a constraint condition of the regulation line La2 such that the engine demand horsepower is kept unchanged before and after changing of the engine rotational speed (the rotational speed of the input shaft 61) even when mode switching is performed. Then, the motor controlling unit 55 controls the torque of the motor MG1, MG2 such that the target traction force can be obtained on the basis of the determined torque value (Te+ΔTe1) before and after changing of the speed ratio. Accordingly, the output horsepower of the engine 21 transitions on the equal horsepower curve. Additionally, the power transmission 24 consequently applies the torque (Te+ΔTe1) to the input shaft 61, and the matching point of the engine 21 settles at the second matching point Pma2. Therefore, at time t51, the engine controlling unit 50e is capable of applying a negative valued offset (-ΔNe11) to the rotational speed Ne1 of the engine 21 (the rotational speed of the input shaft 61). At this time, switching into the Hi mode has been determined by the clutch controlling unit 58d, and hence, the speed ratio exists in the range of greater than or equal to the first threshold Rs_th1. Moreover, the output torque of the engine 21 can be increased from Te to Te+ΔTe1.

As a result of the aforementioned action, as shown in FIG. 25(a), the speed ratio has a positive offset from time t51 to time t54. That is, in the Hi mode set by mode switching, the speed ratio is deviated from the mode switching threshold Rs_th1. It should be noted that at time t54, the speed ratio has reached the seventh upper limit Rs_th1+W7, and hence, the engine controlling unit 50e finishes applying the negative valued offset (-ΔNe11) to the rotational speed Ne1 of the engine 21 (the rotational speed of the input shaft 61). In other words, the engine controlling unit 50e finishes applying the offset to the rotational speed of the engine 21 (the rotational speed of the input shaft 61) when the speed ratio deviates from the mode switching threshold Rs_th1 by a predetermined magnitude W7 or greater. Specifically, the engine controlling unit 50e increases the throttle value of the engine 21 such that the idling engine rotational speed is changed from Ne-ΔNe1 to Ne (see FIG. 23). The engine controlling unit 50e performs a control of making the output torque of the engine 21 transition on the standard regulation line La1 determined by the throttle value of the engine 21 corresponding to the idling engine rotational speed (Ne). The motor controlling unit 55 determines the torque value Te on the basis of (Math. 1) and the constraint condition of the regulation line La1 such that the engine demand horsepower is kept unchanged before and after changing of the engine rotational speed (the rotational speed of the input shaft 61) even when mode switching is performed. When the torque Te in the first matching point Pma1 is calculated, the motor controlling unit 55 controls the torque of the motor MG1, MG2 on the basis of the output torque Te of the engine 21 obtained from the engine controlling unit 50e such that the target traction force can be obtained before and after changing of the speed ratio. Accordingly, the output horsepower of the engine 21 transitions on the equal horsepower curve. Additionally, the power transmission 24 consequently applies the torque Te to the input shaft 61, and the matching point of the engine 21 settles at the first matching point Pma1. Therefore, at time t54, the engine controlling unit 50e is capable of finishing applying the negative valued offset (-ΔNe11) to the rotational speed Ne1 of the engine 21 (the rotational speed of the input shaft 61). Moreover, the engine controlling unit 50e is capable of decreasing the output torque of the engine 21 from Te+ΔTe1 to Te.

As a result of the aforementioned action, the speed ratio has no offset at or after time t54. Consequently, as shown in FIG. 25(a), at time t55 subsequent to time t54, the value of the speed ratio becomes equal to that of the speed ratio obtained when the control of the speed ratio according to the present exemplary embodiment is not performed. In other words, the engine controlling unit 50e finishes applying the offset to the speed ratio of the power transmission 24 when the speed ratio deviates from the mode switching threshold Rs_th1 by the predetermined magnitude W7 or greater.

In FIG. 25(b), until time t51, the engine controlling unit 50 performs a control of making the output torque of the engine 21 transition on the standard regulation line La1. Then, an intersection between the standard regulation line La1 and the equal horsepower curve Lhdm of the engine demand horsepower inputted into the engine controlling unit 50e is obtained as the first matching point Pma1 (see FIG. 23). The motor controlling unit 55 controls the torque of the motor MG1, MG2 such that the target traction force can be obtained on the basis of the torque value Te in the first matching point Pma1. As a result of the control, the power transmission 24 applies the torque Te to the input shaft 61, and the matching point of the engine 21 settles at the first matching point Pma1. Therefore, the torque of the input shaft 61 settles at Te, and the rotational speed of the input shaft 61 settles at Ne1.

**EP 2 975 303 A1**

At time t51, in accordance with switching from the Hi mode to the Lo mode, the engine controlling unit 50e increases the throttle value of the engine 21 determined as described above by a small amount. As a result, the idling engine rotational speed is changed from Ne to Ne+ΔNe2. The engine controlling unit 50e performs a control of making the output torque of the engine 21 transition on the regulation line La3 determined by the throttle value of the engine 21 corresponding to the idling engine rotational speed (Ne+ΔNe2). Next, the motor controlling unit 55 determines a torque value (Te-ΔTe2) such that the engine demand horsepower is kept unchanged before and after changing of the engine rotational speed (the rotational speed of the input shaft 61) even when mode switching is performed. In this case, the following (Math. 2) is established by utilizing the rotational speed Ne1 of the input shaft 61 in the first matching point Pm1 and the torque Te in the first matching point.

$$\text{(Ne1+ΔNe12)×(Te-ΔTe2)=Ne1×Te ... (Math. 2)}$$

In (Math .2), (Ne1+ΔNe12) is the rotational speed of the input shaft 61 in the third matching point Pm3 plotted on the regulation line La3. A point (Ne1+ΔNe12, Te-ΔTe2) is plotted on the regulation line La3, and therefore, the motor controlling unit 55 is capable of calculating a torque (Te-ΔTe2) in the third matching point Pma3. When the torque value (Te-ΔTe2) in the third matching point Pma3 is determined, the motor controlling unit 55 controls the torque of the motor MG1, MG2 on the basis of the calculated torque value (Te-ΔTe2) such that the target traction force can be obtained before and after changing of the speed ratio. Accordingly, the output horsepower of the engine 21 transitions on the equal horsepower curve. Additionally, the power transmission 24 consequently applies the torque (Te-ΔTe2) to the input shaft 61, and the matching point of the engine 21 settles at the third matching point Pma3. Therefore, at time t51, the engine controlling unit 50e is capable of applying a positive valued offset (+ΔNe12) to the rotational speed Ne1 of the engine 21 (the rotational speed of the input shaft 61). At this time, switching into the Lo mode has been determined by the clutch controlling unit 58d, and hence, the speed ratio exists in the range of less than or equal to the first threshold Rs_th1. Moreover, the engine controlling unit 50e is capable of decreasing the output toque of the engine 21 from Te to Te-ΔTe2. It should be noted that the magnitude of ΔNe1 and that of ΔNe2 may be equal to or different from each other, and the magnitude of ΔTe1 and that of ΔTe2 may be equal to or different from each other.

As a result of the aforementioned action, as shown in FIG. 25(b), the speed ratio has a negative offset from time t51 to time t54. That is, in the Lo mode set by mode switching, the speed ratio deviates from the mode switching threshold Rs_th1. It should be noted that at time t54, the speed ratio has reached the fourth threshold Rs_th1-D2, and hence, the engine controlling unit 50e finishes applying the positive valued offset (+ΔNe12) to the rotational speed Ne1 of the engine 21 (the rotational speed of the input shaft 61). In other words, the engine controlling unit 50e finishes applying the offset to the rotational speed of the engine 21 (the rotational speed of the input shaft 61) when the speed ratio deviates from the mode switching threshold Rs_th1 by the predetermined magnitude W8. Specifically, the engine controlling unit 50e decreases the throttle value of the engine 21 such that the idling engine rotational speed is changed from Ne+ΔNe2 to Ne (see FIG. 23). The engine controlling unit 50e performs a control of making the output torque of the engine 21 transition on the standard regulation line La1 determined by the throttle value of the engine 21 corresponding to the idling engine rotational speed (Ne). The motor controlling unit 55 determines the torque value Te on the basis of (Math. 2) and the constraint condition of the regulation line La1 such that the engine demand horsepower is kept unchanged before and after changing of the engine rotational speed (the rotational speed of the input shaft 61) even when mode switching is performed. When the torque Te in the first matching point Pma1 is calculated, the motor controlling unit 55 controls the torque of the motor MG1, MG2 on the basis of the output torque Te of the engine 21 obtained from the engine controlling unit 50e such that the target traction force can be obtained before and after changing of the speed ratio. Accordingly, the output horsepower of the engine 21 transitions on the equal horsepower curve. Additionally, the power transmission 24 consequently applies the torque Te to the input shaft 61, and the matching point of the engine 21 settles at the first matching point Pma1. Therefore, at time t54, the engine controlling unit 50e is capable of finishing applying the positive offset (+ΔNe12) to the rotational speed Ne1 of the engine 21 (the rotational speed of the input shaft 61). Moreover, the engine controlling unit 50e is capable of increasing the output torque of the engine 21 from Te-ΔTe2 to Te.

As a result of the aforementioned action, the speed ratio has no offset at or after time t54. Consequently, as shown in FIG. 25(b), at time t55 subsequent to time t54, the value of the speed ratio becomes equal to that of the speed ratio obtained when the control of the speed ratio according to the present exemplary embodiment is not performed. In other words, the engine controlling unit 50e finishes applying the offset to the speed ratio of the power transmission 24 when the speed ratio deviates from the mode switching threshold Rs_th1 by the predetermined magnitude W8 or greater.

In addition to the action of the engine controlling unit 50 according to the fifth exemplary embodiment, the engine controlling unit 50e according to the present exemplary embodiment changes the engine rotational speed (the rotational speed of the input shaft 61) again so as to make the speed ratio of the power transmission 24 approach the

30

mode switching threshold Rs_th1 when the speed ratio deviates from the mode switching threshold Rs_th1 by the predetermined magnitude W7, W8 or greater. Therefore, not only the advantageous effects of the fifth exemplary embodiment but also enhancement in fuel consumption of the work vehicle 1 can be achieved by setting the matching line Lma to pass through a region in which the fuel consumption of the engine is low because matching is usually done on the matching line Lma.

It should be noted that similarly in the sixth exemplary embodiment, the controller 27e may include all or part of the functions of the controller 27a in the second exemplary embodiment, the controller 27b in the third exemplary embodiment, and the controller 27c in the fourth exemplary embodiment.

<Features>

The features of the work vehicle 1 according to the present exemplary embodiments are as follows.

(1) As long as the speed ratio transitions within the first range RE1 including the mode switching threshold Rs_th1 after mode switching is performed, each of the controllers 27 and 27a-27e is configured to keep setting the transmission path in the switched mode even when the speed ratio again reaches the mode switching threshold Rs_th1. Therefore, after mode switching is performed, mode switching is not performed unless the speed ratio is deviated from the first range RE1. Consequently, each of the controllers 27, 27a-27e can inhibit hunting that is caused by frequent switching of the transmission path.

(2) The magnitude W1, W3 of the second range RE2 between the mode switching threshold Rs_th1 and the first upper limit UL1 that is the upper limit of the first range RE1 is different from the magnitude W2, W4 of the third range RE3 between the mode switching threshold Rs_th1 and the first lower limit LL1 that is the lower limit of the first range RE1. Moreover, the magnitude W1 of the second range RE2 in the Hi mode is greater than the magnitude W2 of the third range RE3 in the Hi mode, whereas the magnitude W4 of the third range RE3 in the Lo mode is greater than the magnitude W3 of the second range in the Lo mode. Accordingly, it is possible to alleviate shocks to be caused in returning the speed ratio to the mode switching threshold Rs_th1 when the speed ratio belongs to the inadmissible range.

(3) The controller 27a includes the first timer 86 and the counter 87. The first timer 86 is configured to measure the first time length D1 elapsed after the transmission path is switched from a given mode to another mode of the Hi and Lo modes. The counter 87 is configured to count the number of switching Cn that the transmission path is switched from a given mode to another mode before the first time length D1 reaches the predetermined first threshold Dth. The clutch controlling unit 58a is configured to extend the first range RE1 from the predetermined initial range RE1_0 when the number of switching Cn exceeds the predetermined second threshold Cth. With this structure, even when the speed ratio fluctuates and frequently deviates from the first range RE1 in a short period of time, occurrence of hunting can be inhibited. In addition, it is possible to extend the first range RE1 only when fluctuation in speed ratio is large. Therefore, when fluctuation in speed ratio is small, it is also possible to alleviate shocks to be caused when the clutch controlling unit 58a engages both of the Hi clutch and the Lo clutch in returning the speed ratio to the mode switching threshold Rs_th1.

(4) When the transmission path is switched from a given mode to another mode after the first time length D1 becomes the first threshold Dth or greater, the counter 87 is configured to reset the number of switching Cn to 0, whereas the clutch controlling unit 58a is configured to restore the first range RE1 to the initial range RE1_0. As a result, when fluctuation in speed ratio becomes small, the clutch controlling unit 58a is configured to restore the first range RE1 to the initial range RE1_0, and hence, it is possible to limit a time period for extending the first range RE1.

(5) When the speed ratio gets higher than the second range RE2 after the transmission path is switched from the Hi mode to the Lo mode, each of the clutch controlling units 58 and 58a-58d is configured to output the clutch command signal for engaging the H clutch CH so as to make the speed ratio reach the mode switching threshold Rs_th1. When the speed ratio then reaches the mode switching threshold Rs_th1, each of the clutch controlling units 58 and 58a-58d is configured to output the clutch command signal for disengaging the L clutch CL in order to switch the transmission path into the Hi mode. Each of the clutch controlling units 58 and 58a-58d is capable of making the speed ratio rapidly reach the mode switching threshold Rs_th1 by thus outputting the clutch command signal. Additionally, with appropriate setting of the magnitude of the second range RE2, it is possible to alleviate shocks of the vehicle body to be caused when the L clutch CL and the H clutch CH are both engaged.

(6) When the speed ratio gets lower than the third range RE3 after the transmission path is switched from the Lo mode to the Hi mode, each of the clutch controlling units 58 and 58a-58d is configured to output the clutch command signal for engaging the L clutch CL so as to make the speed ratio reach the mode switching threshold Rs_th1. When the speed ratio then reaches the mode switching threshold Rs_th1, each of the clutch controlling units 58 and 58a-58d is configured to output the clutch command signal for disengaging the H clutch CH in order to switch the transmission path into the Lo mode. Each of the clutch controlling units 58 and 58a-58d is capable of making the speed ratio rapidly reach the mode switching threshold Rs_th1 by thus outputting the clutch command signal. Additionally, with appropriate setting of the magnitude of the third range RE3, it is possible to alleviate shocks of the vehicle body to be caused when the L clutch CL and the H clutch CH are both engaged.

(7) The controller 27b further includes the second timer 83. The second timer 83 is configured to measure the second time length D2 elapsed after mode switching. When the second time length D2 is shorter than the switching prohibition period after mode switching is performed, the clutch controlling unit 58b is configured to keep setting the transmission path in the switched mode as long as the speed ratio transitions within the predetermined sixth range RE6 including the first range RE1. Therefore, even when, immediately after mode switching, the speed ratio greatly fluctuates due to occurrence of acute variation in torsion amount of a shaft inside a gear mechanism, variation in angle of a gear due to backlash, and variation in torsion amount of tires which is caused by clutch switching shocks.

(8) The sixth range RE4 is set as a range greater than the sixth lower limit Rs_th1-W5 when the transmission path is set in the Hi mode, whereas the sixth range RE4 is set as a range less than the sixth upper limit Rs_th1+W6 when the transmission path is set in the Lo mode. Additionally, the sixth lower limit Rs_th1-W5 is lower than the lower limit Rs_th1-W2 of the third range RE3 in the Hi mode, whereas the sixth upper limit Rs_th1+W6 is higher than the upper limit Rs_th1+W3 of the second range in the Lo mode. Accordingly, a range where speed ratio can vary in the switching prohibition period can be extended as much as possible.

(9) The switching prohibition period has the predetermined initial value De. Additionally, the second timer 83 is configured to make the switching prohibition period expire when the speed ratio deviates from the sixth range RE4. Accordingly, with appropriate setting of the value of the sixth lower limit Rs_th1-W5 and that of the sixth upper limit Rs_th1+W6, it is possible to alleviate shocks of the vehicle body to be caused in mode switching performed at expiration of the switching prohibition period.

(10) The controller 27c further includes the trigger operation detecting unit 84 configured to detect whether or not a predetermined operation has been performed by an operator. Additionally, the switching prohibition period has the predetermined initial value De, and simultaneously, the second timer 83c is configured to make the switching prohibition period expire when the trigger operation detecting unit 84 detects the predetermined operation. Accordingly, when the operator performs an operation intended to greatly change the vehicle speed, the second timer 83c is configured to make the switching prohibition period forcibly expire such that mode switching can be easily performed, and thereby, the controller 27c is capable of rapidly performing mode switching in accordance with the operator's operational intention.

(11) In the condition that the transmission path is set in the Lo mode, when the speed ratio is higher than the second range RE2 at expiration of the switching prohibition period, the clutch controlling unit 58b is configured to output the clutch command signal for engaging the H clutch CH so as to make the speed ratio reach the mode switching threshold Rs_th1. Then, when the speed ratio reaches the mode switching threshold Rs_th1, the clutch controlling unit 58b is configured to output the clutch command signal for disengaging the L clutch CL in order to switch the transmission path into the Hi mode. Alternatively, in the condition that the transmission path is set in the Hi mode, when the speed ratio is lower than the third range RE3 at expiration of the switching prohibition period, the clutch controlling unit 58b is configured to output the clutch command signal for engaging the L clutch CL so as to make the speed ratio reach the mode switching threshold Rs_th1. Then, when the speed ratio reaches the mode switching threshold Rs_th1, the clutch controlling unit 58b is configured to output the clutch command signal for disengaging the H clutch CH in order to switch the transmission path into the Lo mode. By thus outputting the clutch command signal, the clutch controlling unit 58b is capable of making the speed ratio rapidly reach the mode switching threshold Rs_th1 after expiration of the switching prohibition period.

(12) In the condition that the transmission path is set in the Lo mode, when the speed ratio deviates from the sixth range RE6 in the switching prohibition period, the clutch controlling unit 58b is configured to output the clutch command signal for engaging the H clutch CH so as to make the speed ratio reach the mode switching threshold Rs_th1. Then, when the speed ratio reaches the mode switching threshold Rs_th1, the clutch controlling unit 58b is configured to output the clutch command signal for disengaging the L clutch CL in order to switch the transmission path into the Hi mode. Alternatively, in the condition that the transmission path is set in the Hi mode, when the speed ratio deviates from the sixth range RE6 in the switching prohibition period, the clutch controlling unit 58b is configured to output the clutch command signal for engaging the L clutch CL so as to make the speed ratio reach the mode switching threshold Rs_th1. Then, when the speed ratio reaches the mode switching threshold Rs_th1, the clutch controlling unit 58b is configured to output the clutch command signal for disengaging the H clutch CH in order to switch the transmission path into the Lo mode. By thus outputting the clutch command signal, the clutch controlling unit 58b is capable of alleviating shocks of the vehicle body to be caused in mode switching.

<Modifications>

Exemplary embodiments of the present invention have been explained. However, the present invention is not limited to the aforementioned exemplary embodiments, and a variety of changes can be made without departing from the scope of the present invention.

The present invention is not limited to the aforementioned wheel loader, and may be applied to another type of work vehicle such as a bulldozer, a tractor, a forklift or a motor grader.

The present invention can be applied to not only the EMT but also another type of transmission such as the HMT. In this case, the first motor MG1 functions as a hydraulic motor and a hydraulic pump. Likewise, the second motor MG2 functions as a hydraulic motor and a hydraulic pump. The first motor MG1 and the second motor MG2 are variable displacement pumps/motors, and displacements thereof are configured to be controlled when the tilt angles of the swashplates or the tilting shafts thereof are controlled by the controller 27.

The speed ratio calculating unit 81 may be configured not only to calculate the present speed ratio on the basis of the present input rotational speed and the present output rotational speed but also to calculate the speed ratio on the basis of another parameter. For example, the speed ratio calculating unit 81 may be configured to calculate the speed ratio of the power transmission 24 on the basis of the rotational speed of the L clutch CL and that of the H clutch CH. Alternatively, the speed ratio calculating unit 81 may be configured to calculate the speed ratio of the power transmission 24 on the basis of the rotational speed of the first motor MG1 and that of the second motor MG2.

Moreover, the speed ratio calculating unit 81 may be configured to calculate another parameter corresponding to the speed ratio. Such a parameter is referred to as a speed ratio parameter. The clutch controlling units 58 and 58a-58d, the first timer 86, the second timer 83, the counter 87, the speed ratio variation detecting unit 85, the engine controlling units 50 and 50e, and the motor controlling unit 55 may be configured to utilize the speed ratio parameter. With reference to FIG. 5, the speed ratio is derived by obtaining information regarding which of the Hi mode and the Lo mode is currently set and the rotational speed ratio of either of the motors MG1 and MG. Hence, for instance, the following can be utilized as the speed ratio parameter: the rotational speed ratio of the motor MG1; the rotational speed ratio of the motor MG2; and a ratio between the rotational speed of the shaft or gear of the power transmission 24, which depends on the rotational speed of either of the motors MG1 and MG2, and the rotational speed of the input shaft 61. The controllers 27 and 27a-27e are capable of performing similar processing to the aforementioned exemplary embodiments by performing the aforementioned processing with use of values of the speed ratio parameter respectively corresponding to the aforementioned mode switching threshold Rs_th1, the boundary values of the first range RE1, the second range RE2, the third range RE3, the fourth range RE4, the fifth range RE5 and the sixth range RE6, the seventh upper limit, and the seventh lower limit.

Unlike Table 1, in some of parameters that can be employed as the speed ratio parameter, the settings for the admissible range and the inadmissible range are not changed in accordance with modes. For example, when the rotational speed ratio of the motor MG2 is employed as the speed ratio parameter, as shown in FIG. 5, the mode switching threshold is set to be 0, and regardless of modes, the admissible range into which the motor rotational speed ratio should intrinsically fall is set to be a range of less than or equal to 0, whereas the inadmissible range is set to be a range of greater than 0. In this case, when the speed ratio parameter is changed into the mode switching threshold because the speed ratio parameter falls into the inadmissible range, it is desirable to perform mode switching.

Furthermore, the speed ratio calculating unit 81 may be configured to calculate an estimated clutch engaged time required for clutch engagement on the basis of the clutch oil temperature and the engine rotational speed, and may be configured to output a prospective speed ratio to be estimated on the basis of the estimated clutch engaged time.

Switching between the Lo mode and the Hi mode may not be necessarily performed at the first threshold Rs_th1. It should be noted that when switching between the Lo mode and the Hi mode is performed at a value of the speed ratio other than the first threshold Rs_th1, the motor rotational speed is supposed to acutely vary in mode switching, and by the effect of this, adverse effects are even caused, such as acute variation in rotations of the input and output shafts or shortening of clutch life. Therefore, it is preferred to perform switching between the Lo mode and the Hi mode at the first threshold Rs_th1.

The second exemplary embodiment has explained the case that the counter 87 is configured to increment the count value Cn from 0. However, when Cth-1 is set as the initial value of the count value Cn and the result of decision in Step S4 is Yes, the count value may be decremented in Step S5. Then, when the count value becomes 0, the processing in Step S9 may be performed. Additionally, the initial value of the count value Cn may be arbitrarily set, and Cth may be appropriately set in accordance with the initial value.

In the fifth exemplary embodiment, the standard regulation line La1 may be utilized as the regulation line utilized in the Hi mode, whereas the regulation line La3 may be utilized as the regulation line utilized in the Lo mode. In other words, the engine controlling unit 50 may be configured to change the regulation line from La1 to La3 in accordance with switching from the Hi mode to the Lo mode. In this case, it is preferred that the engine controlling unit 50 applies a positive valued offset ($+\Delta Ne12$) to the rotational speed Ne1 of the engine 21 (the input rotational speed of the input shaft) in switching from the Hi mode to the Lo mode.

Additionally, in the aforementioned exemplary embodiments, the power transmission having two modes composed of the Hi mode and the Lo mode has been exemplified, but the present invention may be applied to a power transmission that is provided with a third clutch other than the H clutch CH and the L clutch CL and thus has three or more modes.

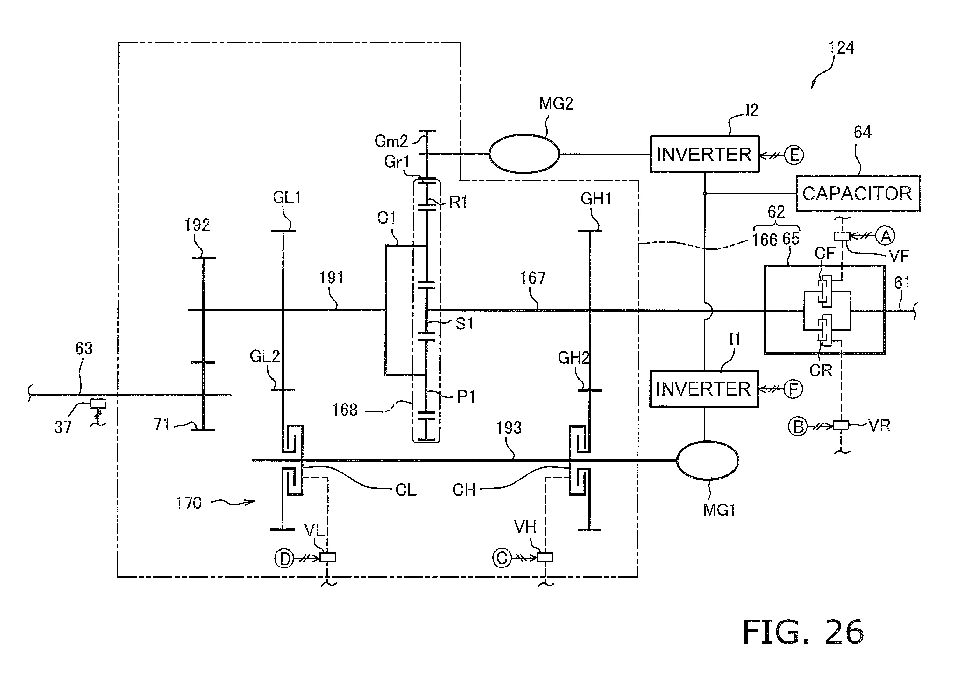

The aforementioned power transmission 24 includes the first planetary gear mechanism 68 and the second planetary gear mechanism 69. However, the number of the planetary gear mechanisms provided for the power transmission is not limited to two. The power transmission may be provided with only one planetary gear mechanism. Alternatively, the power transmission may be provided with three or more planetary gear mechanisms. FIG. 26 is a schematic diagram of a structure of a power transmission 124 with which a work vehicle according to another exemplary embodiment is provided. The other constituent elements of the work vehicle according to another exemplary embodiment are similar to those of the work vehicle 1 according to the aforementioned exemplary embodiments, and hence, the detailed explanation thereof will not be described. Additionally, in FIG. 26, the same reference signs are assigned to the same constituent elements as those of the power transmission 24 according to the aforementioned exemplary embodiments.

As shown in FIG. 26, the power transmission 124 includes a gearshift mechanism 166. The gearshift mechanism 166 includes a planetary gear mechanism 168, a first transmission shaft 167, a second transmission shaft 191 and a second transmission shaft gear 192. The first transmission shaft 167 is coupled to the forward/rearward movement switch mechanism 65. The planetary gear mechanism 168 and the second transmission shaft gear 192 are disposed coaxially to the first transmission shaft 167 and the second transmission shaft 191.

The planetary gear mechanism 168 includes a sun gear S1, a plurality of planet gears P1, a carrier C1 supporting the plural planet gears P1, and a ring gear R1. The sun gear S1 is coupled to the first transmission shaft 167. The plural planet gears P1 are meshed with the sun gear S1, and are rotatably supported by the carrier C1. The carrier C1 is fixed to the second transmission shaft 191. The ring gear R1 is meshed with the plural planet gears P1 and is rotatable. Additionally, a ring outer peripheral gear Gr1 is provided on the outer periphery of the ring gear R1. The second motor gear Gm2 is fixed to the output shaft 63 of the second motor MG2, and is meshed with the ring outer peripheral gear Gr1.

The second transmission shaft gear 192 is coupled to the second transmission shaft 191. The second transmission shaft gear 192 is meshed with the output gear 71, and the rotation of the second transmission shaft gear 192 is outputted to the output shaft 63 through the output gear 71.

The gearshift mechanism 166 includes a first high speed gear (hereinafter referred to as "a first H gear GH1"), a second high speed gear (hereinafter referred to as "a second H gear GH2"), a first low speed gear (hereinafter referred to as "a first L gear GL1"), a second low speed gear (hereinafter referred to as "a second L gear GL2"), a third transmission shaft 193 and a Hi/Lo switch mechanism 170.

The first H gear GH1 and the first L gear GL1 are disposed coaxially to the first transmission shaft 167 and the second transmission shaft 191. The first H gear GH1 is coupled to the first transmission shaft 167. The first L gear GL1 is coupled to the second transmission shaft 191. The second H gear GH2 is meshed with the first H gear GH1. The second L gear GL2 is meshed with the first L gear GL1. The second H gear GH2 and the second L gear GL2 are disposed coaxially to the third transmission shaft 193, and are disposed so as to be rotatable with respect to the third transmission shaft 193. The third transmission shaft 193 is coupled to the output shaft of the first motor MG1.

The Hi/Lo switch mechanism 170 is a mechanism for switching the driving force transmission path in the power transmission 24 between the high speed mode (the Hi mode) in which the vehicle speed is high and the low speed mode (the Lo mode) in which the vehicle speed is low. The Hi/Lo switch mechanism 170 includes the H clutch CH configured to be engaged in the Hi mode and the L clutch CL configured to be engaged in the Lo mode. The H clutch CH is configured to engage/disengage the second H gear GH2 and the third transmission shaft 193. On the other hand, the L clutch CL is configured to engage/disengage the second L gear GL2 and the third transmission shaft 193.

Next, an action of the power transmission 124 will be explained. FIG. 27 is a chart showing a rotational speed ratio of each motor MG1, MG2 with respect to a speed ratio in the power transmission 124. In FIG. 27, a solid line indicates the rotational speed ratio of the first motor MG1, whereas a dashed line indicates the rotational speed ratio of the second motor MG2. In the Lo range (the Lo mode) in which the vehicle speed is greater than or equal to 0 and less than or equal to Rs_th1, the L clutch CL is engaged whereas the H clutch CH is disengaged. In the Lo range, the H clutch CH is disengaged, and thus, the second H gear GH2 and the third transmission shaft 193 are disconnected. On the other hand, the L clutch CL is engaged, and thus, the second L gear GL2 and the third transmission shaft 193 are connected.

In the Lo range, a driving force from the engine 21 is inputted into the sun gear S1 through the first transmission shaft 167, and is outputted to the second transmission shaft 191 from the carrier C1. On the other hand, the driving force inputted into the sun gear S1 is transmitted to the ring gear R1 from the planet gears P1, and is outputted to the second motor MG2 through the ring outer peripheral gear Gr1 and the second motor gear Gm2. In the Hi range, the second motor MG2 functions as a generator, and part of electric power generated by the second motor MG2 is stored in the capacitor 64.

Additionally, in the Lo range, the first motor MG1 functions as an electric motor. The driving force of the first motor MG1 is outputted to the second transmission shaft 191 through a path of the third transmission shaft 193, the second L gear GL2, and then the first L gear GL1. A net driving force, resulting from composition of the driving forces in the second transmission shaft 191 as described above, is transmitted to the output shaft 63 through the second transmission shaft gear 192 and the output gear 71.

In the Hi range (the Hi mode) in which the speed ratio is greater than or equal to Rs_th1, the H clutch CH is engaged whereas the L clutch CL is disengaged. In the Hi range, the H clutch CH is engaged, and hence, the second H gear GH2 and the third transmission shaft 193 are connected. On the other hand, the L clutch CL is disengaged, and thus, the second L gear GL2 and the third transmission shaft 193 are disconnected.

In the Hi range, the driving force from the engine 21 is inputted into the sun gear S1, and is outputted to the second transmission shaft 191 from the carrier C1. On the other hand, the driving force from the engine 21 is outputted to the first motor MG1 from the first H gear GH1 through the second H gear GH2 and the third transmission shaft 193. In the Hi range, the first motor MG1 functions as a generator, and thus, part of electric power generated by the first motor MG1 is stored in the capacitor 64.

On the other hand, the driving force of the second motor MG2 is outputted to the second transmission shaft 191 through a path of the second motor gear Gm2, the ring outer peripheral gear Gr1, the ring gear R1, and then the carrier C1. A net driving force, resulting from composition of the driving forces in the second transmission shaft 191, is transmitted to the output shaft 63 through the second transmission shaft gear 192 and the output gear 71.

A control of the power transmission 124 in the work vehicle according to another exemplary embodiment is similar to that of the power transmission 24 according to the aforementioned exemplary embodiments.

INDUSTRIAL APPLICABILITY

According to the present invention, it is possible to provide a work vehicle having a power transmission of an HMT or EMT type and a plurality of settings of transmission path for a driving force which inhibits hunting to be caused by frequently switching between the settings of transmission path, and to provide a method of controlling the work vehicle.

**Claims**

1. A work vehicle, comprising:

an engine;
a hydraulic pump configured to be driven by the engine;
a work implement configured to be driven by a hydraulic oil discharged from the hydraulic pump;
a travelling apparatus configured to be driven by the engine;
a power transmission configured to transmit a driving force from the engine to the travelling apparatus; and
a controller configured to control the power transmission, wherein
the power transmission includes
an input shaft,
an output shaft,
a gear mechanism having a planetary gear mechanism, the gear mechanism being configured to transmit a rotation of the input shaft to the output shaft,
a motor connected to a rotary element of the planetary gear mechanism,
a first clutch for switching a transmission path for the driving force in the power transmission into a first mode, and
a second clutch for switching the transmission path for the driving force in the power transmission into a second mode,
when the transmission path is set in the first mode, the first clutch is configured to be engaged and the second clutch is configured to be disengaged,
when the transmission path is set in the second mode, the second clutch is configured to be engaged and the first clutch is configured to be disengaged,
in the power transmission, a rotational speed of the motor varies, thereby a speed ratio of the output shaft to the input shaft varies,
when a speed ratio parameter corresponding to the speed ratio is a predetermined mode switching threshold, a rotational speed ratio of the motor to the input shaft in the first mode and a rotational speed ratio of the motor to the input shaft in the second mode become equal, and
the controller includes a clutch controlling unit, wherein
as long as the speed ratio parameter transitions within a predetermined first range including the mode switching threshold after the speed ratio parameter reaches the mode switching threshold and then the transmission path is switched from the first mode to the second mode, the clutch controlling unit is configured to output a clutch command signal for disengaging the first clutch and output a clutch command signal for engaging the second clutch so as to keep setting the transmission path in the second mode even when the speed ratio parameter again reaches the mode switching threshold.

2. The work vehicle according to claim 1, wherein a magnitude of a second range between the mode switching threshold and a first upper limit that is an upper limit of the first range is different from a magnitude of a third range between the mode switching threshold and a first lower limit that is a lower limit of the first range.

3. The work vehicle according to claim 1 or 2, wherein
the controller includes
a first timer configured to measure a first time length elapsed after the transmission path is switched from a given mode to another mode among a plurality of modes including the first mode and the second mode, and
a counter configured to count a number of switching that the transmission path is switched from the given mode to the another mode before the first time length reaches a predetermined first threshold, and
the clutch controlling unit is configured to extend the first range from a predetermined initial range thereof when the number of switching exceeds a predetermined second threshold.

4. The work vehicle according to claim 3, wherein, when the transmission path is switched from the given mode to the another mode after the first time length becomes greater than or equal to the first threshold,
the counter is configured to restore the number of switching to an initial value thereof, and
the clutch controlling unit is configured to restore the first range to the initial range thereof.

5. The work vehicle according to any of claims 2 to 4, wherein
one of a fourth range and a fifth range is defined as an admissible range whereas the other of the fourth range and the fifth range is defined as an inadmissible range, the fourth range being a range in which the speed ratio parameter is greater than or equal to the mode switching threshold, the fifth range being a range in which the speed ratio parameter is less than or equal to the mode switching threshold,
where the fifth range is defined as the admissible range, the magnitude of the third range is larger than a magnitude of the second range, and
where the fourth range is defined as the admissible range, the magnitude of the second range is larger than the magnitude of the third range.

6. The work vehicle according to claim 5, wherein
in the first mode, one of the fourth and fifth ranges is defined as the admissible range whereas the other of the fourth and fifth ranges is defined as the inadmissible range, and
in the second mode, the other of the fourth and fifth ranges is defined as the admissible range whereas the one of the fourth and fifth ranges is defined as the inadmissible range.

7. The work vehicle according to claim 5 or 6, wherein, in case the fifth range is defined as the admissible range,
the clutch controlling unit is configured to output a clutch command signal for disengaging the second clutch and output a clutch command signal for engaging the first clutch so as to switch the transmission path into the first mode when the speed ratio parameter becomes lower than the third range after the transmission path is switched from the first mode to the second mode and then the speed ratio parameter again reaches the mode switching threshold after the speed ratio parameter becomes lower than the third range,
the clutch controlling unit is configured to output the clutch command signal for engaging the first clutch so as to make the speed ratio parameter reach the mode switching threshold when the speed ratio parameter becomes higher than the second range after the transmission path is switched from the first mode to the second mode, and
the clutch controlling unit is configured to output the clutch command signal for disengaging the second clutch so as to switch the transmission path into the first mode when the speed ratio parameter reaches the mode switching threshold.

8. The work vehicle according to claim 5 or 6, wherein, in case the fourth range is defined as the admissible range,
the clutch controlling unit is configured to output a clutch command signal for disengaging the second clutch and output a clutch command signal for engaging the first clutch so as to switch the transmission path into the first mode when the speed ratio parameter becomes higher than the second range after the transmission path is switched from the first mode to the second mode and then the speed ratio parameter again reaches the mode switching threshold after the speed ratio parameter becomes higher than the second range,
the clutch controlling unit is configured to output the clutch command signal for engaging the first clutch so as to make the speed ratio parameter reach the mode switching threshold when the speed ratio parameter becomes lower than the third range after the transmission path is switched from the first mode to the second mode, and the clutch controlling unit is configured to output the clutch command signal for disengaging the second clutch so as to switch the transmission path into the first mode when the speed ratio parameter reaches the mode switching threshold.

**9.** The work vehicle according to any of claims 5 to 8, wherein
the controller further includes a second timer, the second timer being configured to measure a second time length elapsed after the transmission path is switched from the first mode to the second mode, and
the clutch controlling unit is configured to output the clutch command signal for disengaging the first clutch and output the clutch command signal for engaging the second clutch so as to keep setting the transmission path in the second mode as long as the speed ratio parameter transitions within a predetermined sixth range including the first range when the second time length is shorter than a switching prohibition period after the transmission path is switched from the first mode to the second mode.

**10.** The work vehicle according to claim 9, wherein
in case the fifth range is defined as the admissible range, the sixth range is set as a range of lower than a sixth upper limit that is an upper limit of the sixth range,
in case the fourth range is defined as the admissible range, the sixth range is set as a range of higher than a sixth lower limit that is a lower limit of the sixth range,
the sixth upper limit is higher than the first upper limit, and the sixth lower limit is lower than the first lower limit.

**11.** The work vehicle according to claim 9 or 10, wherein
the switching prohibition period has a predetermined initial value, and
the second timer is configured to make the switching prohibition period expire when the speed ratio parameter deviates from the sixth range.

**12.** The work vehicle according to any of claims 9 to 11, further comprising:

an operating device configured to be operated by an operator, wherein
the controller further includes a trigger operation detecting unit, the trigger operation detecting unit being configured to detect whether or not a predetermined operation is performed by the operator,
the switching prohibition period has a predetermined initial value, and
the second timer is configured to make the switching prohibition period expire when the trigger operation detecting unit detects the predetermined operation.

**13.** The work vehicle according to claim 11 or 12, wherein
in case the fifth range is defined as the admissible range,
the clutch controlling unit is configured to output a clutch command signal for engaging the first clutch so as to make the speed ratio parameter reach the mode switching threshold when the speed ratio parameter becomes higher than the second range at expiration of the switching prohibition period, and
when the speed ratio parameter reaches the mode switching threshold, the clutch controlling unit is configured to output a clutch command signal for disengaging the second clutch so as to switch the transmission path into the first mode, and
in case the fourth range is defined as the admissible range,
the clutch controlling unit is configured to output the clutch command signal for engaging the first clutch so as to make the speed ratio parameter reach the mode switching threshold when the speed ratio parameter becomes lower than the third range at expiration of the switching prohibition period, and
when the speed ratio parameter reaches the mode switching threshold, the clutch controlling unit is configured to output the clutch command signal for disengaging the second clutch so as to switch the transmission path into the first mode.

**14.** The work vehicle according to claim 11 or 12, wherein
the clutch controlling unit is configured to output a clutch command signal for engaging the first clutch so as to make the speed ratio parameter reach the mode switching threshold when the speed ratio parameter deviates from the sixth range in the switching prohibition period, and
when the speed ratio parameter reaches the mode switching threshold, the clutch controlling unit is configured to output a clutch command signal for disengaging the second clutch so as to switch the transmission path into the first mode.

**15.** A method of controlling a work vehicle equipped with a power transmission, wherein
the power transmission includes
an input shaft,
an output shaft,
a gear mechanism having a planetary gear mechanism, the gear mechanism being configured to transmit a rotation of the input shaft to the output shaft,
a motor connected to a rotary element of the planetary gear mechanism,
a first clutch for switching a transmission path for a driving force in the power transmission into a first mode, and
a second clutch for switching the transmission path for the driving force in the power transmission into a second mode, when the transmission path is set in the first mode, the first clutch is configured to be engaged and the second clutch is configured to be disengaged,
when the transmission path is set in the second mode, the second clutch is configured to be engaged and the first clutch is configured to be disengaged,
in the power transmission, a rotational speed of the motor varies, thereby a speed ratio of the output shaft to the input shaft varies,
when a speed ratio parameter corresponding to the speed ratio is a predetermined mode switching threshold, a rotational speed ratio of the motor to the input shaft in the first mode and a rotational speed ratio of the motor to the input shaft in the second mode become equal,
the method comprises:

outputting a clutch command signal for disengaging the first clutch and outputting a clutch command signal for engaging the second clutch so as to keep setting the transmission path in the second mode as long as the speed ratio parameter transitions within a predetermined first range including the mode switching threshold after the speed ratio parameter reaches the mode switching threshold and then the transmission path is switched from the first mode to the second mode even when the speed ratio parameter again reaches the mode switching threshold.

FIG. 1

FIG. 2

FIG. 3

# FIG. 4

TRACTION
FORCE

GS1

GS11

GS2

GS12

GS3

GS13

VEHICLE SPEED

# FIG. 5

MOTOR
ROTATIONAL
SPEED RATIO

Lm1

R1_Lo

R1_Hi

0

Rs_th1

Rs_th2

R2_Lo

R2_Hi

SPEED
RATIO

Lm2

Lo RANGE
(Lo MODE)

Hi RANGE
(Hi MODE)

42

Lo MODE

(a)

INPUT SHAFT

Lp1

Ns1

MODE
SWITCHING
POINT

Nc2

Ns2
Nc1

Nr2

OUTPUT
SHAFT

Lp2

Nr1

MG1

MG2

Zs2/Zr2

1

Zr1/Zs1

Lo →Hi

(b)

INPUT SHAFT

Lp1

Ns1

Ns2
Nc1

MODE
SWITCHING
POINT

Nc2
Nr1

Nr2

OUTPUT
SHAFT

Lp2

MG2

MG1

Hi MODE

(c)

INPUT SHAFT

Lp1

Ns1

Ns2
Nc1

MODE
SWITCHING
POINT

Nc2
Nr1

MG1

Nr2

OUTPUT
SHAFT

Lp2

MG2

# FIG. 6

INPUT ROTATIONAL SPEED

OUTPUT ROTATIONAL SPEED

27

81

SPEED RATIO CALCULATING UNIT

SPEED RATIO

58

CLUTCH CONTROLLING UNIT

CLUTCH COMMAND SIGNAL

# FIG. 7

RATIO OF EACH POWER TO ENGINE OUTPUT POWER

POWER TRANSMITTED BY MECHANICAL ELEMENT

POWER TRANSMITTED BY ELECTRIC ELEMENT

FIG. 8

RATIO OF EACH POWER TO ENGINE OUTPUT POWER

FIG. 9

FIG. 10

FIG. 11

FIG. 12

27a

INPUT
ROTATIONAL
SPEED

OUTPUT
ROTATIONAL
SPEED

RANGE
EXTENDING
COMMAND
SIGNAL OR
RESET
SIGNAL

87

81

SPEED
RATIO
CALCULATING
UNIT

COUNTER

SPEED
RATIO

COUNT-UP SIGNAL
OR RESET SIGNAL

58a

86

CLUTCH
CONTROLLING
UNIT

FIRST TIMER

CLUTCH
COMMAND
SIGNAL

CLUTCH COMMAND
SIGNAL

FIG. 13

FIG. 14

FIG. 15

27b

85

INPUT
ROTATIONAL
SPEED

OUTPUT
ROTATIONAL
SPEED

81

| SPEED RATIO VARIATION DETECTING UNIT | ← SPEED RATIO → | SPEED RATIO CALCULATING UNIT |

VARIATION
DETECTING SIGNAL

CLUTCH
COMMAND
SIGNAL

SPEED RATIO

83

CLUTCH
COMMAND
SIGNAL

58b

| SECOND TIMER | | CLUTCH CONTROLLING UNIT |

EXPIRATION
SIGNAL

CLUTCH COMMAND SIGNAL

FIG. 16

(a)

SPEED RATIO

SWITCHING
PROHIBITION
PERIOD

UL1

Rs_th1+W1

Rs_th1
Rs_th1−W2
Rs_th1−W5

RE4

RE2
RE1
RE3

LL1

RE5
LL4

RE6

t21 t22 t23 t24

TIME

MODE SET AFTER
SWITCHING IN FIRST
EXEMPLARY EMBODIMENT

| Lo | Hi | | Hi |
|----|----|----|----|

Lo

ACTUAL MODE

| Lo | Hi |
|----|----|

(b)

SPEED RATIO

SWITCHING
PROHIBITION
PERIOD

UL4

UL1

Rs_th1+W6
Rs_th1+W3
Rs_th1

Rs_th1−W4

RE4

RE6

RE2
RE1
RE3

LL1

RE5

t21 t22 t23 t24

TIME

MODE SET AFTER
SWITCHING IN FIRST
EXEMPLARY EMBODIMENT

| Hi | Lo | | Lo |
|----|----|----|----|

Hi

ACTUAL MODE

| Hi | Lo |
|----|----|

FIG. 17

54

FIG. 18

FIG. 19

27c

84

ACCELERATOR
OPERATING AMOUNT →

BRAKE OPERATING
AMOUNT →

GEAR STAGE →

FORWARD MOVING
COMMAND /
REARWARD MOVING →
COMMAND

TRIGGER
OPERATION
DETECTING
UNIT

INPUT
ROTATIONAL
SPEED

OUTPUT
ROTATIONAL
SPEED

81

SPEED
RATIO
CALCULATING
UNIT

TRIGGER
OPERATION SIGNAL

83

SECOND
TIMER

CLUTCH
COMMAND
SIGNAL

EXPIRATION
SIGNAL

SPEED RATIO

58b

CLUTCH
CONTROLLING
UNIT

CLUTCH
COMMAND
SIGNAL

FIG. 20

27d

ACCELERATOR
OPERATING
AMOUNT

ENGINE
DEMAND
HORSEPOWER

50

ENGINE
CONTROLLING
UNIT

THROTTLE
VALUE
COMMAND
SIGNAL

INPUT ROTATIONAL
SPEED

OUTPUT ROTATIONAL
SPEED

ACTUAL MODE

81

SPEED
RATIO
CALCULATING
UNIT

SPEED
RATIO

58d

CLUTCH
CONTROLLING
UNIT

CLUTCH
COMMAND
SIGNAL

ACTUAL MODE

55

TARGET TRACTION FORCE
ENGINE DEMAND HORSEPOWER

MOTOR
CONTROLLING
UNIT

MOTOR
COMMAND
SIGNAL

FIG. 21

58

SPEED RATIO

(a)

Rs_th1+W1

Rs_th1
Rs_th1−W2

UL1

LL1

RE4

RE2 } RE1
RE3

RE5

t41 t42 t43

TIME

ACTUAL MODE | Lo | Hi

SPEED RATIO

(b)

Rs_th1+W3
Rs_th1

Rs_th1−W4

UL1

LL1

RE4

RE2 } RE1
RE3

RE5

t41 t42 t43

TIME

ACTUAL MODE | Hi | Lo

FIG. 22

ENGINE OUTPUT TORQUE

FIG. 23

EP 2 975 303 A1

27e

ACCELERATOR OPERATING AMOUNT

ENGINE DEMAND HORSEPOWER

50e

ENGINE CONTROLLING UNIT

THROTTLE VALUE COMMAND SIGNAL

INPUT ROTATIONAL SPEED

OUTPUT ROTATIONAL SPEED

81

SPEED RATIO CALCULATING UNIT

SPEED RATIO

ACTUAL MODE

58d

CLUTCH CONTROLLING UNIT

CLUTCH COMMAND SIGNAL

ACTUAL MODE

55

TARGET TRACTION FORCE

ENGINE DEMAND HORSEPOWER

MOTOR CONTROLLING UNIT

MOTOR COMMAND SIGNAL

FIG. 24

FIG. 25

FIG. 26

EP 2 975 303 A1

# FIG. 27

# FIG. 28

## INTERNATIONAL SEARCH REPORT

| International application No. |
| --- |
| PCT/JP2014/081111 |

**A. CLASSIFICATION OF SUBJECT MATTER**
*F16H61/10*(2006.01)i, *F16H3/66*(2006.01)i, *F16H3/72*(2006.01)i

According to International Patent Classification (IPC) or to both national classification and IPC

**B. FIELDS SEARCHED**

Minimum documentation searched (classification system followed by classification symbols)
F16H61/10, F16H3/66, F16H3/72

Documentation searched other than minimum documentation to the extent that such documents are included in the fields searched
Jitsuyo Shinan Koho        1922-1996   Jitsuyo Shinan Toroku Koho   1996-2015
Kokai Jitsuyo Shinan Koho  1971-2015   Toroku Jitsuyo Shinan Koho   1994-2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 2006-329244 A  (Komatsu Ltd.),<br>07 December 2006 (07.12.2006),<br>paragraphs [0001] to [0017], [0040] to [0055];<br>fig. 1 to 2<br>& US 2009/0105028 A1    & US 2011/0230295 A1<br>& US 2011/0237380 A1    & US 2011/0230296 A1<br>& US 2011/0237379 A1    & US 2012/0108378 A1<br>& EP 1884685 A1         & WO 2006/126368 A1<br>& KR 10-2008-0011672 A  & CN 101184938 A | 1-6,15<br>7-14 |
| Y<br>A | JP 01-178037 A (Shimadzu Corp.),<br>14 July 1989 (14.07.1989),<br>page 2, upper left column, line 1 to lower<br>right column, line 7; fig. 10<br>(Family: none) | 1-6,15<br>7-14 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>16 February 2015 (16.02.15) | Date of mailing of the international search report<br>03 March 2015 (03.03.15) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

65

**INTERNATIONAL SEARCH REPORT**

| International application No. |
|---|
| PCT/JP2014/081111 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2010-247758 A  (Honda Motor Co., Ltd.),<br>04 November 2010 (04.11.2010),<br>paragraphs [0099] to [0102]<br>(Family: none) | 3-6<br>7-14 |
| Y<br>A | JP 2001-082210 A  (Toyota Motor Corp.),<br>27 March 2001 (27.03.2001),<br>paragraphs [0037], [0038], [0042]<br>(Family: none) | 3-6<br>7-14 |

Form PCT/ISA/210 (continuation of second sheet) (July 2009)

**EP 2 975 303 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006329244 A